# EUROPEAN PATENT APPLICATION

(11) **EP 2 902 532 A1**
(43) Date of publication of application: **05.08.2015**
(21) Application number: 13842250.6
(22) Date of filing: 25.09.2013
(51) Int. Cl.: C25B 15/00, C02F 1/46, C02F 1/76, C25B 1/26, C25B 15/02

(54) **ELECTROLYZED WATER PRODUCTION DEVICE, ELECTROLYZED WATER PRODUCTION METHOD, AND ELECTROLYTIC BATH**

(30) Priority: 28.09.2012 JP 2012218855; 28.09.2012 JP 2012218856
(71) Applicant: Morinaga Milk Industry Co., Ltd., Minato-ku Tokyo 108-8384 (JP)
(72) Inventor: MATSUYAMA Koki, Higashiyamato-shi Tokyo 207-0021 (JP); SHIRATO Masayasu, Higashiyamato-shi Tokyo 207-0021 (JP)
(74) Representative: Vossius & Partner Patentanwälte Rechtsanwälte mbB
(86) International application number: PCT/JP2013/075865
(87) International publication number: WO 2014/050865

(57) **Abstract**

This electrolyzed water production device (1A) includes an electrolytic bath (3) that discharges electrolyzed products generated by electrolysis of a raw material solution from an outlet (2); a mixing section (4) that mixes the electrolyzed products with dilution water to generate electrolyzed water; and a mounting section (6) that has a connecting section (19) where a hole section (20) connected to the outlet (2) is formed and that allows the electrolytic bath (3) to be detachably mounted thereto. By moving either the electrolytic bath (3) or the connecting section (6) relative to the other, the communication between the outlet (2) and the hole section (20) is allowed or released. Additionally, the electrolytic bath (3) is mounted on the mounting section (6) in a state where the inside of the electrolytic bath (3) is filled with a predetermined amount of the raw material solution and sealed in advance and an additional raw material solution cannot be injected thereinto.

## Description

### Technical Field

The present invention relates to an electrolyzed water production device, an electrolyzed water production method, and an electrolytic bath that electrolyzes a raw material solution to produce electrolyzed water.

Priority is claimed on Japanese Patent Application No. 2012-218855, filed September 28, 2012, and Japanese Patent Application No. 2012-218856, filed September 28, 2012, the contents of which are incorporated herein by reference.

### Background Art

In the related art, it is known that electrolyzed water, which is obtained by electrolyzing a raw material solution containing chlorine ions using an electrolyzed water production device, has a high disinfection effect even in the case of a low available chlorine concentration, and also has advantageous properties, such as having a high degree of safety for human beings. Such electrolyzed water is widely used for disinfection of food or instruments that process this food in food-related fields or the like. In recent years, since consciousness towards food and sanitary management of persons that deal with the food has been increasing, development of electrolyzed water production devices, which can be easily used and maintained for use in standard homes or for business use in small-to-medium-scale facilities, is expected.

The electrolyzed water production devices are provided for a case where an electrolytic bath is maintained after use, a case where electrolysis capacity is changed, or the like, and are configured so as to be capable of attaching/detaching and replacing the electrolytic bath from a device body. As configurations in which the electrolytic bath is made attachable and detachable, for example, configurations described in the following Patent Documents 1 to 6 are suggested.

An electrolyzed water production device described in Patent Document 1 is configured so as to connect an electrolytic bath to a flexible pipe or connecting terminals in order to connect the electrolytic bath to a storage tank for a raw material solution, a mixer, and a control apparatus. Replacement of the electrolytic bath is performed after undergoing the work of replacing chemicals inside each member with water so that chemicals or gas inside the electrolytic bath or the like, are prevented from leaking and adhering to a worker's body or clothes.

Additionally, in electrolyzed water production devices described in Patent Documents 2 to 4, an electrolytic bath is fitted to a fitting section of a device body, a water supply pipe, an acidic water discharge pipe, an alkali ion water discharge pipe, and the like, which are provided in the electrolytic bath, and are each inserted into and connected to a water supply pipe insertion hole, an acidic water discharge pipe insertion hole, an alkali ion water discharge pipe insertion hole, and the like.

Additionally, in electrolyzed water production devices described in Patent Documents 5 and 6, an electrolytic bath is configured so as to be attachable to and detachable from a fitting section of a device body, similar to the electrolyzed water production devices described in Patent Documents 2 to 4. However, electrolyzed water production devices described in Patent Documents 5 and 6 do not include a structure in which a water supply pipe of an electrolytic bath is fitted to a portion of a device body, and an opening of the water supply pipe is provided outside the device body and is capable of supplying a raw material solution at any time.

Additionally, in recent years, since the consciousness of disinfection or sterilization of things with which human beings come into contact has been increasing, chemicals, spray, or the like, which disinfect or sterilize furniture, such as tables, chairs, or bedding, clothes, or all the things that are used in toilets or other standard homes or stores, are widely used.

As disinfection water, liquids obtained by diluting alcohol with water have widely spread to standard homes or the like. In addition to this, electrolyzed water that has high disinfection effects even in the case of a low chlorine concentration is known. Since this electrolyzed water can be produced by electrolyzed water production devices, has high safety for human beings, and can be used for many applications besides food or food-processing instruments, the electrolyzed water is widely used by traders. Additionally, it is expected that this electrolyzed water will be further utilized even at standard homes or the like.

The electrolyzed water production devices are devices that electrolyze a raw material solution, such as dilute hydrochloric acid, in an electrolytic bath, to generate electrolyzed products, such as chlorine, and dilute the electrolyzed products with dilution water to generate hypochlorous acid water (electrolyzed water). As the types of electrolyzed water production devices, there is a type referred to as a continuous type and a type referred to as a batch type.

The continuous type electrolyzed water production devices are devices using a method of continuously supplying a constant concentration of the raw material solution to a supply port of the electrolytic bath and continuously taking out the electrolyzed products from an outlet. In this type, in order to electrolyze the raw material solution with the constant concentration within the electrolytic bath, automatic control is easy and a electrolyzed water with a uniform concentration is obtained in large quantities (for example, refer to following Patent Document 7).

The batch type electrolyzed water production devices electrolyze all the raw material solution, which has been supplied into the electrolytic bath by a predetermined amount, at the same time. The batch type electrolyzed water production devices are configured so as to calculate the amount of the electrolyzed products obtained when all of the predetermined amount of raw material is electrolyzed, dilute the obtained electrolyzed products with a predetermined amount of the dilution water, and obtain an electrolyzed water of a required concentration. That is, in the case of the batch type, the concentration of the electrolyzed water to be produced is determined by the amount of the electrolyzed products obtained by decomposing all the raw material within the electrolytic bath (for example, refer to following Patent Document 8).

### Citation List

### Patent Literature

[Patent Document 1] Japanese Unexamined Patent Application, First Publication No. 2010-058052
[Patent Document 2] Japanese Unexamined Patent Application, First Publication No. H5-329480
[Patent Document 3] Japanese Unexamined Utility Model Application, First Publication No. S62-90794
[Patent Document 4] Japanese Unexamined Patent Application, First Publication No. S56-152783
[Patent Document 5] Japanese Unexamined Utility Model Application, First Publication No. S56-20692
[Patent Document 6] Japanese Unexamined Patent Application, First Publication No. 2007-283167
[Patent Document 7] Japanese Unexamined Patent Application, First Publication No. 2010-058052
[Patent Document 8] Japanese Unexamined Patent Application, First Publication No. H11-169856

### Summary of Invention

### Technical Problem

However, the electrolyzed water production device described in Patent Document 1 requires the work of replacing the inside of the electrolytic bath with water during the replacement of the electrolytic bath. Although this work does not pose problems to traders who handle the electrolyzed water production device, the work may become complicated for users for use in standard homes or for business use in small-to-medium-scale facilities. Additionally, the connection between the electrolytic bath and various flexible pipes or the connecting terminals may be complicated and difficult.

Additionally, in the electrolyzed water production devices described in Patent Documents 2 to 6, there are many connection points between the electrolytic bath and the device body, and when the electrolytic bath is mounted on the device body, the connection points may not be appropriately fitted and may be damaged if the positional deviation of both of the electrolytic bath and the device body occurs. Additionally, due to this, poor connection may occur or a failure may be caused.

Additionally, since the supply port of the electrolytic bath is always open or a cover member is only disposed at the supply port, it is always necessary for a user to take care so that a leak does not occur from the electrolytic bath during the handling of the electrolytic bath. Accordingly, although such handling does not pose problems to traders who handle the electrolytic bath, the handling of the electrolytic bath is not easy and is complicated for ordinary users.

The invention has been made in view of the aforementioned situations, and an object thereof is to provide an electrolyzed water production device that can easily replace an electrolytic bath for use in standard homes or for business use in small-to-medium-scale facilities to have high convenience.

Additionally, in the continuous type electrolyzed water production device described in Patent Document 7, although this device is suitable for business use, a large-sized storage tank that stores the raw material solution, a pump for supplying the raw material solution from the storage tank to the electrolytic bath, and a control mechanism are required, and consequently, the overall device becomes large-sized. Thus, installation may become difficult in standard homes. Moreover, since the device becomes expensive, adoption may become difficult in standard homes.

Additionally, the performance of the continuous type electrolyzed water production device may become excessive for use in standard homes or the like for using a relatively small amount of electrolyzed water.

Meanwhile, in the batch type electrolyzed water production device described in Patent Document 8, although this device is relatively suitable for small-scale production, the whole amount of raw material solution supplied to the electrolytic bath is continuously electrolyzed at the same time so as to generate the electrolyzed water. Therefore, it is necessary to store an amount of the electrolyzed water that is equal to or more than the amount of the electrolyzed water to be used once at home in the electrolytic bath, even though the device is small-scale. This amount may exceed an amount of the electrolyzed water which a woman or a child could easily carry, and the carrying of the electrolyzed water may become difficult. Meanwhile, if the amount of the raw material solution within the electrolytic bath is made into a small amount in order to make the amount of the electrolyzed products generated in one batch small, it is necessary to newly fill the electrolytic bath with the raw material solution whenever electrolysis is performed. Although this work does not particularly pose problems to traders who handle electrolyzed water production devices for business use, this work may be difficult for ordinary users who are inexperienced in the handling of the raw material solution, such as hydrochloric acid. That is, if the related-art batch type electrolyzed water production devices are enabled to produce the electrolyzed water little by little as an amount suitable for use in homes, filling of the raw material solution or replacement of the electrolytic bath is frequently required, and handling may become complicated. In contrast, since a storage space for the electrolyzed water to be generated is enlarged or it becomes inconvenient to carry the electrolyzed water if the raw material solution for one batch is increased, the related-art batch type electrolyzed water production devices may become difficult to be used for use in standard homes.

Additionally, depending on the specifications of the electrolytic bath for the electrolyzed water production devices, the amount of the electrolyzed water obtained is fixed and it is very difficult to adjust or change the amount of the electrolyzed water or the concentration of the electrolyzed water that is obtained at once.

The invention has been made in view of the aforementioned situations, and an object thereof is to provide an electrolysis layer and an electrolyzed water production device that are user-friendly even in standard homes or the like where the amount of electrolyzed water used once is small and that can be simply used and maintained, and an electrolyzed water production method.

### Solution to Problem

An electrolyzed water production device related to a first aspect of the invention includes an electrolytic bath that electrolyzes a raw material solution to generate electrolyzed products and discharges the electrolyzed products from an outlet; a mixing section that mixes the electrolyzed products obtained in the electrolytic bath with dilution water to generate electrolyzed water; and a mounting section that is provided between the electrolytic bath and the mixing section, has a connecting section where a hole section connected to the outlet is formed, and allows the electrolytic bath to be detachably mounted thereto. The electrolytic bath and the mounting section are configured so that the communication between the outlet and the hole section is allowed or released by moving the electrolytic bath or the connecting section relative to the other. Additionally, the electrolytic bath is configured so as to be mounted on the mounting section in a state where the inside of the electrolytic bath is filled with a predetermined amount of the raw material solution and sealed in advance and an additional raw material solution cannot be injected thereinto.

According to the first aspect of the invention, the electrolytic bath is mounted on the mounting section in a state where the electrolytic bath is sealed and a new raw material solution cannot be injected thereinto from the supply port of the electrolytic bath. Thus, a concern about a leak in the electrolytic bath is reduced, and a user can easily handle the electrolytic bath during the mounting of the electrolytic bath to the mounting section. Additionally, since it is not necessary to take into consideration the connection between the supply port of the electrolytic bath and the mounting section, the structure of the electrolytic bath is simplified, and mounting of the electrolytic bath to the mounting section becomes easy.

In a second aspect of the invention based on the above first aspect, the mounting section includes a guide section that guides the electrolytic bath toward a connecting position where the outlet and the hole section communicate with each other. Additionally, at least any one of the electrolytic bath and the mounting section is provided with a locking part that fixes the electrolytic bath to the mounting section when the outlet and the hole section communicate with each other.

According to the second aspect of the invention, mounting of the electrolytic bath to the mounting section can be easily and appropriately performed. Additionally, the electrolytic bath can be stably fixed to the mounting section.

In a third aspect of the invention based on the above second aspect, the electrolytic bath is a bipolar electrolytic bath in which a plurality of electrode plates are provided inside a chassis of the electrolytic bath, one-side plate surfaces of the plurality of electrode plates are arrayed at predetermined intervals in one direction, and a pair of electrode plates located at both ends in the plurality of electrode plates are respectively provided with terminals that project outward from the chassis. Additionally, the guide section is an insertion section including a terminal connecting section that allows each of the terminals to be inserted therethrough and comes into contact with the terminal to energize the electrolytic bath.

According to the third aspect of the invention, the guide section is formed as the insertion section including the terminal connecting section that allows each of the terminals to be inserted therethrough and comes into contact with the terminal to energize the electrolytic bath. For this reason, through the insertion of the terminal through the guide section, the electrolytic bath can be suitably guided to the connecting position, and the terminal can be connected to the terminal connecting section.

In a fourth aspect of the invention based on any one of the above first to third aspects, the mounting section has a stationary latching section that rotatably latches the electrolytic bath. Additionally, the electrolytic bath has a movable latching section that is latched to the stationary latching section and rotates the electrolytic bath with the stationary latching section as a fulcrum so as to mount the electrolytic bath to the mounting section.

According to the fourth aspect of the invention, the electrolytic bath can be simply mounted on the mounting section.

In a fifth aspect of the invention based on any one of the above first to third aspects, the mounting section includes a flat spring to which the connecting section is fixed. Additionally, the connecting section is configured so that the flat spring is brought close to or separated from the electrolytic bath mounted on the mounting section so as to allow or release the communication between the hole section of the connecting section and the outlet.

According to the fifth aspect of the invention, the flat spring to which the connecting section is fixed is brought close to or separated from the electrolytic bath so that the hole section of the connecting section and the outlet can be easily allowed to communicate with each other.

In a sixth aspect of the invention, an electrolyzed water production device includes an electrolytic bath that electrolyzes a raw material solution to generate electrolyzed products and discharges the electrolyzed products from an outlet; a control section that controls the operation of the electrolytic bath; and a mixing section that mixes the electrolyzed products obtained in the electrolytic bath with dilution water to generate electrolyzed water. The electrolytic bath is configured so as to be connectable to the mixing section, in a state where the inside thereof is filled with a predetermined amount of the raw material solution in advance and an additional raw material solution cannot be injected thereinto. Additionally, the control section is configured so as to supply a current of a constant current value to the electrolytic bath for a predetermined unit time in order to electrolyze a portion of the predetermined amount of raw material solution with which the electrolytic bath is filled in advance, and so as to electrolyze the predetermined amount of raw material solution multiple times.

In a seventh aspect of the invention the electrolyzed water production device in the above sixth aspect further includes a mounting section that has a connecting section in which a hole section allowed to communicate with the outlet is formed and that has the electrolytic bath detachably mounted thereto. Additionally, the electrolyzed water production device according to Claim 6 in which the electrolytic bath and the mounting section are configured so that the communication between the outlet and the hole section is allowed or released by moving the electrolytic bath or the connecting section relative to the other.

In an eighth aspect of the invention based on the above seventh aspect, the mounting section includes a guide section that guides the electrolytic bath toward a connecting position where the outlet and the hole section communicate with each other. Additionally, at least any one of the electrolytic bath and the mounting section is provided with a locking part that fixes the electrolytic bath to the mounting section when the outlet and the hole section communicate with each other.

In a ninth aspect of the invention based on any one of the above sixth to eighth aspects, the control section is allowed to set at least any one of the constant current value and the unit time. Additionally, the control section is capable of setting at least any one of the constant current value and the unit time to set the number of times by which electrolysis is performed on the predetermined amount of electrolyzed water.

In a tenth aspect of the invention based on any one of the above sixth to ninth aspects, the control section is capable of changing the constant current value or the unit time when electrical connection to the electrolytic bath is released.

In an eleventh aspect of the invention based on any one of the above sixth to tenth aspects, the mixing section is formed as a container that stores the dilution water. Additionally, the mixing section is provided with an installation section that detachably installs the container.

In a twelfth aspect of the invention, an electrolytic bath, which electrolyzes a raw material solution inside the electrolytic bath through energization to generate electrolyzed products, includes a chassis that has an outlet through which the electrolyzed products are discharged; a plurality of electrode plates that are provided inside the chassis; spacers that allow the plurality of electrode plates to be arrayed at predetermined intervals with one-side plate surfaces of the plurality of electrode plates being directed to one direction; and a unit cell which is formed between the electrode plates that are adjacent to each other and in which electrolysis is performed on the raw material solution. The chassis is capable of being sealed with liquid-tightness in a state where the chassis is filled with a predetermined amount of the raw material solution. Additionally, the chassis is configured so that the electrolyzed products are discharged from the outlet in a state where the raw material solution cannot be injected thereinto when energization is allowed.

In a thirteenth aspect of the invention based on the above twelfth aspect, a space that stores the raw material solution is formed outside the unit cells.

In a fourteenth aspect of the invention based on the above thirteenth aspect, the space is provided on at least any one of a lateral side and an upper side of the unit cells.

In a fifteenth aspect of the invention based on any one of the above twelfth to fourteenth aspects, the plurality of electrode plates and a plurality of the spacers are alternately arranged.

In a sixteenth aspect of the invention, an electrolyzed water production method includes a production process which includes an electrolysis process of supplying a current of a constant current value to an electrolytic bath for a preset unit time to electrolyze a portion of a predetermined amount of a raw material solution, the electrolytic bath being filled with the predetermined amount of raw material solution, and a mixing process of mixing the electrolyzed products generated in the electrolysis process with dilution water to produce electrolyzed water, the production process which performs the electrolysis process and the mixing process multiple times without adding a raw material solution to the electrolytic bath to repeatedly produce the electrolyzed water; and a replacement process of replacing the electrolytic bath after the electrolysis process is performed multiple times with another electrolytic bath that is filled with a predetermined amount of the raw material solution.

In a seventeenth aspect of the invention, the electrolyzed water production method in the above sixteenth aspect further includes a notification process of notifying replacement timing of the electrolytic bath after the production process.

In an eighteenth aspect of the invention based on the above seventeenth aspect, in the notification process, the replacement timing of the electrolytic bath is notified on the basis of a voltage value or a current value of a current that flows to the electrolytic bath.

In a nineteenth aspect of the invention based on the above seventeenth aspect, in the notification process, the replacement timing of the electrolytic bath is notified on the basis of the number of the electrolysis processes performed or the accumulated time of the unit time.

In a twentieth aspect of the invention based on the above nineteenth aspect, at least one of the constant current value and the unit time in the electrolysis process is set, and the number of electrolysis processes or the accumulated time of unit time up to the replacement timing of the electrolytic bath is set according to the set constant current value or unit time.

In a twenty-first aspect of the invention, the electrolyzed water production method in the above nineteenth or twentieth aspect further includes a seal process of filling the electrolytic bath with a predetermined amount and a predetermined concentration of the raw material solution and sealing the electrolytic bath. Additionally, the number of electrolysis processes or the accumulated time of unit time up to the replacement timing of the electrolytic bath is set according to at least one of the amount and the concentration of the raw material solution with which the electrolytic bath is filled.

In a twenty-second aspect of the invention based on any one of the above sixteenth to twenty-first aspects, the unit time in the electrolysis process is changed according to the number of the plurality of electrode plates provided inside the electrolytic bath.

In a twenty-third aspect of the invention based on any one of the above sixteenth to twenty-second aspects, a unit time in a first electrolysis process after the electrolytic bath is replaced is set so as to be longer than unit times in second or subsequent electrolysis processes.

In a twenty-fourth aspect of the invention, the electrolyzed water production method in any one of the above sixteenth to twenty-third aspects further includes a seal process of filling the electrolytic bath with a predetermined amount of the raw material solution and sealing the electrolytic bath. Additionally, in the replacement process, an electrolytic bath mounted on the electrolyzed water production device is replaced with the electrolytic bath sealed in the seal process.

In a twenty-fifth aspect of the invention based on any one of the sixteenth to twenty-fourth aspects, the raw material solution is dilute hydrochloric acid having a concentration of 0.75 mass% to 21 mass%.

### Advantageous Effects of Invention

According to the invention, the electrolytic bath is mounted on the mounting section in a state where the electrolytic bath is sealed and an additional raw material solution cannot be injected into the inside of the electrolytic bath. For this reason, a concern about a leak from the electrolytic bath is reduced, and a user can easily handle the electrolytic bath during the mounting of the electrolytic bath to the mounting section. Additionally, since the mounting section to which the electrolytic bath is mounted is provided with the connecting section that has the hole section that communicates with the outlet of the electrolytic bath, the structure of the electrolytic bath is simplified, and mounting of the electrolytic bath to the mounting section becomes easy. Additionally, malfunctions of the connection between the various connection sections during the mounting of the electrolytic bath can be prevented from occurring.

Additionally, according to the invention, since the electrolytic bath with which a predetermined amount of the raw material solution is filled in advance is energized for a predetermined unit time so as to perform electrolysis, the electrolyzed products required to produce an electrolyzed water of a required concentration from a portion of the above predetermined amount of raw material solution can be generated little by little. Hence, the electrolyzed water can be produced in a subdivided manner.

Additionally, since a current of a predetermined value is applied to the electrolytic bath multiple times and a plurality of times of electrolysis can be performed on the predetermined amount of raw material solution, it is not necessary to add the raw material solution to the electrolytic bath for every electrolysis or to replace the electrolytic bath. Accordingly, it is possible to suppress the replacement frequency of the electrolytic bath to simply produce the electrolyzed water.

### Brief Description of Drawings

[FIG. 1] FIG. 1 is a schematic configuration diagram of an electrolyzed water production device related to a first embodiment of the invention.
[FIG. 2] FIG. 2 is a perspective view of the electrolyzed water production device related to the first embodiment of the invention.
[FIG. 3] FIG. 3 is an exploded perspective view of an electrolytic bath of the electrolyzed water production device related to the first embodiment of the invention.
[FIG. 4] FIG. 4 is an exploded perspective view of the electrolytic bath of the electrolyzed water production device related to the first embodiment of the invention, and is a perspective view as seen from a side opposite to the side of FIG. 3.
[FIG. 5] FIG. 5 is a longitudinal cross-sectional view of the electrolytic bath of the electrolyzed water production device related to the first embodiment of the invention.
[FIG. 6] FIG. 6 is a perspective view illustrating the inside of the electrolytic bath obtained by breaking a portion of the electrolytic bath in the electrolyzed water production device related to the first embodiment of the invention.
[FIG. 7A] FIG. 7A is a partially broken perspective view of the electrolytic bath and a mounting section of the electrolyzed water production device related to the first embodiment of the invention.
[FIG. 7B] FIG. 7B is a partially enlarged view of FIG. 7A.
[FIG. 8A] FIG. 8A is a partially broken perspective view of the electrolytic bath and the mounting section of the electrolyzed water production device related to the first embodiment of the invention.
[FIG. 8B] FIG. 8B is a partially enlarged view of FIG. 8A.
[FIG. 9] FIG. 9 is a circuit diagram of the electrolyzed water production device related to the first embodiment of the invention.
[FIG. 10] FIG. 10 is a graph illustrating a relationship between time passage and electrolysis voltage and a relationship between the time passage and available chlorine concentration when a raw material solution is electrolyzed in a test example.
[FIG. 11] FIG. 11 is a graph illustrating a relationship between the available chlorine concentration and the electrolysis voltage when the raw material solution is electrolyzed in the test example.
[FIG. 12] FIG. 12 is a graph illustrating a relationship between time passage and electrolysis voltage when a plurality of raw material solutions having different hydrochloric acid concentrations are electrolyzed in a test example.
[FIG. 13] FIG. 13 is a graph illustrating a relationship between time passage and electrolysis voltage when a raw material solution is electrolyzed by a plurality of electrolytic baths having different distances between electrode plates in a test example.
[FIG. 14] FIG. 14 is a perspective view illustrating a modification example of the electrolytic bath and the mounting section of the electrolyzed water production device related to the first embodiment of the invention.
[FIG. 15] FIG. 15 is a perspective view illustrating a modification example of the electrolytic bath and the mounting section of the electrolyzed water production device related to the first embodiment of the invention.
[FIG. 16A] FIG. 16A is a partially broken perspective view illustrating a modification example of the electrolytic bath and the mounting section of the electrolyzed water production device related to the first embodiment of the invention.
[FIG. 16B] FIG. 16B is a partially broken perspective view illustrating the modification example of the electrolytic bath and the mounting section of the electrolyzed water production device related to the first embodiment of the invention, and is a perspective view as seen from a direction different from the direction of FIG. 16A.
[FIG. 17A] FIG. 17A is a partially broken perspective view illustrating a modification example of the electrolytic bath and the mounting section of the electrolyzed water production device related to the first embodiment of the invention.
[FIG. 17B] FIG. 17B is a partially enlarged view of FIG. 17A.
[FIG. 18A] FIG. 18A is a partially broken perspective view illustrating a modification example of the electrolytic bath and the mounting section of the electrolyzed water production device related to the first embodiment of the invention.
[FIG. 18B] FIG. 18B is a partially enlarged view of FIG. 18A.
[FIG. 19A] FIG. 19A is a partially broken perspective view illustrating a modification example of the electrolytic bath and the mounting section of the electrolyzed water production device related to the first embodiment of the invention.
[FIG. 19B] FIG. 19B is a side view illustrating the operating state of the electrolytic bath in FIG. 19A.
[FIG. 20] FIG. 20 is a partially broken perspective view illustrating a modification example of the electrolytic bath and the mounting section of the electrolyzed water production device related to the first embodiment of the invention.
[FIG. 21] FIG. 21 is a side view illustrating the operating state of the modification example of the electrolytic bath and the mounting section of the electrolyzed water production device related to the first embodiment of the invention.
[FIG. 22] FIG. 22 is a partially broken perspective view illustrating a modification example of the electrolytic bath and the mounting section of the electrolyzed water production device related to the first embodiment of the invention.
[FIG. 23] FIG. 23 is a perspective view illustrating the operating state of the modification example of the electrolytic bath and the mounting section in the electrolyzed water production device related to the first embodiment of the invention.
[FIG. 24A] FIG. 24A is a partially broken perspective view illustrating a modification example of the electrolytic bath and the mounting section of the electrolyzed water production device related to the first embodiment of the invention.
[FIG. 24B] FIG. 24B is a partially broken perspective view illustrating the modification example of the electrolytic bath and the mounting section of the electrolyzed water production device related to the first embodiment of the invention.
[FIG. 25] FIG. 25 is a side view when a portion of an electrolyzed water production device related to a second embodiment of the invention is seen in a cross-section.
[FIG. 26] FIG. 26 is a side view when a portion of an electrolyzed water production device related to a third embodiment of the invention is seen in a cross-section.
[FIG. 27] FIG. 27 is a side view when a portion of an electrolyzed water production device related to a fourth embodiment of the invention is seen in a cross-section.
[FIG. 28] FIG. 28 is a perspective view when a portion of an electrolyzed water production device related to a fifth embodiment of the invention is broken.
[FIG. 29] FIG. 29 is a perspective view illustrating an application example of the electrolyzed water production device related to the fifth embodiment of the invention.
[FIG. 30] FIG. 30 is a perspective view when a portion of an electrolyzed water production device related to a sixth embodiment of the invention is broken.
[FIG. 31] FIG. 31 is a perspective view illustrating a modification example in the connection configuration of the electrolytic bath of the electrolyzed water production device related to the first embodiment of the invention.

### Description of Embodiments

### <Electrolyzed water production device>

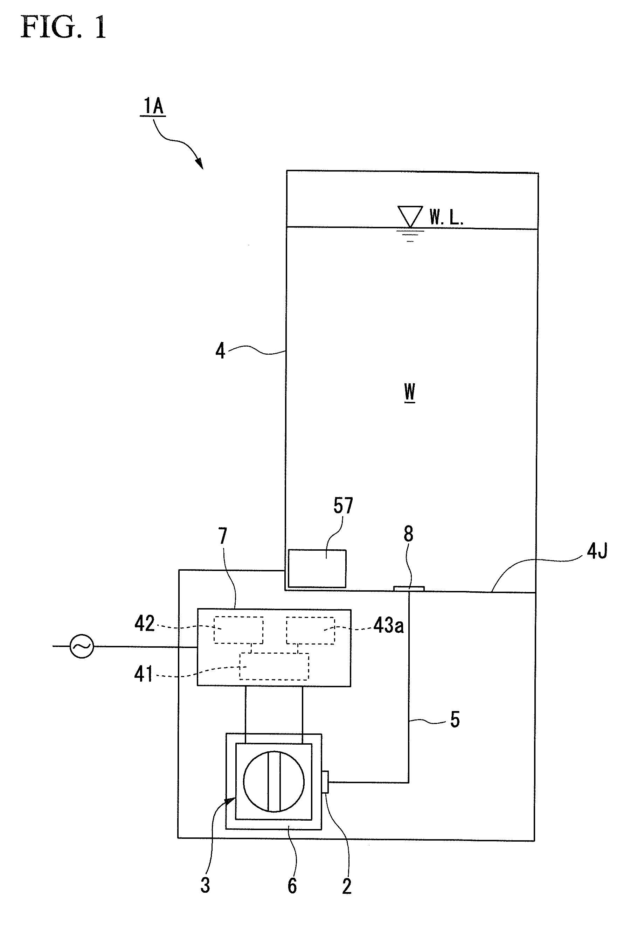

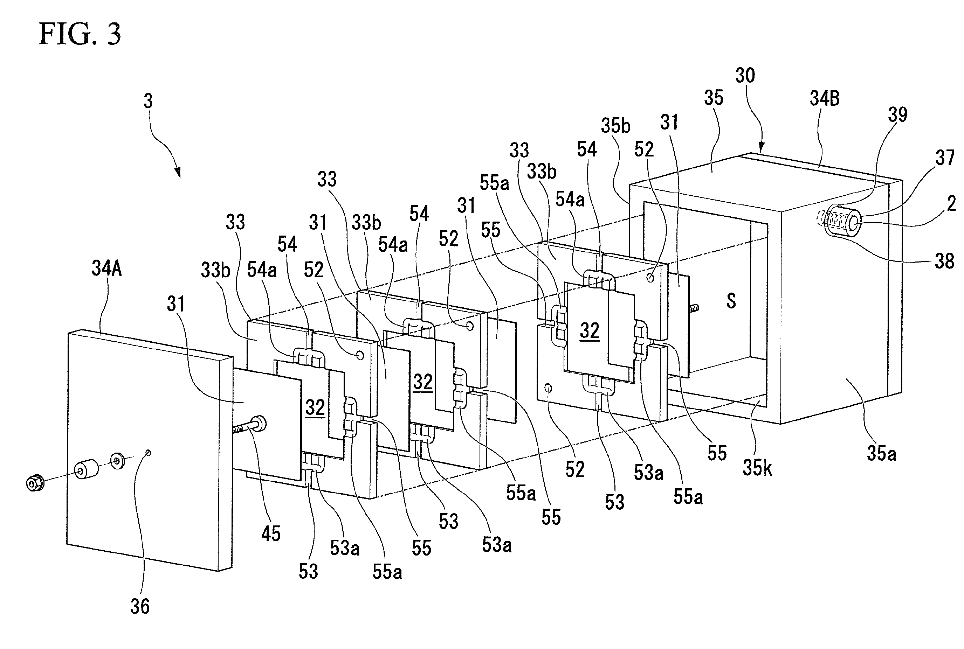

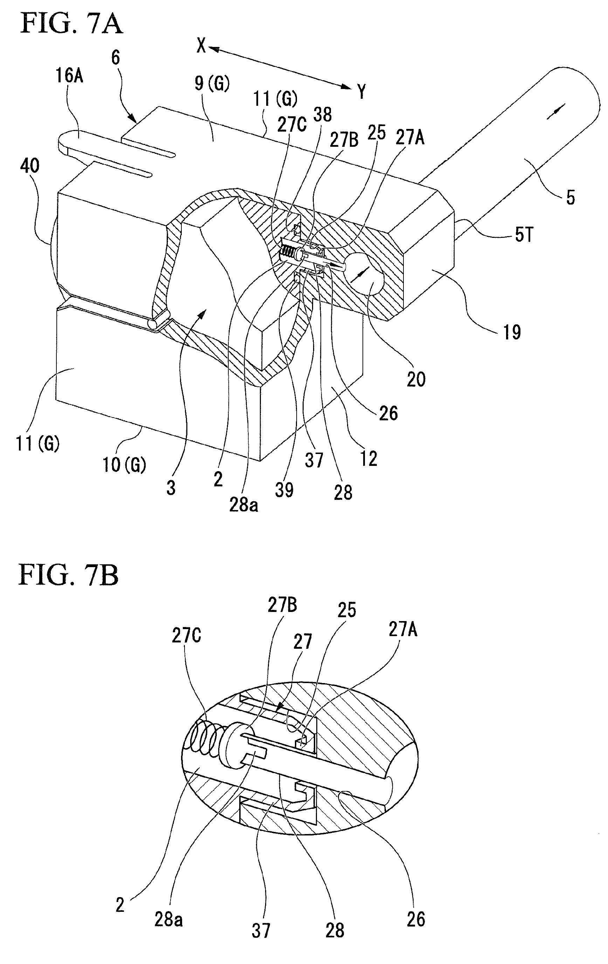

Hereinafter, a first embodiment of an electrolyzed water production device of the invention will be described with reference to FIGs. 1 to 9. In addition, the details of the inside of a chassis of an electrolytic bath are shown only in FIGs.3 to 6 and FIGs.24A and 24B, and the details of the inside are omitted in FIGs. 7A to 8B, FIGs. 16A to 20, and FIG. 22.

The electrolyzed water production device electrolyzes a raw material solution containing chlorine ions, such as a sodium chloride solution or a hydrochloric acid solution, generates chlorine gas (electrolyzed products) by the action of electrolytic oxidation, and dissolves the generated chlorine gas in dilution water, such as water, to produce electrolyzed water in which hypochlorous acid is generated in the water. In respective embodiments to be described below, electrolyzed water production devices, which generate chlorine gas by using dilute hydrochloric acid as a raw material solution, and dissolve the chlorine gas in tap water to generate hypochlorous acid, will be described as an example.

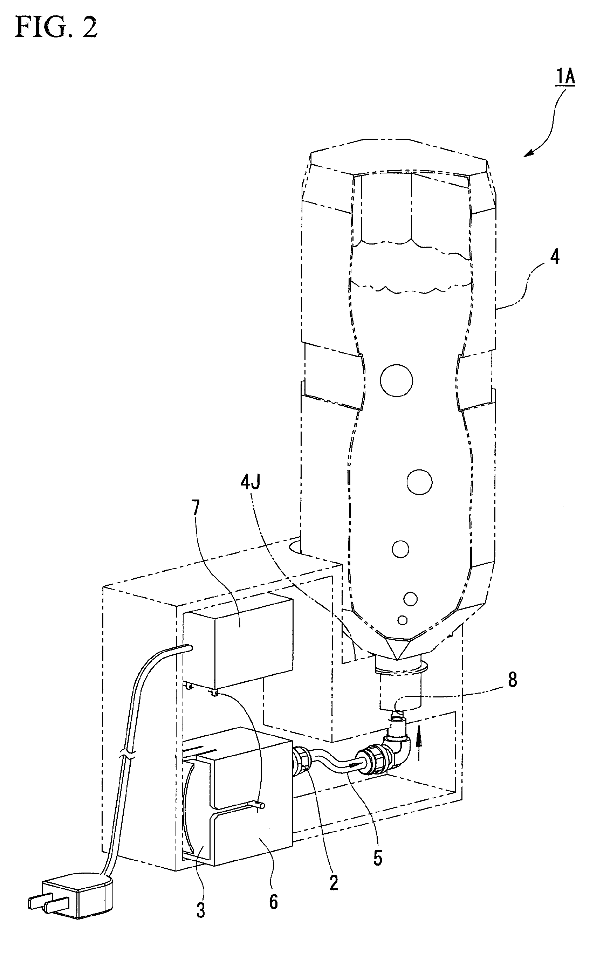

As illustrated in FIGs. 1 and 2, an electrolyzed water production device 1A includes an electrolytic bath 3 that electrolyzes a raw material solution to generate electrolyzed products and that discharges the electrolyzed products from an outlet 2, a tank 4 (mixing section) that mixes the electrolyzed products obtained in the electrolytic bath 3 with dilution water to generate electrolyzed water, a pipe 5 that connects the electrolytic bath 3 and the tank 4, a mounting section 6 that allows the electrolytic bath 3 to be mounted thereto, and a control section 7 that controls the operation of the electrolytic bath 3.

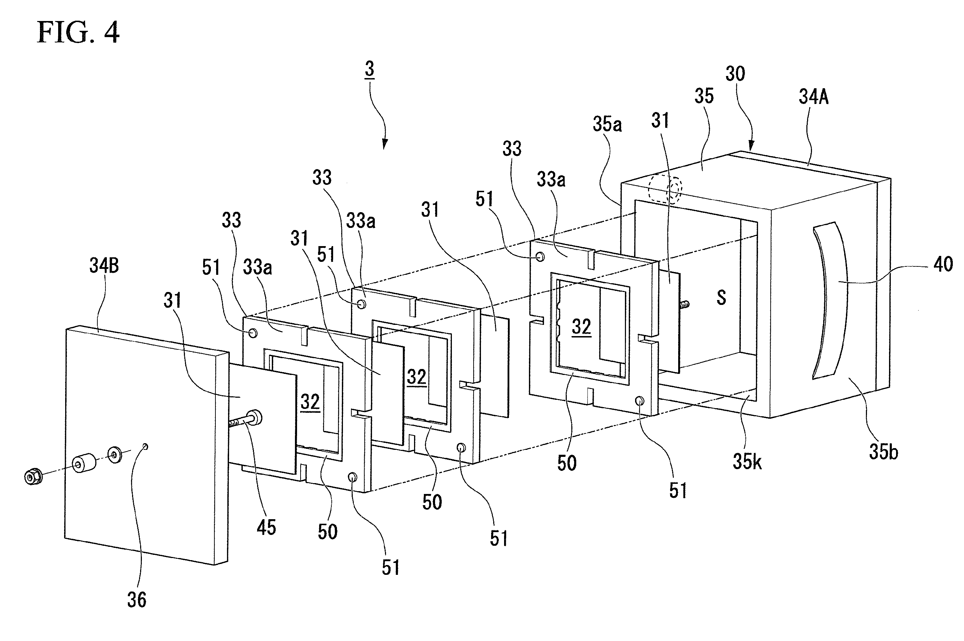

As illustrated in FIGs. 3 and 4, the electrolytic bath 3 is a bipolar electrolytic bath including a substantially rectangular parallelepiped-shaped chassis 30, a plurality of electrode plates 31 that are arranged inside the chassis 30, and a plurality of spacers 33 in which the hollow hole 32 is formed. The electrolytic bath 3 is configured to be able to be sealed with liquid-tightness in a state where the inside of the chassis 30 is filled with the raw material solution (not illustrated; the same applies below) in advance.

The chassis 30 is configured to include side plates 34A and 34B and a body 35, and these side plates and body are formed of plastics, such as polyvinyl chloride, polycarbonate, and polyacrylate.

The side plates 34A and 34B are plates having a predetermined thickness and a rectangular outer shape, and an electrode through hole 36 that penetrates in a thickness direction is formed slightly below the center of each side plate in a height direction (vertical direction) at a central portion of the side plate in a width direction (horizontal direction).

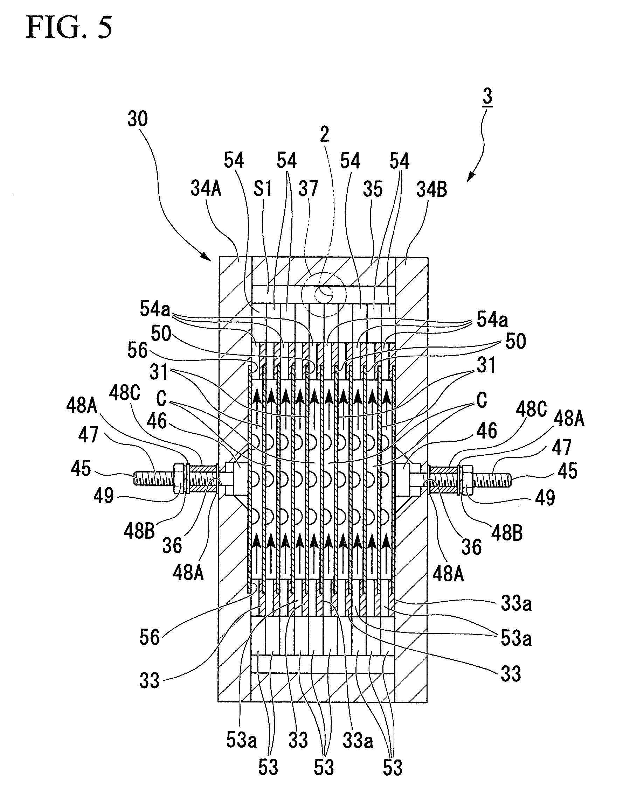

FIG. 5 is a longitudinal cross-sectional view of the electrolytic bath 3 in an assembled state, and illustrates a cross-section in a vertical plane passing through the center of the electrode through hole 36.

The body 35 is a tubular member that has an oblong shape in the cross-sectional view and that is formed such that the height dimension (the length in a vertical direction) thereof is greater than the spacers 33, the side plate 34A is fixed to one end side (one end side in a direction of a central axis of the body) of the body, and the side plate 34B is fixed to the other end side of the body.

As illustrated in FIG. 3, one side 35a (side wall) of the body 35 orthogonal to the side plates 34A and 34B with the electrode through holes 36 and 36 is formed with a substantially cylindrical projecting wall 37. The outlet 2 that communicates with a space S of the body 35 is formed by an internal cavity of the projecting wall 37. A groove 38 is formed in the side 35a so as to surround the projecting wall 37, and an O ring 39 is disposed within the groove 38.

As illustrated in FIGs. 7A and 7B, the outlet 2 (the inside of the projecting wall 37) is provided with a check valve 27. The check valve 27 includes a valve seat 27A consisting of a projection (annular projecting part) that is annularly formed and projects from a tip of the projecting wall 37 toward a base end side thereof, a valve element 27B that comes into contact with the valve seat 27A from the base end side of the projecting wall 37 to seal the outlet 2 with liquid-tightness, and a spring 27C that biases the valve element 27B toward the valve seat 27A.

Additionally, as illustrated in FIG. 4, a side 35b that faces the side 35a is provided with a handle 40.

Each electrode plate 31 is a plate made of metal, such as a titanium alloy, and is formed in a rectangular shape (square shape).

The plurality of electrode plates 31 are arrayed side by side between the side plates 34A and 34B that face each other with a predetermined interval such that one plate surface of each electrode plate is directed to one direction that is a direction (the direction of the central axis of the body 35) in which the side plates 34A and 34B face each other. That is, the plurality of electrode plates 31 are arranged parallel to the side plates 34A and 34B. Metallic electrodes 45 (terminals) are respectively fixed to substantially central portions of a pair of electrode plates 31 that are arranged at both ends in the above facing directions among the plurality of electrode plates 31.

As illustrated in FIG. 5, a head section 46 is formed at one end of each electrode 45, and a male screw 47 is formed on an outer surface of the other end of the electrode. The head section 46 is fixed to the central portion of the electrode plate 31. That is, the electrode 45 is electrically connected to the electrode plate 31.

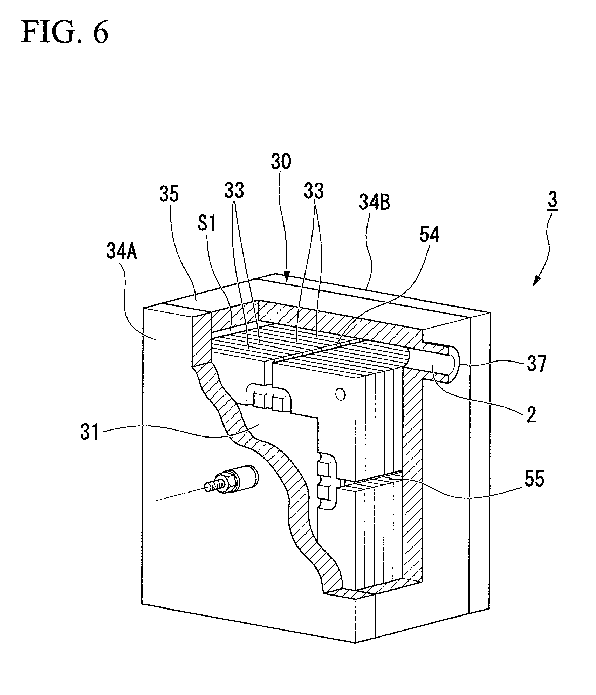

As illustrated in FIG. 3, the spacers 33 are plate-like members formed of plastics, such as polyvinyl chloride or polycarbonate. As illustrated in FIGs.5 and 6, the spacers 33 are formed with a height dimension such that the spacers are housed with a space S1 being left in an upper portion within the chassis 30. The space S1 formed by housing the spacers 33 within the chassis 30 communicates with the outlet 2 of the projecting wall 37, and is configured so as to be able to discharge the electrolyzed products collected in the space S1 from the outlet 2.

As illustrated in FIGs. 3 and 4, a central portion of each spacer 33 is formed with the hollow hole 32 that penetrates in a direction (thickness direction) in which the plate surfaces of the spacers 33 face each other. The hollow hole 32 has a rectangular (square) contour, and is formed so that the dimensions of respective edges thereof become slightly smaller than that of the electrode plate 31.

One plate surface 33a of the spacer 33 is formed with a concavity 50 that is concave in the thickness direction of the spacer. The concavity 50 is concave along the edges of the hollow hole 32 with a constant width dimension, and the electrode plate 31, as illustrated in FIG. 5, is fitted into the concavity 50.

The dimensions of respective outer edges of the concavity 50 are slightly greater than those of respective edges of the electrode plate 31. For this reason, the electrode plate 31 is fitted into the concavity 50 without a large gap, and the electrode plate 31 is prevented from significantly moving in the direction along the plate surface of the spacer 33.

Additionally, the depth of the concavity 50 in the thickness direction is set to substantially the same dimensions as the thickness of the electrode plate 31. For this reason, when the electrode plate 31 is fitted into the concavity 50, a plate surface (a plate surface on a side opposite to the concavity 50 side) of the electrode plate 31 and the plate surface 33a of the spacer 33 become flush with each other.

As illustrated in FIGs. 3 and 4, fitting convex parts 51 and 51 are formed on one plate surface 33a of the spacer 33 in the vicinity of a pair of corners where the spacers 33 face each other. Fitting concave parts 52 and 52 are formed at positions, corresponding to the pair of fitting convex parts 51 and 51, in the other plate surface 33b of the spacer 33. The fitting convex parts 51 and the fitting concave parts 52 are used in order to combine the spacers 33 and 33 that are adjacent to each other. In the spacers 33 and 33 that are adjacent to each other, the spacers 33 are relatively positioned by fitting the fitting convex parts 51 and 51 of the other spacer 33 into the fitting concave parts 52 and 52 of one spacer 33.

In addition, the fitting convex parts 51 of the spacer 33 nearest to the side plate 34B among the plurality of spacers 33 is fitted into fitting concave parts (not illustrated) that are formed in the side plate 34B. Meanwhile, fitting convex parts (not illustrated) that are formed on the side plate 34A are fitted into the fitting concave parts 52 of the spacer 33 nearest to the side plate 34A.

The fitting convex parts 51 are columnar portions that project from the plate surface 33a of the spacer 33, and tip peripheral edges thereof are chamfered. The fitting concave parts 52 are circular holes in a plan view, which are formed in the plate surface 33b so that the fitting convex parts 51 are fitted thereinto without a large gap.

As illustrated in FIG. 3, a lower cut-out 53 is formed below a lower edge of the hollow hole 32, at a position corresponding to a central portion of the lower edge in a left-right direction, in the spacer 33.

The lower cut-out 53 passes through the spacer 33 in a direction (the plate thickness direction of the spacer 33) in which the plate surfaces 33a and 33b face each other. The lower cut-out 53 and the hollow hole 32 are connected together by a lower fluid channel 53a formed in the plate surface 33b, and as will be described below, the raw material solution that flows through the lower cut-out 53 is guided into the hollow hole 32 through the lower fluid channel 53a.

The lower fluid channel 53a is branched into three paths from the lower cut-out 53 toward the hollow hole 32.

Additionally, an upper cut-out 54, which passes through the spacer 33 in the direction (the above plate thickness direction) in which the plate surfaces 33a and 33b of the spacer 33 face each other, is formed above an upper edge of the hollow hole 32, at a position corresponding to a central portion of this upper edge in the left-right direction, in the spacer 33. The upper cut-out 54 and the hollow holes 32 are connected together by an upper fluid channel 54a formed in the plate surface 33b, and as will be described below, the electrolyzed products guided from the hollow hole 32 to the upper fluid channel 54a can enter the upper cut-out 54.

The upper fluid channel 54a also has the same configuration as the lower fluid channel 53a, and is branched into three paths from the upper cut-out 54 toward the hollow hole 32.

Additionally, side cut-outs 55 and 55 are formed on both left and right sides of the hollow hole 32, at positions corresponding to central portions of both side edges of the hollow hole 32 in an up-down direction, in the spacer 33.

The side cut-out 55 also passes through the spacer 33 in the direction (the above plate thickness direction) in which the plate surfaces 33a and 33b of the spacer 33 face each other, similar to the above-described lower cut-out 53 and upper cut-out 54. The side cut-out 55 and the hollow hole 32 are also connected together by a side fluid channel 55a formed in the plate surface 33b.

The side fluid channel 55a also has the same configuration as the lower fluid channel 53a and the upper fluid channel 54a, and is branched into three paths from the side cut-out 55 toward the hollow hole 32.

The electrolytic bath 3 consisting of the above respective constituent elements, as illustrated in FIGs. 5 and 6, is assembled by arranging the electrode plates 31 and the spacers 33 within the chassis 30.

That is, in the electrolytic bath 3, the electrode plates 31 and the spacers 33 are arranged within the body 35 in a state where an electrode plate 31 is fitted into the concavity 50 of a spacer 33 and another spacer 33 is made to abut the spacer so as to cover end edges of the electrode plate 31 disposed in the concavity 50. Additionally, both opening ends of the body 35 are sandwiched between the side plates 34A and 34B to seal the body 35 with liquid-tightness.

The sealing using the side plates 34A and 34B of the body 35 is performed by fastening a nut 49 in the state where the electrode 45 fixed to the electrode plate 31 nearest to the side plate 34A is inserted through the electrode through hole 36 of the side plate 34A, the electrode 45 fixed to the electrode plate 31 nearest to the side plate 34B is inserted through the electrode through hole 36 of the side plate 34B, and a washer 48A, a cylinder spacer 48C, a washer 48A, and a spring washer 48B are fitted to the male screw 47 of each electrode 45 in order. For this reason, the electrode through hole 36 is sealed with liquid-tightness.

In this case, the fitting convex parts 51 of each spacer 33 illustrated in FIG. 4 are fitted into the fitting concave parts 52 of the adjacent spacer 33 illustrated in FIG. 3. The fitting convex parts 51 of the spacer 33 nearest to the side plate 34B illustrated in FIG. 5 are fitted into the fitting concave parts (not illustrated) of the side plate 34B, and the fitting convex parts (not illustrated) of the side plate 34A are fitted into the fitting concave parts 52 of the spacer 33 nearest to the side plate 34A. The plate surfaces of the plurality of spacers 33 are brought into close contact with each other by the fitting between the fitting convex parts 51 and the fitting concave parts 52.

Additionally, as illustrated in FIG. 5, each electrode plate 31 is fitted into the concavity 50 of the spacer 33, and as described above, the plate surfaces of the adjacent spacers 33 and 33 are brought into close contact with each other. For this reason, a peripheral portion of each electrode plate 31 is pinched by the concavity 50 into which the electrode plate 31 is fitted and the adjacent spacer 33, and the electrode plate 31 is immovably held inside the concavity 50.

In addition, the electrode plate 31 nearest to the side plate 34A is fitted into the concavity 56 of the side plate 34A (refer to FIG. 5).

In the above configuration, the hollow hole 32 of each spacer 33 is partitioned by two electrode plates 31 that are adjacent to each other, and a space, which is formed by the electrode plates 31 and 31 being arrayed with a predetermined interval, constitutes a unit cell C that electrolyzes the raw material solution. That is, the unit cell C is formed between the electrode plates 31 and 31 that are adjacent to each other. The raw material solution is held within the unit cell C.

Additionally, both of the lower fluid channel 53a and the upper fluid channel 54a of each spacer 33 are covered with the electrode plate 31 and the adjacent spacer 33. For this reason, the lower fluid channel 53a and the upper fluid channel 54a are constituted as fluid channels that allow the lower cut-out 53 and the unit cell C to communicate with each other and allow the upper cut-out 54 and the unit cell C to communicate with each other, respectively. Since the lower cut-outs 53 and the upper cut-outs 54 of spacers 33 and 33 that are adjacent to each other communicate with each other respectively, the unit cells C that are adjacent to each other communicate with each other via the lower fluid channel 53a and the lower cut-out 53 and via the upper fluid channel 54a and the upper cut-out 54.

Additionally, each side fluid channel 55a of each spacer 33 is covered with the electrode plate 31 and the adjacent spacer 33, and is constituted as a fluid channel that allows the side cut-out 55 and the unit cell C to communicate with each other.

Additionally, since the side cut-outs 55 of the spacers 33 and 33 that are adjacent to each other communicate with each other, the unit cells C of the spacers 33 communicate with each other via the side fluid channels 55a and the side cut-outs 55.

Moreover, since the upper cut-out 54 opens toward the upper space S1 of the body 35 and the space S1 communicates with the outlet 2, the electrolyzed products generated in the unit cell C are collected in the space S1, and are then discharged from the outlet 2 to the outside of the chassis 30.

The electrolytic bath 3 is able to open only in the outlet 2 that communicates with the upper space S1 within the chassis 30, and is always sealed with liquid-tightness at the other points.

Thus, the inside of the chassis 30 of the assembled electrolytic bath 3 is filled with a predetermined amount of the raw material solution in advance by an exclusive jig (not illustrated) that fills electrolytic bath 3 with the raw material solution from the tip of the outlet 2 while venting the air inside the chassis. In this case, the outlet 2 is used as a supply port for the raw material solution. The outlet 2 is sealed with liquid-tightness by the check valve 27 illustrated in FIGs. 7A and 7B before the electrolytic bath 3 is installed in the mounting section 6 after the inside of the chassis 30 is filled with the raw material solution. For this reason, a leak of the raw material solution from the electrolytic bath 3 (chassis 30) can be prevented. Additionally, the electrolytic bath 3 (chassis 30) is adapted such that the check valve 27 can be opened during the mounting of the electrolytic bath 3 to the mounting section 6 and the electrolyzed products can be discharged from the outlet 2 when energization to the chassis 30 is allowed. For this reason, the electrolytic bath 3 can be simply mounted on the mounting section 6.

Accordingly, according to the electrolytic bath 3, the inside of the electrolytic bath 3 is filled with the raw material solution in advance by a trader. Thus, the outlet 2 can be sealed with liquid-tightness and the electrolytic bath 3 can be distributed to standard homes or the like. For this reason, even a user in a standard home or the like who is inexperienced in the handling of the raw material solution can simply handle the electrolytic bath 3.

In this configuration, if the projecting wall 37 is set into a setting section 25 of a connecting section 19 (refer to FIGs. 7A and 7B) when the electrolytic bath 3 is mounted on the mounting section 6, the outlet 2 is used in order to discharge the electrolyzed products to the outside. Additionally, in this state, since a pipe or the like for supplying a new raw material solution to the inside of the chassis cannot be connected to the outlet 2, the outlet 2 cannot be used as the supply port for the raw material solution. Moreover, the other points of the outlet 2 in the chassis 30 are always sealed. Hence, the chassis 30 is configured so that the raw material solution cannot be injected into the chassis during the mounting to the mounting section 6 (when the energization is allowed).

Additionally, instead of the above configuration, there may be provided a configuration in which a supply port for the raw material solution is formed in the chassis 30 separately from the outlet 2 and the supply port is blocked by a cover member or the like after the inside of the chassis 30 is filled with a predetermined amount of the raw material solution. In this case, an opening limiting member, such as a cap with a key, may be provided in the supply port so that a user cannot easily open the supply port.

When the electrolytic bath 3 is mounted on the mounting section 6, at least a portion of the surface of the electrolytic bath 3 is covered with the mounting section 6. For example, when the supply port for the raw material solution is formed at the point of the electrolytic bath 3 that is covered with the mounting section 6, the supply port is not exposed to the outside in a state where the electrolytic bath 3 is mounted on the mounting section 6, that is, a pipe or the like for supplying a new raw material solution cannot be connected to the above supply port. The chassis 30 may be configured using such a configuration so that the raw material solution cannot be injected into the chassis during the mounting to the mounting section 6 (when the energization is allowed).

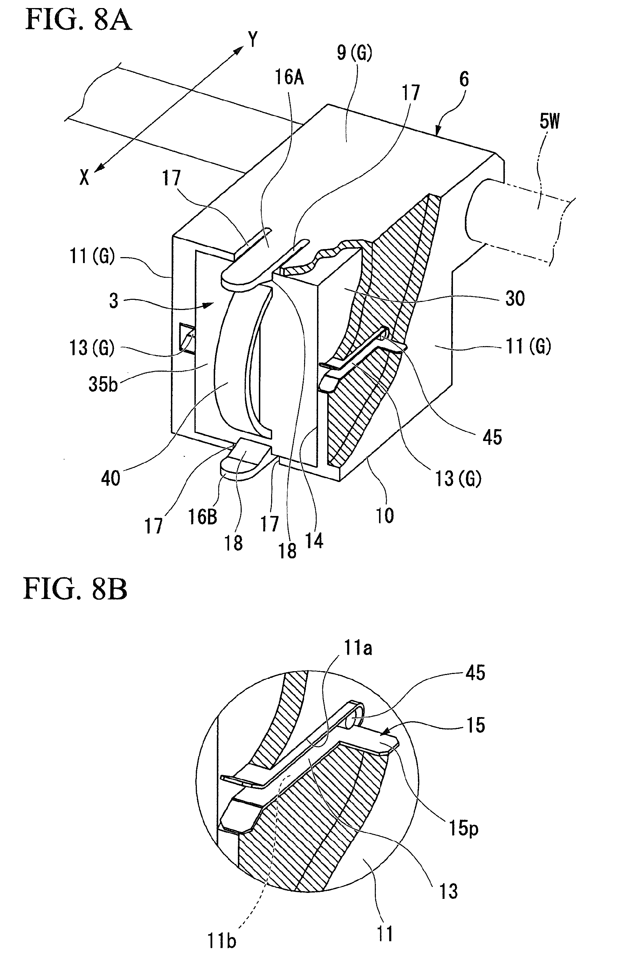

In the present embodiment, as illustrated in FIG. 8A, only the side 35b provided with the handle 40 in the chassis 30 of the electrolytic bath 3 mounted on the mounting section 6 is exposed to the outside, and the other surfaces are covered with the mounting section 6. If the supply port for the raw material solution is provided in any one of the surfaces other than the side 35b, a new raw material solution cannot be injected into the electrolytic bath 3 in a state where the electrolytic bath 3 is mounted on the mounting section 6.

In addition, in a case where the supply port for the raw material solution is provided in the chassis separately from the outlet 2, the outlet 2 may be used as an air vent when the raw material solution is supplied from the supply port, or an air vent made to open only when the raw material solution is supplied may be provided in the chassis separately from the outlet 2.

The concentration of the dilute hydrochloric acid that fills the inside of the electrolytic bath 3 is set within a predetermined range in view of the desired concentration (available chlorine concentration) of the electrolyzed water, the amount of the electrolyzed water, the number of times of electrolysis, a current value, the efficiency of voltage, and the like.

Since each spacer 33 is formed with the lower cut-out 53, the side cut-outs 55, the lower fluid channel 53a, and the side fluid channels 55a, the plurality of unit cells C communicate with each other via the cut-outs and the fluid channels. Hence, even if the amounts of the raw material solution are different from each other between the plurality of unit cells C, the raw material solution flows between the plurality of unit cells C and the water levels (amounts) of the raw material solution become equal if the electrolytic bath 3 is immobilized in a suitable posture as illustrated in FIGs. 5 and 6.

In the present embodiment, when the electrolytic bath 3 is installed in the mounting section 6, the check valve 27 is opened and the outlet 2 opens. If the electrode plates 31 are energized via the electrodes 45 in this state, the chlorine gas (electrolyzed products) is generated by electrolysis in the unit cells C, and the chlorine gas is taken out from the outlet 2.

As illustrated in FIG. 7A, the mounting section 6 is a substantially box-shaped member that attaches and fixes the electrolytic bath 3. The mounting section 6 includes a bottom wall 10 on which the electrolytic bath 3 is placed, a top wall 9 that guides the electrolytic bath 3 in an insertion direction (an X-Y direction in FIGs. 7A and 8A), side walls 11 and 11 that connect the bottom wall 10 and the top wall 9 to each other, and a back-end wall (a wall located on a back-end side, that is, an arrow Y direction side of the mounting section 6) 12 that positions the electrolytic bath 3 in the insertion direction. A front-end side (arrow X direction side) of the mounting section 6 is formed as an opening 14 (refer to FIG. 8A) for insertion of the electrolytic bath 3.

As illustrated in FIG. 8A, insertion sections 13 and 13, which allow the electrodes 45 and 45 of the electrolytic bath 3 to be inserted therethrough, are formed in the insertion direction of the electrolytic bath 3 in the central portions of the side walls 11 and 11 in the height direction.

Each insertion section 13 is a slit that is formed to extend from the opening 14 of the mounting section 6 to a substantially central portion of the side wall 11 in the width direction (X-Y direction). The width of the insertion section 13 in the vertical direction is set to a constant dimension that is slightly greater than the diameter of the electrode 45 from the above central portion up to a position in the vicinity of the opening 14, and is formed in a cut-out manner so as to widen gradually from the above position toward the opening 14.

As illustrated in FIG. 8B, a terminal connecting section 15 made of a conductive metallic plate material is disposed in the insertion section 13. The terminal connecting section 15 is bent in a substantial U-shape along wall surfaces 11 a and 11b that face each other in the up-down direction in the side wall 11 that forms the insertion section 13. The terminal connecting section 15 is bent at the end of the insertion section 13 opposite to the opening 14. The terminal connecting section 15 may be formed of a member (flat spring) having elasticity. When the electrode 45 is inserted through the insertion section 13, the terminal connecting section 15 abuts against the electrode 45 from above and below. Additionally, the bent portion of the terminal connecting section 15 is formed with a projecting piece 15p which projects outward of the side wall 11. The terminal connecting section 15 and the projecting piece 15p are made of the same metallic plate material.

The above-described top wall 9, bottom wall 10, side walls 11, and insertion section 13 constitute a guide section G for moving the electrolytic bath 3 within the mounting section 6 and guiding the electrolytic bath to a position (connecting position) where the projecting wall 37 is fitted into the setting section 25.

Locking parts 16A and 16B are provided at a front end of the top wall 9 and a front end of the bottom wall 10 that faces the top wall so as to project forward. Each of the locking parts 16A and 16B is formed by a pair of slits 17 and 17 that are formed so as to extend from an edge of each of the top wall 9 and the bottom wall 10 toward a central side thereof. The locking parts 16A and 16B are formed so as to be elastically deformable in the up-down direction.

Claw sections 18 are provided on a lower surface of the locking part 16A and an upper surface of the locking part 16B, respectively, in the vicinity of the front end of the top wall 9 and the front end of the bottom wall 10.

The claw sections 18 are used in order to fix the electrolytic bath 3 to a mounting position in the mounting section 6. Each claw section 18 has an inclination surface that gradually slopes rearward (arrow Y direction) toward the center of the mounting section 6 in the up-down direction, and a vertical surface that is connected to a Y-direction end of the inclination surface. When the electrolytic bath 3 is inserted into the mounting section 6, the electrolytic bath 3 is able to be inserted by the locking parts 16A and 16B being widened while the electrolytic bath 3 slides on the above inclination surface. When the insertion of the electrolytic bath 3 is completed, the locking parts 16A and 16B are elastically returned to their normal shapes, the above vertical surfaces are locked to the side 35b of the electrolytic bath 3, detachment of the electrolytic bath 3 from the mounting section 6 is prevented, and the electrolytic bath 3 is fixed. In addition, only one of the locking parts 16A and 16B may be formed on the top wall 9 or the bottom wall 10.

In the present embodiment, the mounting section 6 is provided with the locking parts 16A and 16B for fixing the electrolytic bath 3 to the mounting section 6. However, such locking parts may be provided at the electrolytic bath 3.

As illustrated in FIG. 7A, the connecting section 19 that projects rearward (arrow Y direction) is formed at an upper end of the back-end wall 12 of the mounting section 6. The connecting section 19 has a through hole 20 (hole section) that opens toward a connection location 5T with the pipe 5. In the connection location 5T, the pipe 5 is fitted into the through hole 20 in an airtight state.

The inside of the connecting section 19 is formed with a setting section 25 that is concave in the projecting direction (arrow Y direction) of the connecting section 19 from an inner surface of the back-end wall 12 and sets the projecting wall 37 of the electrolytic bath 3. A connecting pipe 28 that projects in an arrow X direction is provided within the setting section 25. A base end side (Y-direction side) of a through hole 26 (hole section) that is an internal cavity of the connecting pipe 28 communicates with the through hole 20. A tip side (X-direction side) of the through hole 26 of the connecting pipe 28 opens into the setting section 25. Additionally, a peripheral wall that forms a tip opening of the connecting pipe 28 is formed with a cut-out 28a that is cut out so as to extend in the X-Y direction.

Under the above configuration, the mounting section 6 is configured so that, when the electrolytic bath 3 is inserted into the mounting section 6 from the opening 14 (that is, when the electrolytic bath 3 is moved relative to the connecting section 19), the electrolytic bath 3 is guided by the top wall 9, the bottom wall 10, the side walls 11 and 11, and the insertion sections 13 and 13, and the projecting wall 37 is inserted into the setting section 25. Additionally, the mounting section 6 is configured so that, when the projecting wall 37 is inserted into the setting section 25, the connecting pipe 28 is made to abut against the valve element 27B of the check valve 27, the valve element 27B is pushed in toward the base end side (arrow X direction) of the outlet 2 by the connecting pipe 28 to open the check valve 27, the outlet 2 and the through hole 26 of the connecting pipe 28 are allowed to communicate with each other via the cut-out 28a of the connecting pipe 28, and consequently, the outlet 2 and the through holes 20 and 26 are allowed to communicate with each other.

Additionally, when the electrolytic bath 3 is pulled out from the mounting section 6 (that is, when the electrolytic bath 3 is moved relative to the connecting section 19), the top wall 9, the bottom wall 10, the side walls 11 and 11, and the insertion sections 13 and 13 guide the electrolytic bath 3, the projecting wall 37 is pulled out in the arrow X direction from the setting section 25, and the connecting pipe 28 is separated from the valve element 27B. Accordingly, the valve element 27B is brought into contact with the valve seat 27A again so as to close the check valve 27 and release the communication between the outlet 2 and the through holes 20 and 26.

In addition, it is preferable that the electrolytic bath 3 includes a seal member that seals the outlet 2 with liquid-tightness. Such a seal member can prevent the raw material solution within the electrolytic bath 3 from leaking from the outlet 2. The check valve 27 illustrated in the FIG. 7B is an example of such a seal member.

Another example of the seal member includes a membrane-like seal material that covers the outlet 2. If such a seal material is mounted to the outlet 2 so as to cover the outlet 2, the seal material can prevent a leak of the raw material solution from the outlet 2. When the electrolytic bath 3 is mounted on the mounting section 6, the electrolytic bath 3 is inserted into the opening 14 of the mounting section 6, the connecting pipe 28 is made to abut the seal material that covers the outlet 2, and the electrolytic bath 3 is further inserted into the mounting section 6. Accordingly, the connecting pipe 28 is relatively pushed in toward the base end side (arrow X direction) of the outlet 2, and the seal material is broken by the tip of the connecting pipe 28. If the connecting pipe 28 breaks the seal material, the outlet 2 and the through hole 20 communicate with each other via the connecting pipe 28.

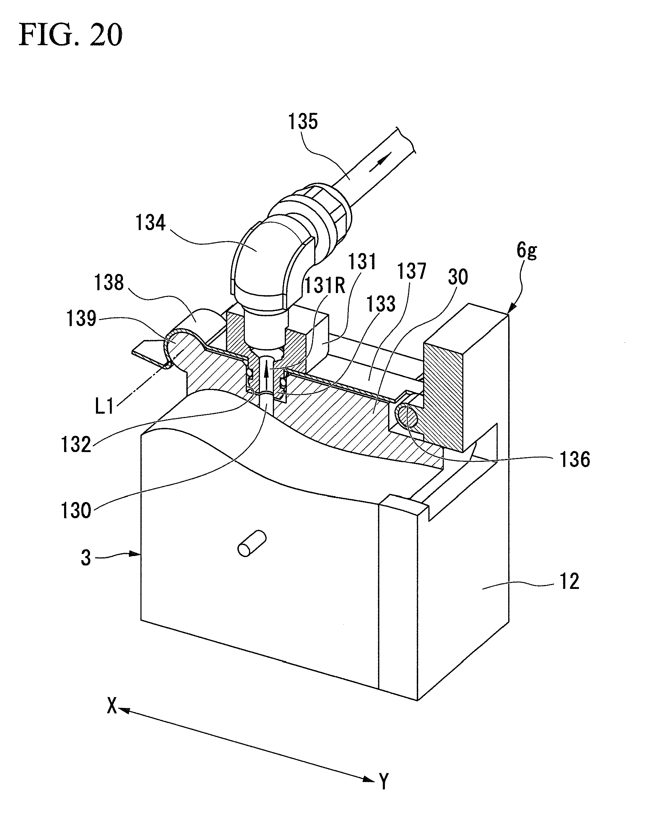

In addition, when the seal material is used as the seal member, it is preferable that the outlet 2 of the electrolytic bath 3 opens upward. That is, although the outlet 2 of the electrolytic bath 3 opens in the horizontal direction in FIG. 6, the outlet 2 may be provided in an upper wall of the chassis 30 of the electrolytic bath 3, and may be configured so as to open toward an upward direction of the electrolytic bath 3. Meanwhile, the mounting section 6 is configured so that the opening 14 faces downward. In this case, the electrolytic bath 3 is moved upward so as to be inserted into and mounted on the opening 14 of the mounting section 6, and is moved downward so as to be detached from the mounting section 6. With such a configuration, when the electrolytic bath 3 is detached from the mounting section 6, the liquid within the electrolytic bath 3 does not easily spill from the outlet 2. In addition, since the outlet opens upward in Modification Examples 7 and 8 (refer to FIGs. 20 to 23) of the first embodiment to be described below, the above seal member can be preferably used.

As illustrated in FIGs. 1 and 2, the tank 4 is a container that stores dilution water W when electrolyzed water is produced and holds electrolyzed water produced by mixing electrolyzed products with the dilution water W, and is detachably installed in an installation section 4J. An inlet 8 that introduces the chlorine gas (electrolyzed products) to the tank 4 through the pipe 5 is provided in a lower portion of the installation section 4J. A pump 57 may be provided within the tank 4, and the dilution water W and the electrolyzed products may be stirred and mixed by the operation of the pump 57.

The tank 4, as illustrated in FIG. 2, is a bottle made of resin, such as PET, and is configured so as to be detached from the installation section 4J and carried after the production of the electrolyzed water.

The pipe 5 has one end detachably connected to the inlet 8 and the other end connected to the mounting section 6. The pipe 5 may be a hard resin pipe or a hard metal pipe, or may be a flexible pipe made of resin or a metal. In addition, it is preferable that the pipe 5 is a hard resin pipe or a flexible pipe made of resin.

The control section 7, as illustrated in FIG. 1, has a constant current apparatus 41 and a timer 42. Although the control section 7 may be configured by configuring the constant current apparatus 41, the timer 42, and the like as separate apparatuses, and combining these apparatuses, these functions may be collectively provided in a sequencer, a computer, or the like, and the control section 7 may be configured from a single apparatus. However, if the control section is configured from parts that are as simple as possible by configuring the constant current apparatus 41 and the timer 42 as separate apparatuses and adding a display device 43a, such as a lamp, if necessary, this may be preferable in respect of maintenance or the like.

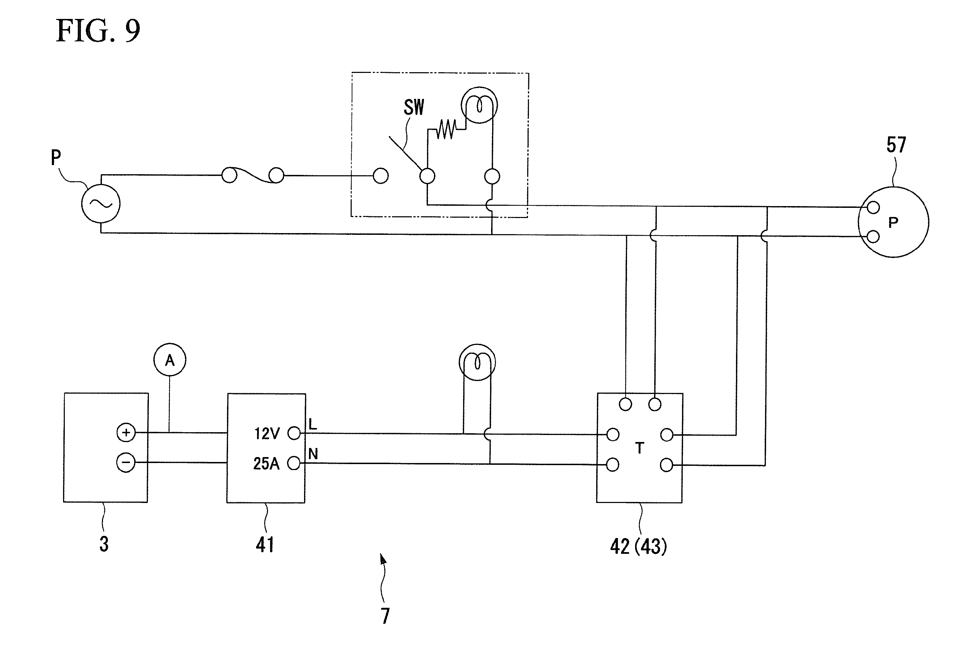

As illustrated in FIG. 9, the electrolytic bath 3 is connected to a power supply P via the control section 7. That is, the timer 42 is connected to the power supply P via a power switch SW, the constant current apparatus 41 is connected to an output side of the timer 42, and the electrolytic bath 3 is connected to an output side of the constant current apparatus 41. Additionally, the pump 57 is connected to the power supply P via the power switch SW.

The timer 42 measures a predetermined unit time (that is, one-time electrolysis time for which energization is continuously performed) after the power switch SW is turned on and supply of electric power is started from the constant current apparatus 41 to the electrolytic bath 3, and automatically stops the energization when this predetermined unit time has passed.

Additionally, the constant current apparatus 41 converts the electric power supplied from the power supply P into a DC current, and supplies a current (a current of a constant current value) controlled so that a current value becomes constant to the electrolytic bath 3.

The current value supplied to the electrolytic bath 3 is measured by an ammeter A that is provided between the electrolytic bath 3 and the constant current apparatus 41. In order to supply the current (also referred to as a constant current) of a constant current value to the electrolytic bath 3, a voltage (also referred to as an electrolysis voltage) applied to the electrolytic bath 3 is controlled while the constant current apparatus 41 refers to the measurement result of the ammeter A so that the current value of the current flowing to the electrolytic bath 3 is maintained at a preset value (also referred to as a constant current value). In the present embodiment, the value measured by the ammeter A is the value of a current that flows to the electrolytic bath 3.

In a case where the timer 42 is also made to function as the counter 43 as illustrated in FIG. 9, the number of times of electrolysis performed for the unit time by the electrolytic bath 3 can be counted by the function of the counter 43 as the number of times by which the timer 42 has operated, and the time when a predetermined number of times is reached can be determined to be the replacement timing of the electrolytic bath 3. The timer 42 (control section 7) is configured so that the time required to completely electrolyze a predetermined amount of the raw material solution with which the electrolytic bath 3 is filled in advance is divided into predetermined unit times, the number of times by which the predetermined amount of the raw material solution is electrolyzed is set to multiple times, and the current of a constant current value is applied to the electrolytic bath 3 at every unit time.

Otherwise, in a case where the ammeter A provided between the electrolytic bath 3 and the constant current apparatus 41 is also made to function as the counter 43, the number of times by which the current flowing for the unit time is supplied to the electrolytic bath 3 can also be counted and the time when the predetermined number of times is reached can be determined to be the replacement timing of the electrolytic bath 3.

The constant current value and the unit time can be appropriately set by calculating a required amount of the electrolyzed products (chlorine gas) generated from hydrochloric acid (reaction material) according to a desired chlorine concentration (available chlorine concentration) of the electrolyzed water and a desired amount of the electrolyzed water and by calculating an electric quantity Q required to generate this required amount. Therefore, the constant current apparatus 41 and the timer 42 can change the current value and the length of the unit time according to the desired amounts of the available chlorine concentration and the electrolyzed water, respectively.

If this is specifically described, for example, in order to turn 3 L (liters) of water into hypochlorous acid water with an available chlorine concentration of 20 ppm, the required electric quantity can be calculated as follows, and the current value and the unit time can be set depending on the result.

That is, if the time for which a current I (unit: amperes) flows is defined as t (unit: seconds), the quantity Q (unit: coulombs) of electricity that moves inside the electrolytic bath 3 in electrolysis is Q = I·t from Faraday's law, and the electric quantity of one mol of electrons is about 96,500 C.

Since the electric quantity becomes 1 C if a current of one ampere is applied to the electrolytic bath 3 filled with the dilute hydrochloric acid for one second, the amount of chlorine obtained with the electric quantity of 1 C becomes 35.5 (1/2 of the molecular weight of the chlorine gas (Cl₂)) x 1/Faraday constant = about 0.368 mg.

Accordingly, in order to turn 3 L (liters) of water into electrolyzed water with an available chlorine concentration of 20 ppm, 20 x 3/0.368 = 163 is satisfied, and the electric quantity of about 163 C is required. Since Q = I·t, the control section 7 calculates the electric quantity Q as above, the current value (I) and the unit time (t) are determined in consideration of the number of the electrode plates 31 and current efficiency, and the number of times by which the electrolytic bath 3 can be energized is determined.

The display device 43a can display the number of times by which energization (electrolysis) is performed at every unit time. Since electrolyzed water having a desired available chlorine concentration may not be obtained immediately after the electrolytic bath 3 is replaced, the dilution water (electrolyzed water) in several times of electrolyses until the desired available chlorine concentration is obtained can also be discarded by confirming the display of the display device 43a.

Additionally, the display device 43a can inform a user of an event that the electrolyzed water having the desired available chlorine concentration when the number of times of energization has reached a calculated number of times has not yet been obtained, and make the user recognize the replacement timing of the electrolytic bath 3.

The amount of the electrolyzed products generated when energization is performed once to electrolyze the raw material solution is correlated with the electric quantity expressed by the product of the current value of the constant current and the unit time. Accordingly, the required amount of the electrolyzed products (chlorine gas) can be calculated according to the concentration (available chlorine concentration) of the electrolyzed water to be obtained and the amount of the electrolyzed water to be obtained, and the current value and the unit time of the constant current can be set on the basis of the electric quantity required to generate the amount of the electrolyzed products.

Therefore, the constant current apparatus 41 and the timer 42 can set the current value and the length of the unit time to desired values, respectively, and can change these values if necessary. That is, the control section 7 is configured so as to be able to set at least one of the current value (constant current value) and the unit time.

If this is specifically described, for example, in order to turn 3 L (liters) of water (dilution water) into hypochlorous acid water (electrolyzed water) with an available chlorine concentration of 20 ppm, the required electric quantity can be calculated as follows, and the current value and the unit time can be set depending on the result.

That is, if the time for which the current I (unit: amperes) flows is defined as t (unit: seconds), the quantity Q (unit: coulombs) of electricity that moves inside the electrolytic bath 3 in electrolysis is Q = I·t from Faraday's law. The electric quantity (electric quantity of 1 mol of electrons (electric charges)) required to electrolyze 1 mol of univalent ions is expressed by a Faraday constant F (unit: coulombs/mol), and is about 96,500 C.

The electric quantity when a current of one ampere is applied to the electrolytic bath 3 filled with the dilute hydrochloric acid for one second becomes 1 C, and the amount of chlorine (Cl) obtained with the electric quantity of 1 C becomes 35.5 (1/2 of the molecular weight of the chlorine gas (Cl₂)) x 1/F = about 0.368 mg.

Accordingly, in order to turn 3 L (liters) of water into electrolyzed water with an available chlorine concentration of 20 ppm, 20 x 3/0.368 = 163 is satisfied, and the electric quantity of about 163 C is required. Since Q = I·t, the control section 7 calculates the required electric quantity Q as above, the current value (I) of the constant current to apply and the unit time (t) can be set in consideration of the number of the electrode plates 31 and the current efficiency. The current efficiency is a ratio obtained by expressing a current to be used for an intended electrode reaction in the current flowing to the electrolytic bath 3 in units of percentage, and is defined as the ratio of the amount of chlorine actually generated on an anode side with respect to the generated amount of chlorine in theory. The current efficiency is a value based on a measured value, and becomes the same value in the electrolytic bath 3 (electrode plate) having the same configuration.

Additionally, since the amount of chlorine to be consumed through the one-time energization can be known from the quantity of electricity flowing to the raw material solution through one-time energization, the maximum number of times by which the electrolytic bath 3 is energized can be determined from the chlorine concentration of the raw material solution within the electrolytic bath 3 before the start of first energization and the amount of the chlorine to be consumed through the one-time energization.

In a related-art batch-type electrolytic bath, it is known that the generated amount of the chlorine gas in constant voltage electrolysis in which electrolysis is performed with an applied voltage being constant decreases with the passage of time. On the other hand, the generated amount of the chlorine gas in constant current electrolysis in which electrolysis is performed by applying a voltage so that the current value flowing to the electrolytic bath 3 becomes constant is not known.

Thus, the present inventors performed the following Test Examples 1 to 3 in order to investigate temporal changes in the generated amount of the chlorine in the constant current electrolysis.

In Test Examples 1 to 3, electrolyzed water was produced by applying a constant current to the electrolytic bath 3 in which a predetermined amount of dilute hydrochloric acid (raw material solution) was enclosed to perform electrolysis, using a direct-current stabilizing power supply (Product name: PAS60-6 made by Kikusui Electronics Corp.) as the power supply, and continuously supplying and mixing the generated chlorine gas into water (dilution water) that flows at a flow rate of 4 liters/m. 100 mL of the electrolyzed water was sampled every 15 seconds for first one minute after energization was started, 100 mL of the electrolyzed water was sampled every minute after the one minute, and the available chlorine concentrations of the sampled electrolyzed water were investigated.

The measurement of the available chlorine concentrations was performed with the following procedure, using an available chlorine meter (Product name: handy water meter AQ-102 made by Sibata Scientific Technology Ltd.). First, 10 mL of a sample of the sampled electrolyzed water was put into a sample cell (container). Next, the sample cell was set in a cell holder for measurement in the above available chlorine meter, and zero point adjustment was performed. Next, the sample cell was taken out, and a coloring reagent (commercial item) was put into the sample cell and mixed. The sample cell was set in the cell holder for measurement, and the concentration was measured.

### <Test Example 1>

As for the electrolytic bath 3 used in the present example, the plate surface dimensions of the electrode plates 31 were 50 mm x 50 mm, and the distance between the adjacent electrode plates 31 and 31 was 3 mm, the number of the cells (unit cells) was 9, and the current efficiency was 50%. The amount of the dilute hydrochloric acid within the electrolytic bath (raw material solution) was 52 ml, the hydrochloric acid concentration of the dilute hydrochloric acid (raw material solution) before the start of energization was 6 mass%, and the constant current value supplied to the electrolytic bath was 1.0 A.

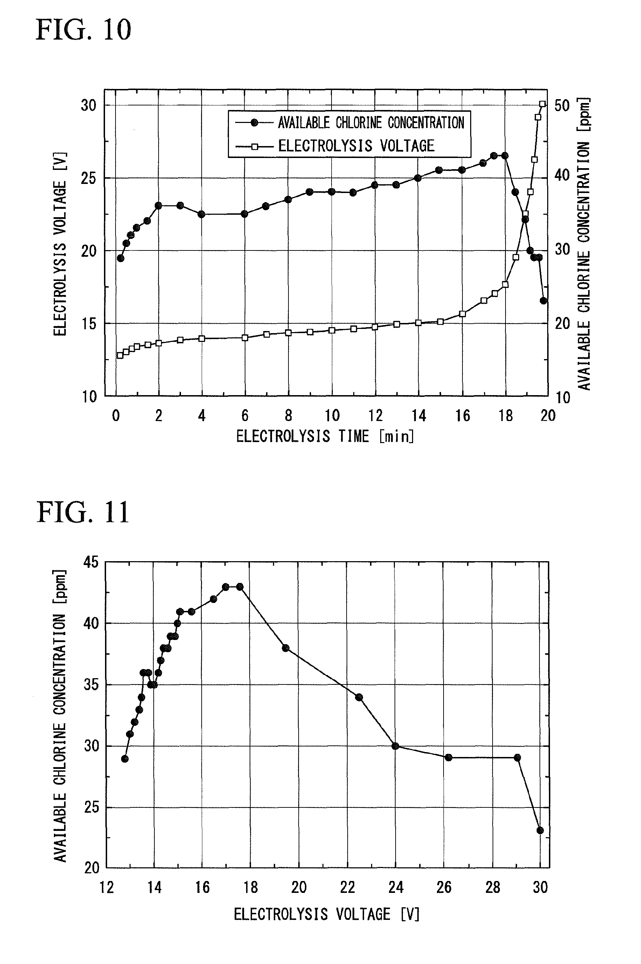

A relationship between time passage (electrolysis time) after energization is started and voltage (electrolysis voltage) when a constant current is supplied to the electrolytic bath and a relationship between the time passage and the available chlorine concentration of produced electrolyzed water are illustrated in FIG. 10.

As illustrated in FIG. 10, since the current easily flows (resistance is low) in a state where the hydrochloric acid concentration of the raw material solution is high immediately after the start of the energization, the electrolysis voltage of the current is as low as 12.5 V, and the available chlorine concentration is as low as 20 ppm or less. Thereafter, the electrolysis voltage rises gradually and the available chlorine concentration rises rapidly in the early stage of the electrolysis (up to 2 minutes after the start of the electrolysis).

Changes in the voltage until chlorine is consumed to such a degree that the hydrochloric acid is present in the raw material solution are little, and the chlorine gas is generated within a certain range. That is, the available chlorine concentration rises gradually from 2 minutes after the start of the electrolysis to 18 minutes after the start. After the available chlorine concentration reaches a peak at the time of 18 minutes after the start of the electrolysis, the available chlorine concentration falls rapidly with a shortage of the hydrochloric acid (reaction constituents).

A relationship between the electrolysis voltage and the available chlorine concentration in this case is illustrated in FIG. 11. As illustrated in FIG. 11, the available chlorine concentration shows a maximum value when the electrolysis voltage is near 17 V to 18 V, and the available chlorine concentration falls with an increase in the electrolysis voltage in a range where the electrolysis voltage is greater than 17 V to 18 V The range of the voltage where 70% or more (30 ppm to 43 ppm) of the maximum value (43 ppm) of the available chlorine concentration is obtained is about 13 V to 24 V (the voltage between the adjacent electrodes: about 1.44 V to about 2.67 V), and the range of the voltage where 80% or more (34 ppm to 43 ppm) of the maximum value of the available chlorine concentration is obtained is about 14 V to 22 V (the voltage between the adjacent electrodes: about 1.56 V to about 2.44 V). Accordingly, if the electrolysis voltage is within a range of 13 V to 24 V, the chlorine gas (electrolyzed products) can be efficiently generated, and if the electrolysis voltage is within a range of 14 V to 22 V, the chlorine gas (electrolyzed products) can be efficiently generated, and temporal changes in the available chlorine concentration can be made smaller.

### <Test Example 2>

The hydrochloric acid concentration of the dilute hydrochloric acid (raw material solution) before the start of energization in Test Example 1 was changed to 0.75 mass%, 1.5 mass%, 3 mass%, 6 mass%, 9 mass%, or 21 mass%, and the constant current value was changed to 1.5 A.

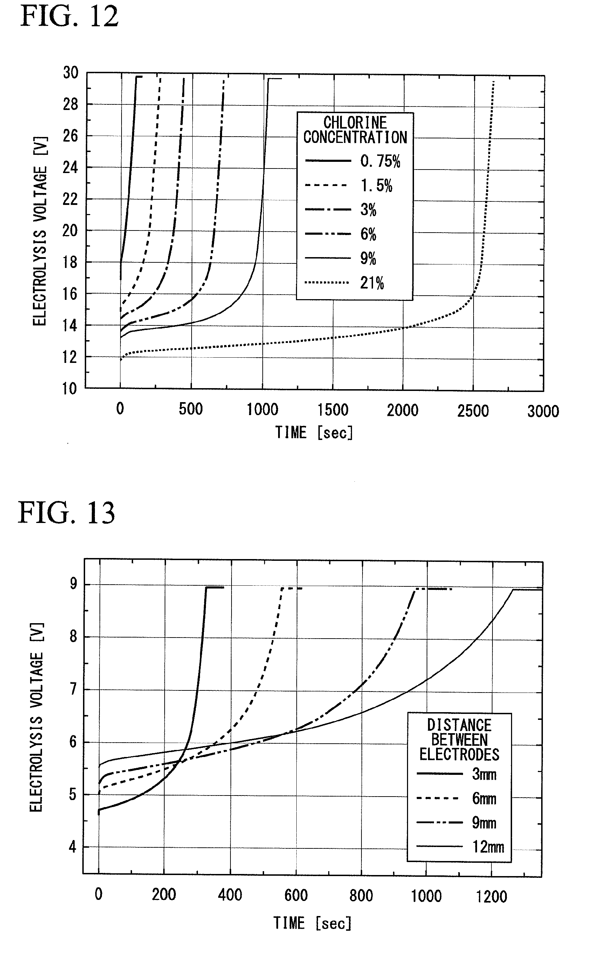

FIG. 12 illustrates test results of Test Example 2, and illustrates a relationship between time passage and electrolysis voltage when a plurality of raw material solutions (dilute hydrochloric acid) having different hydrochloric acid concentrations before the start of energization are electrolyzed.

According to FIG. 12, it can be seen that, even if the hydrochloric acid concentration is any of 0.75 mass% to 21 mass%, the electrolysis voltage (about 13 V to 24 V) that is preferable to efficiently generate the above chlorine gas (electrolyzed products) is obtained. Additionally, from the viewpoint that the time for which the preferable electrolysis voltage (about 13 V to about 24 V, and the voltage between the electrodes is 1.44 V to 2.67 V) is obtained is long, the hydrochloric acid concentration is preferably equal to or higher than 1.5 mass%, and more preferably equal to or higher than 6 mass%. On the other hand, if the hydrochloric acid concentration is too high, the voltage immediately after the energization becomes low whereby the generated amount efficiency of the chlorine gas may become low and the time required until the above preferable electrolysis voltage is reached may become long. Therefore, the hydrochloric acid concentration is preferably equal to or lower than 9 mass%.

### <Test Example 3>

As for the electrolytic bath 3 used in the present example, the plate surface dimensions of the electrode plates 31 were 50 mm x 50 mm, the distance between the adjacent electrode plates 31 and 31 was 3 mm, 6 mm, 9 mm, or 12 mm, and three unit cells C (cells) were provided. The current efficiency was 50%. The amounts of the dilute hydrochloric acid (raw material solutions) within the electrolytic bath 3 were 17 ml, 35 ml, 52 ml, and 70 ml, respectively, the hydrochloric acid concentration of the dilute hydrochloric acid (raw material solutions) before the start of energization was 9 mass%, and the constant current value was 2.5 A. FIG. 13 illustrates test results of Test Example 3, and illustrates a relationship between time passage and electrolysis voltage when a raw material solution is electrolyzed by a plurality of electrolytic baths having different distances between the adjacent electrode plates 31 and 31.

According to FIG. 13, as the distance between the adjacent electrode plates 31 and 31 becomes smaller, the rise rate of the electrolysis voltage over time becomes greater, and the time required until the above preferable electrolysis voltage is reached becomes shorter.

Accordingly, the time required until the electrolysis voltage at which the chlorine gas is efficiently generated is reached can be adjusted by changing the distance between the adjacent electrode plates.

In the electrolyzed water production device 1A having the above configuration, when the electrolytic bath 3 is mounted on the mounting section 6, as illustrated in FIGs. 7A and 8A, a user holds the handle 40 of the electrolytic bath 3 in which the dilute hydrochloric acid is enclosed in advance within the chassis 30, makes the projecting wall 37 face the back-end wall 12 within the mounting section 6, and inserts the electrolytic bath 3 into the opening 14 of the mounting section 6. As illustrated in FIG. 8A, as the upper wall and the lower wall of the chassis 30 of the electrolytic bath 3 are made to respectively abut the claw sections 18 and 18 of the locking parts 16Aand 16B so as to elastically deform and widen the locking parts 16A and 16B upward and downward, it is possible to insert the electrolytic bath 3 into the mounting section 6. The electrolytic bath 3 is inserted straight (in the X-Y direction) toward the back-end wall 12 of the mounting section 6 while being guided by the top wall 9, the bottom wall 10, and both the side walls 11 and 11 of the mounting section 6.

In this case, the electrodes 45 and 45 advance in the arrow Y direction while entering the insertion section 13 and 13 and sliding on the terminal connecting sections 15 and 15.

If the electrolytic bath 3 abuts the back-end wall 12 of the mounting section 6, as illustrated in FIG. 7A, the O ring 39 closely abuts the inner surface of the back-end wall 12, and the projecting wall 37 of the electrolytic bath 3 is set in the setting section 25. As the connecting pipe 28 is inserted into the projecting wall 37, the check valve 27 illustrated in FIG. 7B is opened, the through holes 20 and 26 and the outlet 2 communicate with each other via the cut-out 28a, and the chlorine gas inside the electrolytic bath 3 (electrolyzed products) can be discharged from the electrolytic bath 3. Additionally, as the projecting wall 37 is set in the setting section 25, the outlet 2 cannot be used as the supply port for the raw material solution, and a state where a new raw material solution cannot be injected into the electrolytic bath 3 is brought about. Meanwhile, if the upper wall and the lower wall of the electrolytic bath 3 pass through the installation positions of the claw sections 18 and the overall electrolytic bath 3 is housed within the mounting section 6 when the projecting wall 37 of the electrolytic bath 3 is set in the setting section 25 and through holes 20 and 26 and the outlet 2 communicate with each other in an airtight state, the locking parts 16A and 16B are elastically returned to their normal shapes, and the claw sections 18 are engaged with the front end surface (side 35b) of the electrolytic bath 3 so as to lock the electrolytic bath 3.

### <Electrolyzed water production method>

Next, an electrolyzed water production method using the electrolyzed water production device 1A will be described.

The electrolytic bath 3 first illustrated in FIG. 5 is prepared. Specifically, the electrolytic bath 3 is filled with a predetermined amount of the raw material solution (a predetermined concentration of the dilute hydrochloric acid) and is sealed (seal process).

In order to operate the electrolyzed water production device 1 A, the electrolytic bath 3 is mounted on the mounting section 6 as illustrated in FIG. 8A, the electrodes 45 and 45 of the electrolytic bath 3 are connected to the terminal connecting sections 15 and 15 as illustrated in FIG. 8B, and a state where the electrolytic bath 3 can be energized is brought about (electrolytic bath mounting process).

Additionally, as illustrated in FIG. 1, the tank 4 is filled with a predetermined amount of the dilution water W and is installed in the installation section 4J.

Subsequently, the current (constant current) of the constant current value is applied to the electrolytic bath 3 by a preset unit time so as to perform electrolysis of the raw material solution (dilute hydrochloric acid) (electrolysis process). This unit time (energization time per one time) is the time required when some of the reaction constituents in the predetermined amount of the raw material solution (dilute hydrochloric acid) with which the inside of the electrolytic bath 3 is filled in advance are consumed by electrolysis. Additionally, this electrolysis process is performed multiple times without additionally supplying the raw material solution to the electrolytic bath 3.

In the present embodiment, the energization time per one time (unit time) when the electrolysis process is performed multiple times is made constant, and the number of the performed electrolysis processes is measured. In this case, the timer 42 has the function of the counter 43.

That is, as illustrated in FIGs. 1 and 9, first, the power switch SW is turned on and the constant current begins to be applied to the electrolytic bath 3 after the current value of the constant current apparatus 41 of the control section 7 and the unit time of the timer 42 are set.

Then, the timer 42 (counter 43) operates and first energization is counted.

The timer 42 is energized to start the measurement of the unit time and to supply electric power to the constant current apparatus 41, and the constant current apparatus 41 applies the DC current of the constant current value to the electrolytic bath 3. If the above DC current flows to the plurality of electrode plates 31 via the electrodes 45 and 45 of the electrolytic bath 3, the dilute hydrochloric acid enclosed in advance within the chassis 30 is electrolyzed, and the chlorine gas (electrolyzed products) is generated. The electrolyzed products flow toward the upper side of each unit cell C illustrated in FIG. 5, and fill the inside of the electrolytic bath 3 while pushing out the air within the electrolytic bath 3 to the space S1 and the outlet 2.

The gas within the electrolytic bath 3 is further pushed out toward the upper fluid channels 54a, which are formed between the plurality of spacers 33, and the outlet 2 by the generated chlorine gas (electrolyzed products), and flows to the pipe 5 through the through hole 26 and the through hole 20 that are formed in the connecting section 19 of the mounting section 6.

The electrolyzed products generated within the electrolytic bath 3 are supplied into the tank 4 connected to the electrolytic bath 3 via the pipe 5, and are stirred, mixed, and dissolved in the dilution water W within the tank 4 by the pump 57, and the electrolyzed water is generated (mixing process).

If a predetermined unit time passes after the power supply of the constant current apparatus 41 is turned on and electric power begins to be supplied, the power supply of the constant current apparatus 41 is automatically turned off by the timer 42 (electric power supply is ended). That is, first electrolysis (electrolyzed water production) is completed. After the power supply is turned off, the tank 4 is detached and the electrolyzed water within the tank 4 is used for a desired application.

Subsequently, second electrolyzed water production can be performed by installing the tank 4, which is filled with a new predetermined amount of the dilution water W, in the installation section 4J, and by performing the electrolysis process and the mixing process, similar to the above.

That is, if the tank 4 filled with the predetermined amount of the dilution water W is installed in the installation section 4J and the power supply of the constant current apparatus 41 is turned on again, the pump 57 and the timer 42 (counter 43) operate similar to the above, the DC current of the same current value as that at the previous time is applied to the electrolytic bath 3 by a predetermined unit time, and the electrolyzed products are generated (electrolysis process). The generated electrolyzed products fill the inside of the electrolytic bath 3 together with the electrolyzed products that have filled the inside of the electrolytic bath 3 in the first electrolysis, are pushed out toward the upper fluid channels 54a, which are formed between the plurality of spacers 33, and the outlet 2 by the sequentially generated electrolyzed products, and flow to the pipe 5 through the through hole 26 and through hole 20 that are formed in the connecting section 19 of the mounting section 6 illustrated in FIG 7A.

The electrolyzed products generated within the electrolytic bath 3 are supplied into the tank 4 connected to the electrolytic bath 3 via the pipe 5, and are stirred, mixed, and dissolved in the dilution water W within the tank 4 by the pump 57, and the electrolyzed water is generated (mixing process).

Moreover, the production of the electrolyzed water can be repeatedly performed without replacing the electrolytic bath 3 whenever the electrolyzed water is produced, that is, without additionally supplying the raw material solution whenever the electrolyzed water is produced, by replacing the tank 4 with another tank 4 with which a new predetermined amount of the dilution water W is filled (replacement of the dilution water), to repeat the electrolysis process and the mixing process (production process).

When electrolysis is performed for the first time after the electrolytic bath 3 is mounted on the mounting section 6 in the electrolytic bath mounting process, there is a high possibility that the gas that is present within the space S1 and the outlet 2 within the electrolytic bath 3 is not the electrolyzed products but normal air. Accordingly, in the first unit time (electrolysis), only air may be supplied from the electrolytic bath 3 to the tank 4, and the dilution water W within the tank 4 may not be turned into the electrolyzed water. Otherwise, in the first unit time (electrolysis), air and the electrolyzed products may be supplied from the electrolytic bath 3 to the tank 4, and the electrolyzed water of which the concentration (available chlorine concentration) is lower than a desired value may be produced. Accordingly, in this case, after the unit time in the first electrolysis passes and the electric power supply to the constant current apparatus 41 is ended by the timer 42, the tank 4 may be detached and the dilution water W or low-concentration electrolyzed water may be discarded. Otherwise, an operation may be performed by additionally performing energization for one or more unit times without replacing the dilution water W after the end of the first electrolysis, and by continuously performing this energization multiple times until the electrolyzed products are supplied to the tank 4 immediately after the start of the electrolysis.

How many times of electrolysis are required to obtain a predetermined concentration of the electrolyzed water can be known by performing experimental electrolysis in advance while measuring the concentration (available chlorine concentration) of the electrolyzed water under the same conditions as those during actual production.

According to the electrolyzed water production device 1A, the supply port for the raw material solution and the outlet 2 for the electrolyzed products are unitized, and the dilute hydrochloric acid is enclosed in advance within the chassis 30 from the outlet 2. Accordingly, since the connection between the electrolytic bath 3 and a supply section for the dilute hydrochloric acid becomes unnecessary, the connection points between the electrolytic bath 3 and the mounting section 6 can be minimized during the attachment and detachment of the electrolytic bath 3 so as to simplify the configuration of the electrolytic bath 3 and the mounting section 6. Additionally, by simplifying the configuration of the electrolytic bath 3 and the mounting section 6, an ordinary user at home or the like can easily mount the electrolytic bath 3 onto the mounting section 6.

Additionally, as illustrated in FIGs. 7A and 8A, the top wall 9, the bottom wall 10, the side walls 11 and 11, the insertion sections 13 and 13, and the electrodes 45 and 45 of the mounting section 6 serve as the guide section G when the electrolytic bath 3 is inserted into the mounting section 6. Therefore, since the electrolytic bath 3 is maintained in a suitable posture, the projecting wall 37 of the electrolytic bath 3 can be precisely made to face the setting section 25 of the mounting section 6 so as to be easily inserted thereinto, and the connecting pipe 28 can be suitably inserted into the outlet 2 so as to make the outlet 2 open. Accordingly, damage to the setting section 25 and the connecting pipe 28 formed in the projecting wall 37 of the electrolytic bath 3 and the mounting section 6 can be avoided. Additionally, easy mounting of the electrolytic bath 3 to the mounting section 6 is allowed, and the electrical connection between the electrodes 45 and 45 of the electrolytic bath 3 and the terminal connecting sections 15 and 15 can be performed. That is, required connection between the electrolytic bath 3 and the mounting section 6 can be simultaneously performed by mounting of the electrolytic bath 3 to the mounting section 6.

In addition, although the unit time at each time is constant in the present embodiment, the unit time may not necessarily be constant. For example, a desired concentration of the electrolyzed water may be obtained from the first electrolysis process by making the energization time in the first electrolysis process immediately after a new electrolytic bath 3 is mounted on the mounting section 6 longer than the energization time in second or subsequent electrolysis.

### [Notification of replacement timing of electrolytic bath]

If electrolysis is repeated at every unit time as mentioned above, replacement of the electrolytic bath 3 is required because the reaction constituents in the raw material solution with which the electrolytic bath 3 is filled in advance are gradually consumed. Accordingly, it is preferable to have a process (notification process) that notifies a user of the replacement timing of the electrolytic bath 3 after the process (production process) of repeatedly producing the electrolyzed water.

The replacement timing of the electrolytic bath 3 can be detected, for example, by referring to the accumulated number of performed electrolysis processes or the accumulated time of energization to the electrolytic bath 3. The replacement timing can be preferably detected as follows.

That is, as described above, in the electrolysis reaction, whenever 1 C of electric quantity is applied to the raw material solution, 1/F mol of chlorine (Cl) is consumed, and 1/2F mol of chlorine gas (Cl₂) is generated. Accordingly, the maximum number of electrolysis processes that can be performed without replacing the electrolytic bath 3 can be obtained from the amount of Cl that is present in the raw material solution before the start of the energization, and the quantity of electricity that flows to the raw material solution for the unit time.

The electric quantity that flows to the raw material solution for the unit time is changed as at least one of the current value (constant current value) applied to the electrolytic bath 3 and the energization time is changed, if the configuration (the structure of the electrolytic bath 3 and the amount and the concentration of the raw material solution (dilute hydrochloric acid)) of the electrolytic bath 3 is constant.

If the current value (constant current value) applied in one-time electrolysis process and the energization time (unit time) are set according to the amount and the concentration (available chlorine concentration) of the electrolyzed water that is intended to be obtained through electrolysis for one unit time when the structure of the electrolytic bath 3 and the amount and the concentration of the raw material solution (dilute hydrochloric acid) are determined, the maximum number of electrolysis processes is calculated according to these set values. The threshold N of the number of electrolysis processes up to the replacement timing of the electrolytic bath 3 is set in a range equal to or lower than this maximum number of times. Otherwise, the maximum value of the accumulated energization time equivalent to the maximum number of electrolysis processes is calculated according to the above-described set values of the current value and the energization time. The threshold T of the accumulated energization time of the electrolysis process up to the replacement timing of the electrolytic bath 3 is set in a range equal to or lower than the maximum value of this accumulated energization time.

In the control section 7, the number of electrolysis processes or the accumulated energization time is measured, and when it is detected that the number of electrolysis processes has reached the threshold N or that the accumulated energization time has reached the threshold T, a user is notified of an event that the electrolytic bath 3 has reached the replacement timing, for example, by turning on a lamp for display (notification process).

The electrolyzed water production device 1A may have a configuration in which the configuration of the electrolytic bath 3 and the current value (constant current value) and the energization time (unit time) in the electrolysis process are determined in advance and cannot be changed, or may be configured so that these can be changed.

If the above current value or unit time is changed in a case where a configuration in which at least one of the current value (constant current value) and the unit time in the electrolysis process can be changed and set is provided, the threshold N of the number of electrolysis processes or the threshold T of the accumulated energization time up to the replacement timing of the electrolytic bath 3 is newly set according to the set value after the change.

The total production amount (maximum number of electrolysis processes) of the chlorine gas (electrolyzed products) obtained from a predetermined amount of the raw material solution with which the electrolytic bath 3 is filled is determined depending on the capacity of the electrolytic bath 3 and the concentration of the dilute hydrochloric acid (raw material solution).

Accordingly, when the configuration of the electrolytic bath 3 is changed and at least one of the amount of the raw material solution and the concentration is changed, the threshold N of the number of electrolysis processes or the threshold T of the accumulated energization time up to the replacement timing of the electrolytic bath 3 is newly set according to the value after the change.

Additionally, the electrolysis efficiency varies with the number of the electrode plates within the electrolytic bath 3. Accordingly, if the available chlorine concentration of the electrolyzed water intended to be obtained is constant, the electrolysis time (unit time) for obtaining the above available chlorine concentration can be changed by changing the number of the electrode plates within the electrolytic bath 3.

Otherwise, the replacement timing of the electrolytic bath 3 can also be detected by measuring a voltage value or a current value when the constant current is applied to the electrolytic bath 3.

That is, if the amount of the reaction constituents that are present in the raw material solution is reduced by repeating electrolysis for the unit time, the current does not easily flow, and the voltage value that is required to supply the constant current to the electrolytic bath 3 rises. Accordingly, when it is detected that the voltage value to be applied in order to supply the constant current to the electrolytic bath 3 becomes higher than a preset threshold, or when it is detected that the current value becomes lower than the preset threshold, the lamp for a display is turned on and a user is notified of an event that the electrolytic bath 3 has reached the replacement timing. The threshold of the above voltage value is preferably equal to or higher than 2.7 V and more preferably, equal to or higher than 2.4 V, at the voltage between the adjacent electrodes, for example, if the results of the above Test Example 1 are referred to.

In addition, as member and methods for notifying the replacement timing of the electrolytic bath, member and methods for measuring or detecting the available chlorine concentration, pH, or the like of the electrolyzed water to be generated can also be adopted in addition to the above-described member and methods.

As for the replacement of the electrolytic bath 3, the locking parts 16A and 16B of the mounting section 6 are widened so as to release the locking of the electrolytic bath 3, the handle 40 of the electrolytic bath 3 is gripped so as to pull out the electrolytic bath 3 from the mounting section 6, and replacement with another electrolytic bath 3 filled with the raw material solution (dilute hydrochloric acid) is performed (replacement process). By mounting the other electrolytic bath 3 to the mounting section 6 so as to be connected with the tank 4 via the pipe 5, it is possible to produce the electrolyzed water again.

According to the present embodiment, by performing applying the constant current to the electrolytic bath 3 for a predetermined unit time multiple times rather than continuously electrolyzing a whole amount of the raw material solution within the electrolytic bath 3 at the same time to produce the electrolyzed water, production of a predetermined amount of the electrolyzed water can be repeatedly performed without additionally supplying the raw material solution to the electrolytic bath. Accordingly, a desired amount of the electrolyzed water can be repeatedly produced without replacing the electrolytic bath 3 in every electrolysis, even in standard homes where the amount of the electrolyzed water used is small and it is not necessary to produce a large amount of the electrolyzed water at the same time.

Additionally, the electrolytic bath 3 in the state of being filled with the raw material solution in advance is attachable to and detachable from the mounting section 6, and can be replaced with the electrolytic bath 3 filled with a new raw material solution after being electrolyzed by a predetermined number of times.

Additionally, since the tank 4 is made attachable and detachable, the tank 4 can be detached from the installation section 4J and freely carried to a desired place and the electrolyzed water can be used, after the production of the electrolyzed water. Additionally, a tank having a desired shape and a desired capacity can be installed in or connected to the installation section 4J so that the produced electrolyzed water can be directly stored in this tank.

Additionally, by selecting the electrolytic baths 3 in which the concentrations or the amounts of the enclosed dilute hydrochloric acid are different, and mounting the selected electrolytic bath to the mounting section 6, the concentration of the electrolyzed water, the number of times of production of the electrolyzed water, or the like that can be produced in the electrolytic bath 3 can be easily changed. Accordingly, use of the electrolyzed water production device at home or the like becomes markedly convenient.

Additionally, according to the electrolyzed water production device 1A of the present embodiment, a configuration in which the electrolytic bath 3 is detachably installed is provided. However, the dilute hydrochloric acid is enclosed in advance in the electrolytic bath 3, and the connection between the electrolytic bath 3 and the supply section for the dilute hydrochloric acid becomes unnecessary. Therefore, the connection points between the electrolytic bath 3 and the mounting section 6 can be minimized during the attachment and detachment of the electrolytic bath 3.

Additionally, the outlet 2 is provided with the check valve 27 serving as the seal member, and only when the electrolytic bath 3 is mounted on the mounting section 6, the outlet 2 opens. Accordingly, a user can easily handle the electrolytic bath 3 irrespective of the direction in which the outlet 2 opens, without being concerned about a leak of the raw material solution from the electrolytic bath 3.

Additionally, since the top wall 9, the bottom wall 10, the side walls 11 and 11, and the insertion sections 13 and 13 of the mounting section 6 serve as the guide section G when the electrolytic bath 3 is inserted into the mounting section 6, the electrolytic bath 3 can be maintained in a suitable posture, and the projecting wall 37 of the electrolytic bath 3 can be easily and precisely made to face the setting section 25 of the mounting section 6 and can be inserted thereinto. Accordingly, damage to the projecting wall 37 of the electrolytic bath 3 or the setting section 25 formed in the mounting section 6 can be avoided.

Additionally, since the tank 4 illustrated in FIG. 1 is made attachable and detachable, the tank 4 can be detached from the installation section 4J and freely carried and the electrolyzed water can be used, after the production of the electrolyzed water. Additionally, a tank having a desired shape and a desired capacity can be installed in or connected to the installation section 4J so that the produced electrolyzed water can be directly stored in this tank.

Additionally, according to the electrolyzed water production device 1A, by selecting the electrolytic baths 3 in which the concentrations or the amounts of the enclosed dilute hydrochloric acid are different, and mounting the selected electrolytic bath to the mounting section 6, the concentration of the electrolyzed water, the number of times of production of the electrolyzed water, or the like that can be produced in the electrolytic bath 3 can be easily changed. Accordingly, use of the electrolyzed water production device at home or the like becomes markedly convenient.

Additionally, since the energization time of the constant current apparatus 41 can be automatically controlled by the timer 42, it is easy to make the concentration of the produced electrolyzed water constant, and the number of times by which electrolysis can be performed in one electrolytic bath 3 can be set as calculated.

Additionally, the number of times by which electrolysis is performed in one electrolytic bath 3 at every unit time can be counted by the counter 43, and a user can know this number of times. For this reason, the user can recognize that the dilution water within the tank 4 after the first electrolysis in the electrolytic bath 3 is not the electrolyzed water having a desired chlorine concentration. Additionally, the electrolytic bath 3 can be replaced at a suitable timing before the reaction material (hydrochloric acid) is exhausted within the electrolytic bath 3.

Additionally, as illustrated in FIGs. 7A and 7B and FIG. 8A, when the side 35a of the electrolytic bath 3 abuts the inner surface of the back-end wall 12 of the mounting section 6, the projecting wall 37 of the electrolytic bath 3 is reliably set in the setting section 25. Moreover, at this time, the upper and lower locking parts 16A and 16B provided at the front end of the mounting section 6 are locked to the electrolytic bath 3. Accordingly, the mounting section 6 can reliably fix the mounted electrolytic bath 3. Additionally, since the locking parts 16A and 16B can be elastically deformable upward and downward, the locking parts are elastically deformed and widened during the insertion of the electrolytic bath 3 and are elastically returned to their normal shapes and locked to the electrolytic bath 3 at the completion of the mounting. For this reason, a user easily checks that the electrolytic bath 3 has been reliably mounted on the mounting section 6.

Additionally, since the terminal connecting section 15 is disposed at the insertion section 13, in the mounting of the electrolytic bath 3 to the mounting section 6, the electrodes 45 and 45 are inserted through the insertion sections 13 and 13, and the electrode 45 and the terminal connecting section 15 are connected together. Accordingly, in the attachment and detachment of the electrolytic bath 3, the connection work of the electrode 45 and the terminal connecting section 15 can be omitted.

According to the electrolyzed water production device 1A, the connection required for electrolysis, that is, the connection between the electrolytic bath 3 and the pipe 5 connected to the tank 4 and the electric connection between the electrode 45 and the terminal connecting section 15 can be simultaneously performed simply by inserting the electrolytic bath 3 into the mounting section 6 until the electrolytic bath 3 is locked to the locking parts 16Aand 16B.

### <Modification examples>

Next, Modification Examples 1 to 9 of the above first embodiment will be described. In the description of these modification examples, the only parts that are different from those of the electrolyzed water production device 1A of the aforementioned first embodiment will be described, the same components will be designated by the same reference numerals, and the description thereof will be omitted.

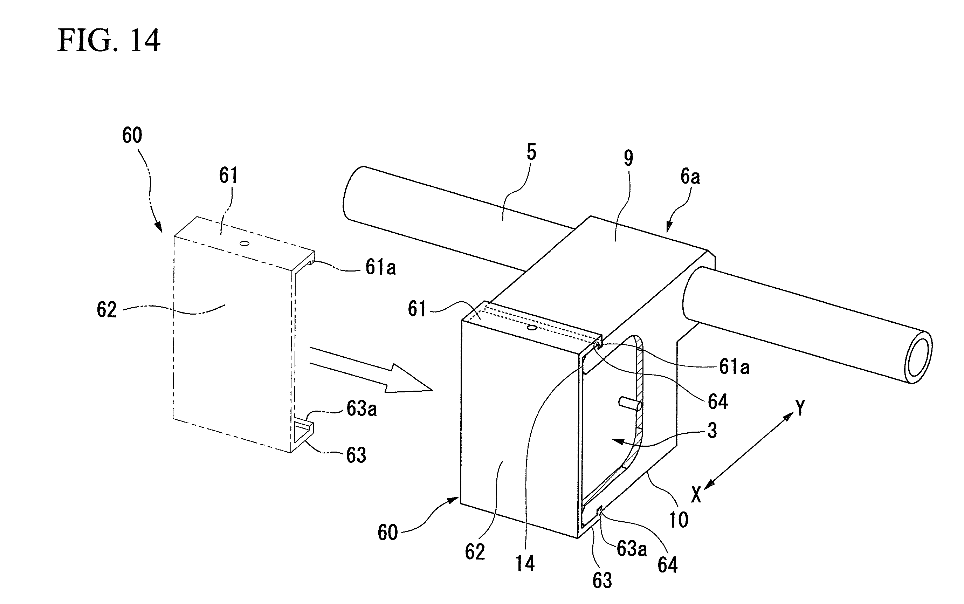

As illustrated in FIG. 14, Modification Example 1 is different from the electrolyzed water production device 1A of the first embodiment in terms of a method of locking and fixing the electrolytic bath 3 when the insertion of the electrolytic bath 3 into a mounting section 6a is completed and is arranged at a predetermined installation position.

As a locking part of the present Modification Example 1, a slide cover 60 which is arranged to straddle the top wall 9 and the bottom wall 10 of the mounting section 6a is used instead of the locking parts 16A and 16B illustrated in FIG. 8A. The slide cover 60 holds and fixes the electrolytic bath 3 within the mounting section 6a. Additionally, an electrolytic bath that does not have the handle 40 illustrated in FIG. 4 is used as the electrolytic bath 3.

The slide cover 60 includes an upper wall 61 that abuts an upper surface of the top wall 9, a side wall 62 that is perpendicularly connected to the upper wall 61, and extends up to the bottom wall 10, and a lower wall 63 that is perpendicularly connected to the side wall 62 and faces the upper wall 61. Tip portions of the upper wall 61 and the lower wall 63 respectively include engaging claws 61a and 63a that extend in directions in which the engaging claws approach each other.

Meanwhile, grooves 64 and 64 are respectively formed in the upper surface of the top wall 9 and a lower surface of the bottom wall 10 in the mounting section 6a. The side wall 62 is made to abut the front ends of the top wall 9 and the bottom wall 10 by making the slide cover 60 slide in the horizontal direction orthogonal to a forward-backward X-Y direction of the mounting section 6a, in a state where the engaging claws 61a and 63 a are inserted through the grooves 64 and 64.

Under the above configuration, in the present Modification Example 1, the electrolytic bath 3 can be easily and reliably fixed to the mounting section 6a by mounting the slide cover 60 to the opening 14 of the mounting section 6a after the electrolytic bath 3 is inserted into the mounting section 6a.

Next, Modification Example 2 of the electrolyzed water production device 1A of the first embodiment will be described.

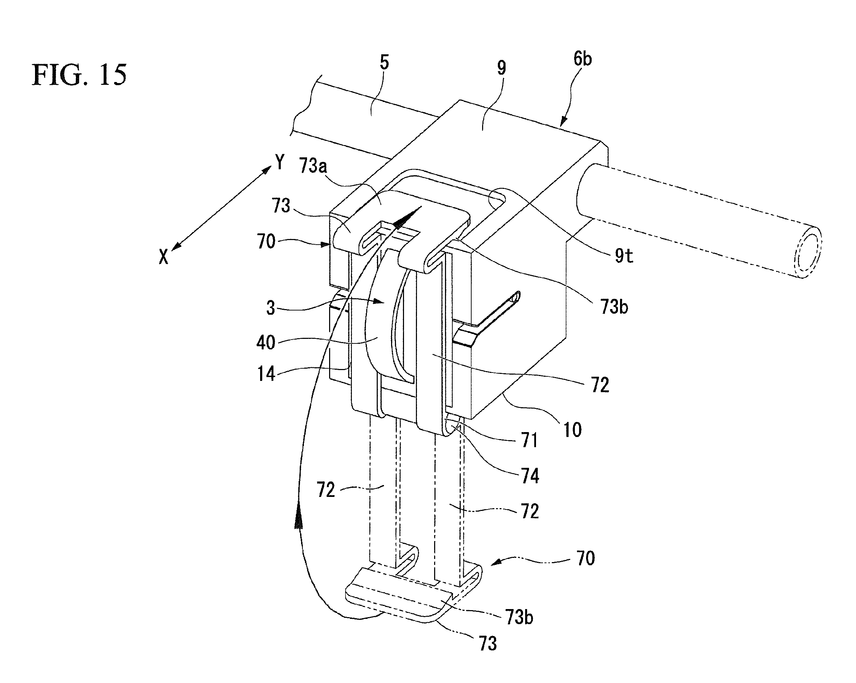

As illustrated in FIG. 15, Modification Example 2 is different from the electrolyzed water production device 1A of the first embodiment in terms of a method of locking and fixing the electrolytic bath 3 when the electrolytic bath 3 is arranged at a predetermined installation position within the mounting section 6a.

A locking part of Modification Example 2 consists of a rotatable cover 70 that is made rotatable around a horizontal axis in the vicinity of the front end of the bottom wall 10. The rotatable cover 70 holds and fixes the electrolytic bath 3 within a mounting section 6b.

The rotatable cover 70 has a bearing section 71, a holding and fixing section 72 that rotates with the bearing section 71 section as a fulcrum and holds the electrolytic bath 3 so as to straddle the opening 14 in the up-down direction, and a locking claw section 73 that is locked to the top wall 9 of the mounting section 6b and fixes the rotatable cover 70 to the mounting section 6b.

The bearing section 71 is fixed to the vicinity of the lower surface of the front end of the bottom wall 10, and is made rotatable with a shaft 74, which is supported by the bottom wall 10 and extends in the horizontal direction, as a center.

The holding and fixing section 72 is a flat plate consisting of a pair of beltlike bodies that straddle the opening 14 in the up-down direction with the handle 40 of the electrolytic bath 3 interposed therebetween, and abuts the electrolytic bath 3 so as to hold and fix the electrolytic bath within the mounting section 6b.

The locking claw section 73 is formed so as to be bent in a U-shape in a side view and extend in a backward Y direction after extending from the end (upper end) of the holding and fixing section 72 in a forward X direction in a state where the opening 14 is closed by the rotatable cover 70. The locking claw section 73 has a claw section 73b, which can be locked to the top wall 9, on a lower surface of a flat plate section 73a extending in the Y direction.

Meanwhile, the front-end side of the upper surface of the top wall 9 of the mounting section 6b is formed with a concave section 9t for locking the locking claw section 73b when the locking claw section 73 is located above the front end side.

Under this configuration, in Modification Example 2, the rotatable cover 70 is moved under the bottom wall 10 so as to make the opening 14 open when the electrolytic bath 3 is inserted into the mounting section 6b. After the electrolytic bath 3 is inserted into the mounting section 6b from the opening 14, the holding and fixing section 72 and the locking claw section 73 are rotated with the bearing section 71 as the fulcrum, and are moved upward, and the locking claw section 73 is locked to a front end edge of the concave section 9t of the top wall 9. The electrolytic bath 3 can be easily and reliably fixed to the mounting section 6b by this manipulation.

Next, Modification Example 3 of the electrolyzed water production device 1A of the first embodiment will be described.

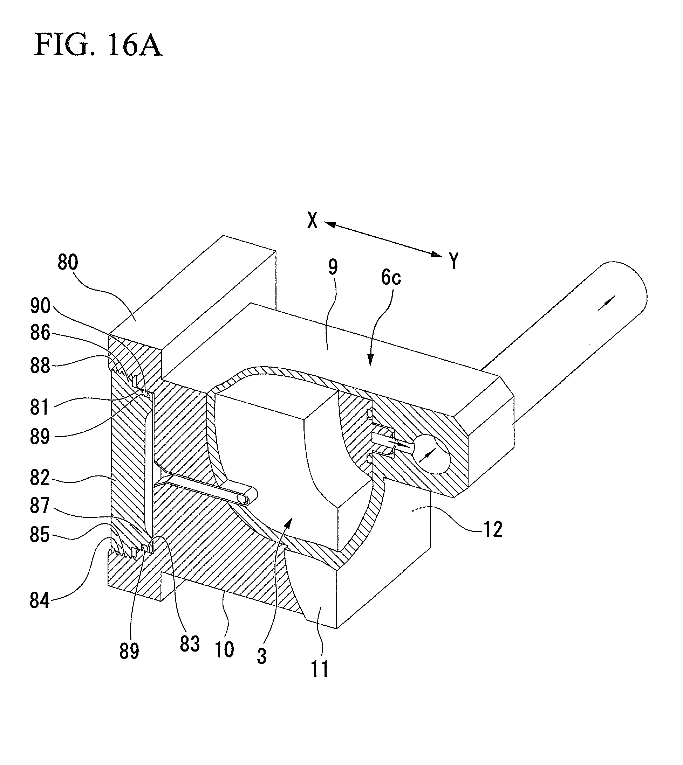

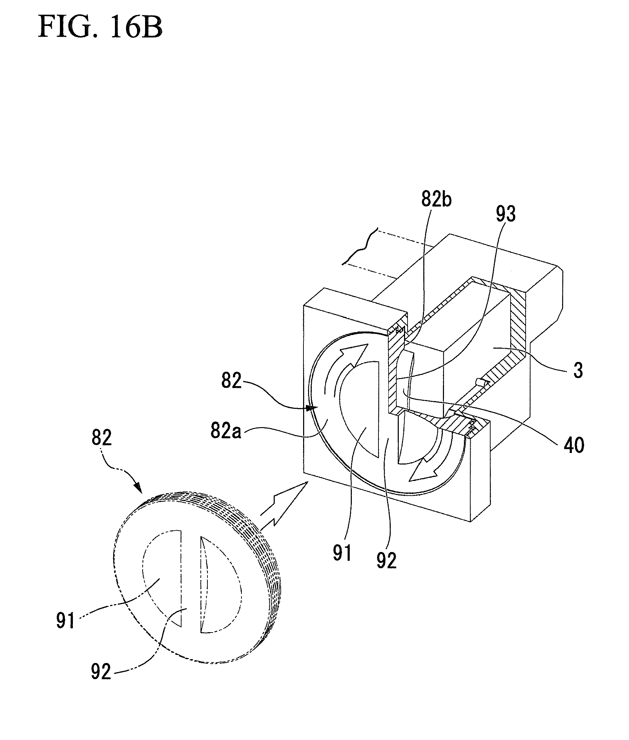

As illustrated in FIGs. 16A and 16B, Modification Example 3 is different from the electrolyzed water production device 1A of the first embodiment in terms of a method of locking and fixing the electrolytic bath 3 when the electrolytic bath 3 is arranged at a predetermined installation position within a mounting section 6c.

As illustrated in FIG. 16A, a locking part of Modification Example 3 is a disc-shaped cover 82 that can be screwed to an opening 81 of a flange 80 provided on the mounting section 6c. The cover 82 holds and fixes the electrolytic bath 3 within the mounting section 6c.

A front end of the mounting section 6c is provided with the flange 80 that is formed as the front ends of the top wall 9, the bottom wall 10, and both the side walls 11 and 11 of the mounting section 6c which overhang outward. The inside of the flange 80 is formed as a circular opening 81 of a size such that the electrolytic bath 3 can pass through the opening in an insertion direction thereof. A smaller-diameter hole 83 and a larger-diameter hole 84 are formed in order in the opening 81 in the arrow X direction. An inner peripheral surface of the larger-diameter hole 84 is formed with a female screw 85.

The electrolytic bath 3 can be fixed within the mounting section 6c by screwing the disc-shaped cover 82 into the opening 81 of the flange 80 after the electrolytic bath 3 is inserted into the mounting section 6c.

The cover 82 is constituted of a larger-diameter section 86 and a smaller-diameter section 87. An outer peripheral surface of the larger-diameter section 86 is formed with a male screw 88. A groove 89 is formed in an outer peripheral surface of the smaller-diameter section 87 over its whole circumference, and an O ring 90 is mounted on the groove 89.

Additionally, as illustrated in FIG. 16B, an outside plate surface 82a of the cover 82 is formed with a circular concave section 91, and a linear gripper 92 passing through the center of the concave section 91. Additionally, an inside plate surface 82b of the cover 82 is formed with a concave section 93. Since the cover 82 is formed with the concave section 93, it is possible to avoid that the handle 40 of the electrolytic bath 3 abuts and rubs against the plate surface 82b and both of the handle and the plate surface are worn when the cover 82 is screwed into the opening 81, and an inner surface of the concave section 93 can abut against the handle 40 and simply fix the electrolytic bath 3 when the screwing is completed.

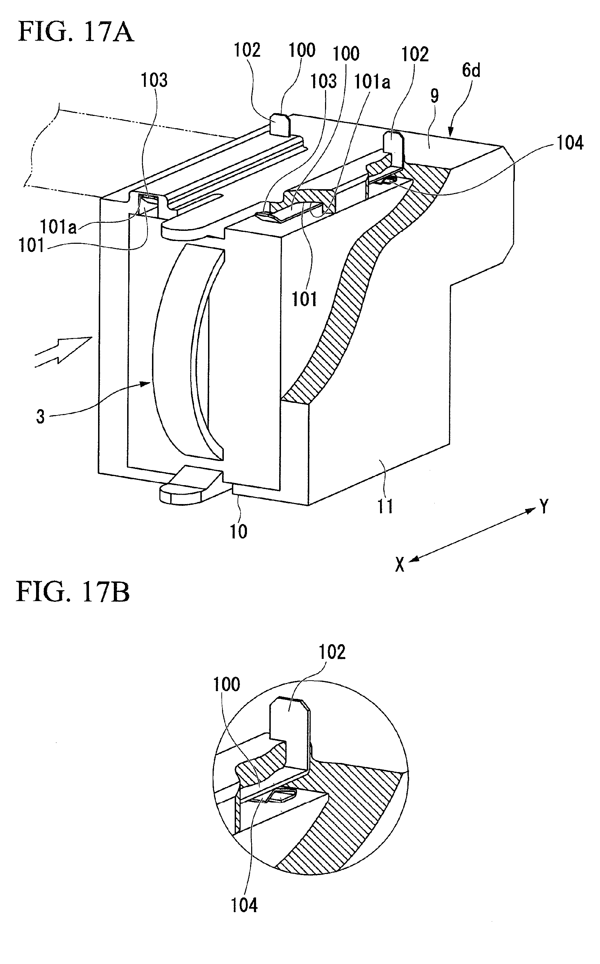

Next, Modification Example 4 of the electrolyzed water production device 1A of the first embodiment will be described. As illustrated in FIGs. 17A and 17B, Modification Example 4 is different from the electrolyzed water production device 1A of the first embodiment in terms of a terminal connecting section 100 provided at a mounting section 6d and a terminal 104 provided at the electrolytic bath 3.

The terminal connecting section 100 of Modification Example 4 is arranged on the lower surface of the top wall 9 of the mounting section 6d so as to run along the inside of a groove 101 formed to extend in the forward-backward X-Y direction. This terminal connecting section 100 is bent substantially perpendicular so that a back end 102 thereof protrudes upward of the top wall 9, and is bent so that a front end 103 thereof inclines upward toward the front. The terminal connecting section 100 is fixed to a top surface 101a (a surface that faces downward) of the groove 101.

Meanwhile, the terminal 104 electrically connected to an electrode (not illustrated) via a lead wire or the like is provided to project from the upper surface of the electrolytic bath 3. The terminal 104 is formed of a metallic plate material having spring properties, and is bent so that a central portion thereof bulges upward. The terminal 104 slides on the terminal connecting section 100 so as to ensure electrical connection with the terminal connecting section 100 when the electrolytic bath 3 is inserted into the mounting section 6d.

By configuring the terminal connecting section 100 and the terminal 104 as above, the electrical connection between the electrolytic bath 3 and the control section 7 illustrated in FIG. 1 can be appropriately ensured simultaneously with the insertion of the electrolytic bath 3 into the mounting section 6d. Hence, the time and effort for connecting an electrode (not illustrated) and the control section 7 via a wiring line or the like can be saved.

In addition, the terminal connecting section 100 and the terminal 104 may be provided with the same configuration as above on the bottom wall 10 side or on the side wall 11 side, and the same effects are obtained even in this case.

Next, Modification Example 5 of the electrolyzed water production device 1A of the first embodiment will be described.

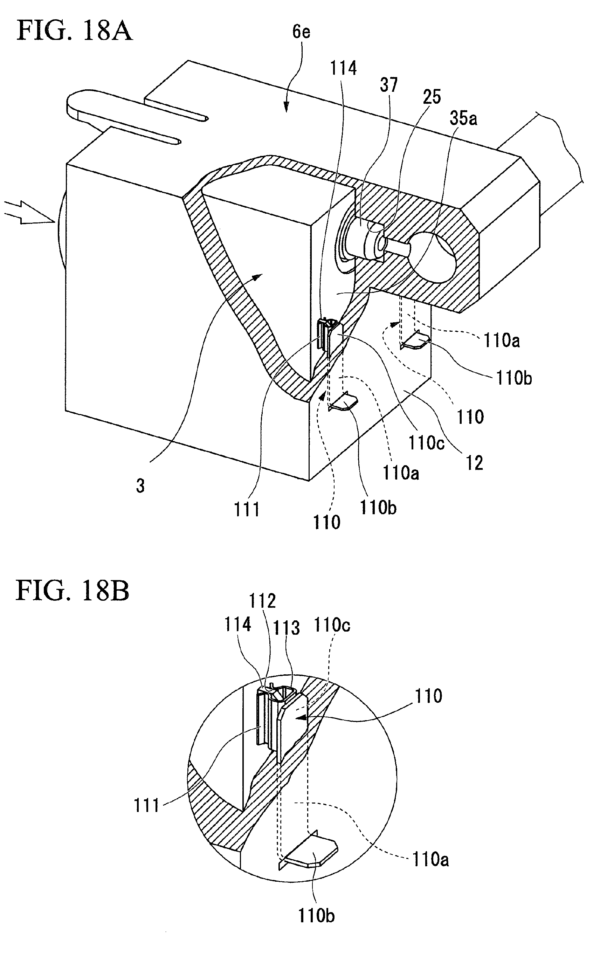

As illustrated in FIGs. 18A and 18B, Modification Example 5 is different from the electrolyzed water production device 1A of the first embodiment in terms of a terminal connecting section 110 provided at a mounting section 6e and a terminal 114 provided at the electrolytic bath 3.

The terminal connecting section 110 of Modification Example 5 is formed using a beltlike metal plate member. In the terminal connecting section 110, one end 110b of a terminal body 110a that is formed flat is bent perpendicularly to the terminal body 110a, and a terminal pinching section 111 is welded to the other end 110c. The terminal body 110a of the terminal connecting section 110 is buried inside the back-end wall 12 of the mounting section 6e. The one end 110b project outward (the outside of the mounting section 6e) from the back-end wall 12. Additionally, the terminal pinching section 111 of the terminal connecting section 110 projects inward from the mounting section 6e.

The terminal pinching section 111 is configured in such a manner that a beltlike metal plate member having conductivity is bent in a substantially tubular shape, the vicinities of a pair of metal ends that face each other are bent to form a neck section, a gap 112 is provided between metal plates of the neck section, and the pair of metal ends are separated from each other. A tube section 113 that is bent in a substantially tubular shape is welded to the other end 110c of the terminal body 110a.

Meanwhile, the terminal 114 of the electrolytic bath 3 is formed in the shape of a plate from a conductive metal member, and is fixed so as to project from the side 35a of the chassis 30, with a position and orientation where the terminal can be inserted into a gap 112 of the terminal pinching section 111. The terminal 114 is electrically connected to the electrode 45 via a lead wire (not illustrated).

Under the above configuration, in Modification Example 5, the electrolytic bath 3 and the mounting section 6e can be electrically connected together by inserting the electrolytic bath 3 into a predetermined position of the mounting section 6e, thereby setting the terminal 114 of the electrolytic bath 3 in the gap 112 of the terminal pinching section 111 of the terminal connecting section 110. For this reason, the time and effort for connecting the electrode 45 and the control section 7 illustrated in FIG. 1 via a wiring line or the like can be saved. Additionally, unless the electrolytic bath 3 is inserted into a predetermined position of the mounting section 6e, that is, unless the projecting wall 37 of the electrolytic bath 3 is suitably set in the setting section 25 of the mounting section 6e, the terminal 114 is not connected to the terminal connecting section 110. For this reason, it is possible to avoid that the electrolytic bath 3 is energized in a state where the electrolytic bath is not reliably mounted, and a malfunction can be prevented.

Next, Modification Example 6 of the electrolyzed water production device 1A of the first embodiment will be described.

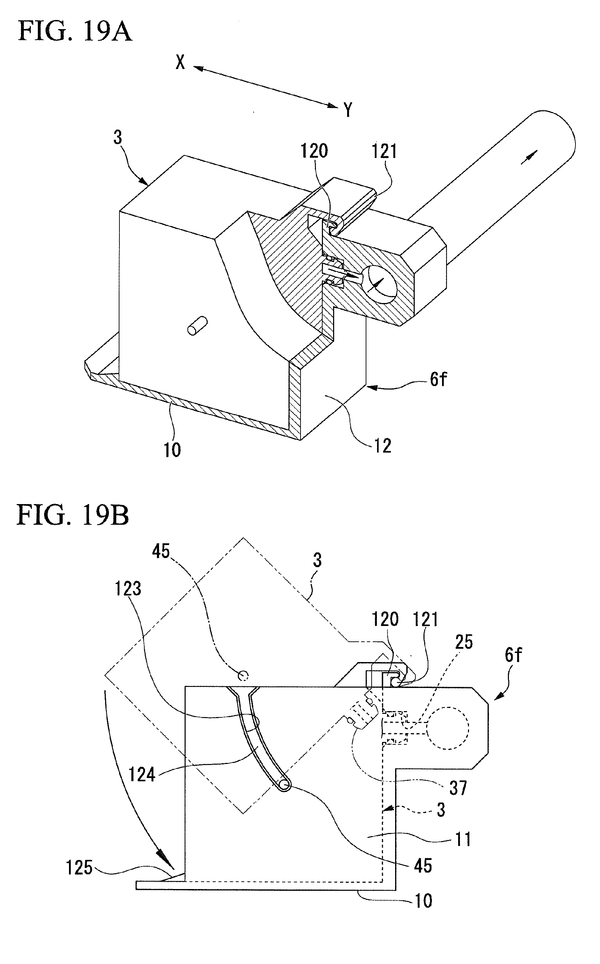

As illustrated in FIGs. 19A and 19B, Modification Example 6 is different from the electrolyzed water production device 1A in terms of a method of mounting the electrolytic bath 3 to the mounting section 6f. That is, the mounting section 6f has a stationary latching section 120 that rotatably latches the electrolytic bath 3. Meanwhile, the electrolytic bath 3 has a movable latching section 121 latched to the stationary latching section 120, and is rotated with the stationary latching section 120 as a fulcrum and mounted on the mounting section 6f.

The stationary latching section 120 rises from the upper end of the back-end wall 12 of the mounting section 6f, and is bent in the backward Y direction. The stationary latching section 120 extends with a predetermined length in the horizontal direction orthogonal to the X-Y direction.

Since the mounting section 6f is configured so that the electrolytic bath 3 is inserted from above and set therein, the mounting section does not have the top wall 9. Additionally, as illustrated in FIG. 19B, the side walls 11 and 11 are respectively formed with insertion sections 124 each including a metallic terminal connecting section 123. The insertion section 124 is arranged on a rotation track of the electrode 45 when the electrolytic bath 3 is rotated with the tip of the movable latching section 121 as a center, in a state where a tip portion of the movable latching section 121 is latched to a tip portion of the stationary latching section 120.

Moreover, the bottom wall 10 is formed with a claw section 125 having the same configuration as the claw section 18 of the electrolyzed water production device 1A illustrated in FIG. 8A.

The movable latching section 121 is bent in the Y direction and is further bent downward so as to be wound around the tip portion of the stationary latching section 120 after the movable latching section rises from the upper surface on the back-end side of the electrolytic bath 3 in the state of being mounted on the mounting section 6f.

Under this configuration, in Modification Example 6, the electrode 45 is electrically connected to the terminal connecting section 123 simply by latching the movable latching section 121 to the stationary latching section 120 and by rotating the electrolytic bath 3 downward with the stationary latching section 120 as the fulcrum. Additionally, the side walls 11 and 11 and the insertion section 124 can reliably guide the electrolytic bath 3 toward a predetermined position of the mounting section 6f. Moreover, when the electrolytic bath 3 abuts against the bottom wall 10 and the back-end wall 12, the projecting wall 37 and the setting section 25 can be set in an airtight state, and the electrolytic bath 3 can be reliably held and fixed by the claw section 125 without being moved in the up-down direction. Accordingly, according to Modification Example 6, the electrolytic bath 3 can be simple and reliably arranged at the mounting section 6f, and a required connection can be simply and reliably completed by installing the electrolytic bath 3 in the mounting section 6f.

Next, Modification Example 7 of the electrolyzed water production device 1A of the first embodiment will be described.

As illustrated in FIG. 20, Modification Example 7 is different from the electrolyzed water production device 1 A of the first embodiment in terms of an outlet 130 of the electrolytic bath 3 and a connecting section 131 of a mounting section 6g.

The outlet 130 of the electrolytic bath 3 is formed so as to extend upward in the vertical direction from the space S1 (illustrated in FIG. 6) formed in the horizontal direction, and opens within a concave setting section 132 (bottom) that is formed in the upper wall of the chassis 30 so as to be concave downward. Additionally, the upper side of the front end of the chassis 30 is formed with a bulging section 139 that bulges so as to form a circumferential surface around a virtual axis L1 orthogonal to the X-Y direction. The axis L1 extends in the horizontal direction orthogonal to the X-Y direction. The bulging section 139 constitutes a locking part that the locks a flat spring 137 of the mounting section 6g to be described below.

Meanwhile, the mounting section 6g has the connecting section 131 including a projecting wall 133 that projects downward in a state where the mounting section is connected to the electrolytic bath 3. The connecting section 131 is connected to one end of an elbow 134, and a flexible pipe 135 is connected to the other end of the elbow 134.

The connecting section 131 has a through hole 131R (hole section) therein. The flat spring 137 is rotatably attached to a bearing section 136 provided at the back-end wall 12. The connecting section 131 is fixed to the flat spring 137.

The flat spring 137 extends in the forward X direction from the bearing section 136 in a state where the flat spring is connected to the electrolytic bath 3, and extends again in the arrow X direction after being bent so as to draw an arc at a tip portion thereof. The tip portion of the flat spring 137 constitutes a locked section 138 that fixes the electrolytic bath 3.

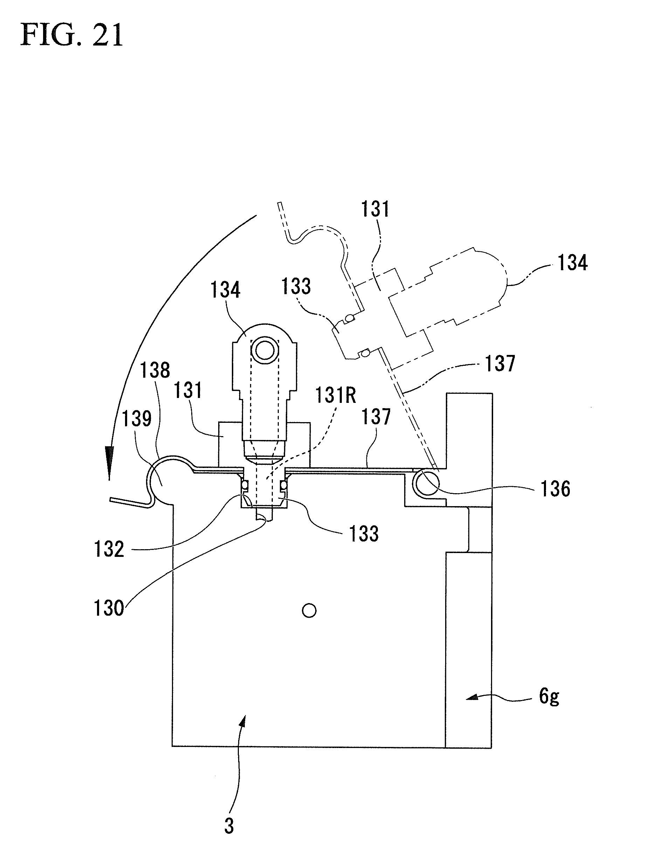

Under this configuration, as illustrated in FIG. 21, the connecting section 131 moves with the rotation of the flat spring 137 together with the elbow 134 and the flexible pipe 135. The connecting section 131 is simply set in the concave setting section 132 of the electrolytic bath 3 by rotating the flat spring 137 so as to be brought close to the electrolytic bath 3, and the connecting section 131 is detached from the concave setting section 132 by rotating the flat spring 137 so as to be separated from the electrolytic bath 3.

When the electrolytic bath 3 is mounted on the mounting section 6g, and the outlet 130 of the electrolytic bath 3, and the through hole 131R of the connecting section 131 are allowed to communicate with each other with air-tightness, the electrolytic bath 3 is installed in a state where the flat spring 137 is lifted and the mounting section 6g opens. Thereafter, the flat spring 137 is lowered so as to set the projecting wall portion 133 in the concave setting section 132 of the electrolytic bath 3, and the locked section 138 is locked to the bulging section 139. That is, the communication between the outlet 130 of the electrolytic bath 3 and the through hole 131R of the connecting section 131 is allowed or released by moving the connecting section 131 relative to the electrolytic bath 3. Even by this modification example, the electrolytic bath 3 can be simply mounted on the mounting section 6.

Next, Modification Example 8 of the electrolyzed water production device 1A of the first embodiment will be described.

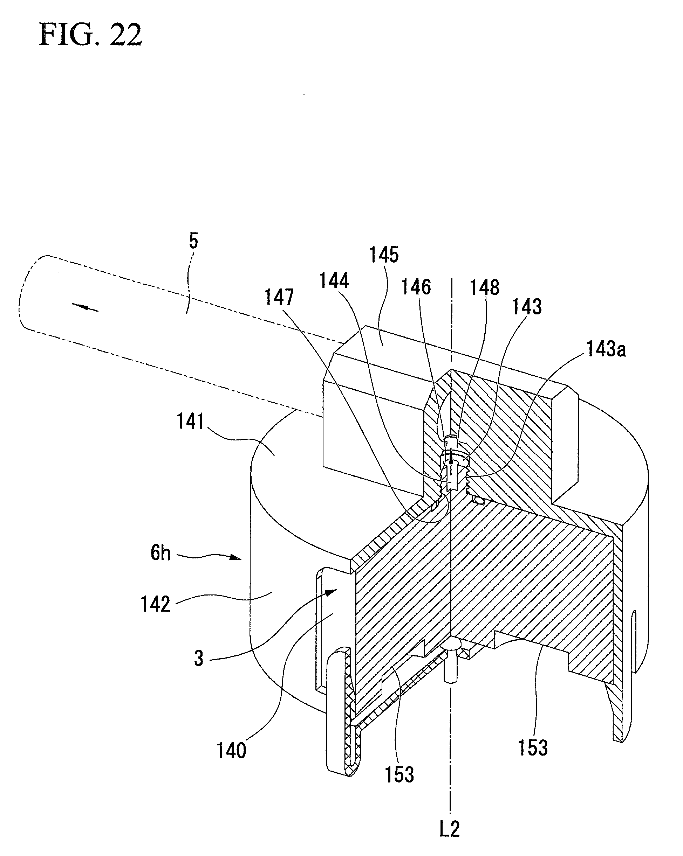

As illustrated in FIG. 22, in Modification Example 8, a chassis 140 of the electrolytic bath 3 is formed in a columnar shape, and a mounting section 6h includes a top wall 141 and a side wall 142 that are formed in conformity with an external shape of the chassis 140.

A substantially columnar projecting wall 143 is formed on an upper wall of the chassis 140 of the electrolytic bath 3. The projecting wall 143 is arranged so that a central axis thereof and a central axis of the chassis 140 become a common axis L2. The projecting wall 143 is formed with an outlet 144 that communicates with a fluid channel (not illustrated).

Additionally, a male screw 143a is formed on an outer peripheral surface of the projecting wall 143.

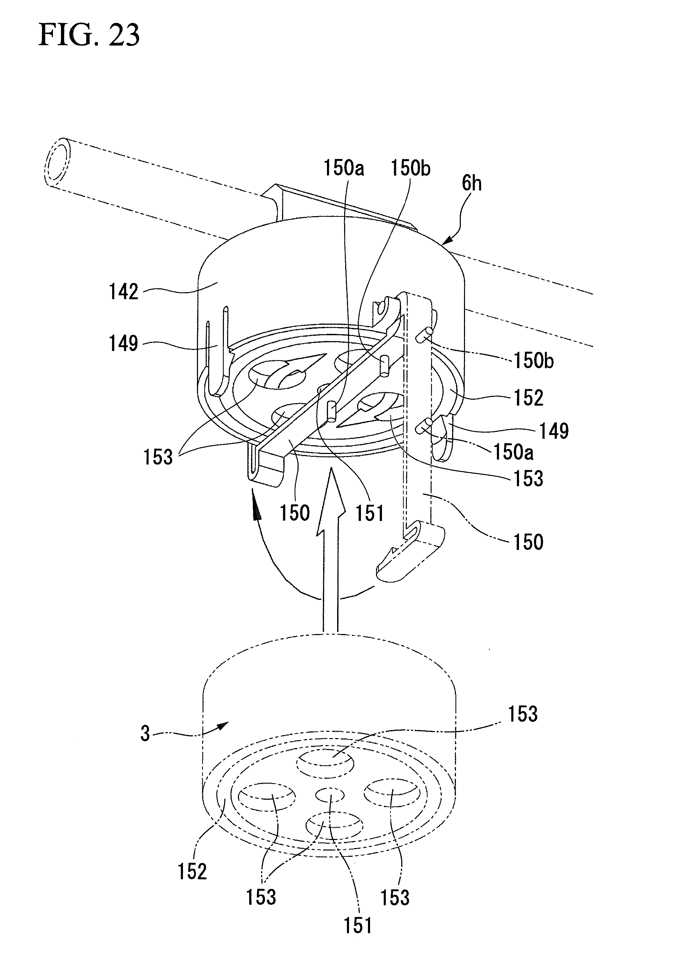

As illustrated in FIGs. 22 and 23, the lower wall of the electrolytic bath 3 is formed with a plurality of concave sections 153 for hooking fingers and gripping the lower wall in order to rotate the electrolytic bath 3 around the axis L2.

Additionally, a terminal 151 consisting of a conductive circular metal plate is arranged at a center portion of the lower wall of the electrolytic bath 3, and the terminal 152 consisting of a ring-shaped conductive metal plate is arranged at a peripheral edge of the above lower wall. The terminals 151 and 152 are respectively connected to the pair of electrodes inside the electrolytic bath 3.

As illustrated in FIG. 22, the top wall 141 of the mounting section 6h is provided with a connecting section 145 that projects upward.

The connecting section 145 is formed with a setting section 146 that sets the projecting wall 143, and an inner peripheral surface of the setting section 146 is formed with a female screw 147 for screwing the projecting wall 143.

An upper portion of the female screw 147 is formed with a through hole 148 (hole section) that communicates with the outlet 144, and the chlorine gas (electrolyzed products) can be made to flow via the through hole 148 to the pipe 5 connected to the connecting section 145.

As illustrated in FIG. 23, a lower end of the side wall 142 is formed with the same locking parts 149 and 149 as the locking parts 16A and 16B illustrated in FIGs. 8A and 8B, and the electrolytic bath 3 can be held by the locking parts 149 and 149. Additionally, a rotatable cover 150, which is formed similarly to the rotatable cover 70 illustrated in FIG. 15, is provided in a direction orthogonal to a direction in which the locking parts 149 and 149 face each other, and the rotatable cover 150 can more reliably hold the electrolytic bath 3.

Columnar terminal connecting sections 150a and 150b are provided to pass through the rotatable cover 150, and the terminal connecting sections 150a and 150b are connected to the control section 7 (refer to FIG. 1) via a lead wire (not illustrated).

Under the above configuration, in Modification Example 8, when the electrolytic bath 3 is mounted on the mounting section 6h, the rotatable cover 150 is rotated downward so as to open the mounting section 6h, and the electrolytic bath 3 is inserted into the inside of the side wall 142. When the projecting wall 143 abuts the opening of the setting section 146, a user puts his/her fingers into the concave sections 153 of the lower wall of the electrolytic bath 3 so as to grip the lower wall, and rotates the electrolytic bath 3 around the axis L2 so as to screw the projecting wall portion 143 into the setting section 146. If the projecting wall 143 is reliably screwed into the setting section 146, the overall electrolytic bath 3 settled within the mounting section 6h, and the locking parts 149 and 149 are locked to and fixed to the electrolytic bath 3. Subsequently, the rotatable cover 150 is rotated upward and is locked to the side wall 142 so as to complete the fixation of the electrolytic bath 3.

If the rotatable cover 150 is locked to the side wall 142, the terminal connecting section 150a provided to pass through the rotatable cover 150 comes into contact with the circular terminal 151 of the lower wall of the electrolytic bath 3, and the terminal connecting section 150b comes into contact with the ring-shaped terminal 152 of the lower wall of the electrolytic bath 3. Thereafter, the terminals 151 and 152 are energized via the terminal connecting sections 150a and 150b.

By adopting such a configuration, the electrolytic bath 3 can be easily mounted within the mounting section 6h, using the side wall 142 of the mounting section 6h as a guide section. Additionally, simply by rotating the electrolytic bath 3 in one direction, the projecting wall 143 can be screwed to the setting section 146, and the electrolytic bath 3 can be reliably set in and fixed to the mounting section 6h, with the axis L2 as a common axis.

Additionally, the electrolytic bath 3 can be more reliably held by the locking part 149 and the rotatable cover 150.

Next, Modification Example 9 of the electrolyzed water production device 1A of the first embodiment will be described.

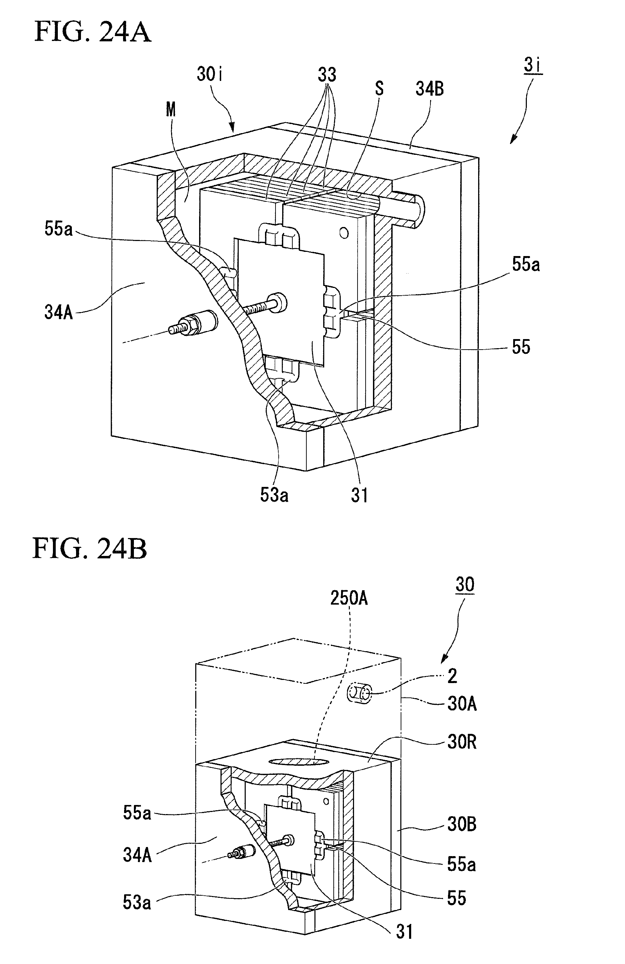

As illustrated in FIG. 24A, in Modification Example 9, a storage space M (space), which stores the raw material solution that is an electrolysis target, is formed within a chassis 30i of an electrolytic bath 3i. The storage space M is arranged outside the plurality of unit cells C (refer to FIG. 5; the same applies below) that are formed by alternately arranging the plurality of electrode plates 31 and the plurality of spacers 33 that are installed within the chassis 30i.

In the present modification example, the storage space M is formed between the spacer 33 located at a side end (nearest to the side plate 34A) among the plurality of spacers 33 and the side plate 34A, in a state where the plurality of spacers 33 in which the electrode plate 31 is fitted to the concavity 50 (refer to FIG. 4) are brought close to the side plate 34B and are arranged adjacent to each other within the chassis 30i.

The electrolytic bath 3i is filled with the raw material solution of a substantially uniform concentration in the unit cells C and the storage space M.

When the electrolytic bath 3i is energized, the reaction constituents within the unit cells C decrease through electrolysis. Along with this, the reaction constituents within the storage space M spread and flow within the unit cells C through the lower cut-out 53 (refer to FIG. 3; the same applies below), the lower fluid channel 53a, the side cut-outs 55 and 55, and the side fluid channels 55a and 55a. Accordingly, according to the present modification example, electrolysis can be performed for a longer time than an electrolytic bath that does not have the storage space M therein, and more electrolyzed products can be generated. That is, even while the period of use until the electrolytic bath 3i is replaced is prolonged and replacement frequency is further reduced, the electrolyzed water can be produced little by little.

In addition, in the present modification example, the storage space M is provided at a lateral side of the spacer 33 located at the side end, but the storage space M may be provided above the plurality of spacers 33. When the storage space M is provided above the spacers 33, the reaction constituents within the storage space M can be precipitated to the lower unit cells C as the reaction constituents in the unit cells C are electrolyzed, if the electrolytic bath is filled with a raw material solution including the reaction constituents, such as the hydrochloric acid, which have a heavier specific gravity than water and precipitate under the water. Accordingly, the reaction constituents can be preferably moved into the unit cells C without using a pump or the like.

Additionally, the storage space M may be provided on both of the lateral side and the upper side of the spacer 33 that is located at the side end. Otherwise, the plurality of spacers 33 may be arranged at positions apart from both of the side plates 34A and 34B of the chassis 30i, and the storage space M may be provided on both lateral sides of the spacers 33 and 33 located at both ends of the plurality of spacers. In this case, the storage space M may be provided on both the lateral sides and the upper side of the spacers 33 and 33 that are located at the above both ends. Even in any of the above cases, the electrolytic bath 3 can obtain the same effects as the above-described effects.

In addition, in the chassis 30, the space S where the plurality of spacers 33 to which the electrode plates 31 are fitted and are arranged to be adjacent each other, and the storage space M, as illustrated in FIG. 24B, may be partitioned off from each other by a partition plate 30R including an opening 250A. Otherwise, the space S where the plurality of spacers 33 are installed, and the storage space M may be provided in two or more chassis 30B and 30A of which the internal spaces are allowed to communicate with each other via at least one opening 250A. Even in the latter aspect, the chassis 30A and the chassis 30B may be integrally attached and detached and replaced, in a state where the chassis 30A and 30B are filled with the raw material solution in advance, and the supply port is sealed so that a new raw material solution cannot be injected into the chassis 30A and 30B.

In addition, in this case, since the generated electrolyzed products float within the raw material solution, it is preferable that the outlet 2 for discharging the electrolyzed products opens at as high a position as possible in the electrolytic bath 3. For example, the outlet 2 can be made to open to a topmost section of the chassis 30A.

Next, an electrolyzed water production device 1B will be described as a second embodiment of the invention. In the description of the present embodiment, only points different from those of the electrolyzed water production device 1A of the first embodiment will be described, the same components will be designated by the same reference numerals, and the description thereof will be omitted.

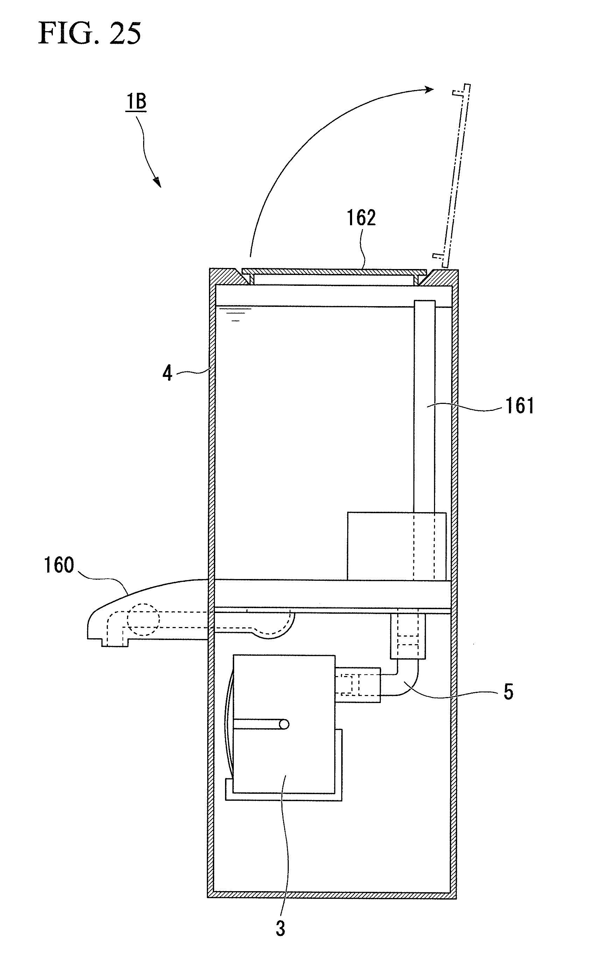

As illustrated in FIG. 25, in the electrolyzed water production device 1 B, the tank 4 that stores the dilution water is undetachably provided above the electrolytic bath 3 via the pipe 5, and an electrolyzed solution can be taken out from the water inlet 160 that is connected to the bottom of the tank 4.

Since an openable and closable cover section 162 is attached to an upper portion of the tank 4, the dilution water can be injected into the tank 4 by opening the cover section 162. A water level sensor 161 is installed inside the tank 4, and when the water level detected by the water level sensor 161 becomes equal to or lower than a predetermined threshold, driving of the electrolytic bath 3 is regulated by the control section (not illustrated). Accordingly, the electrolyzed products are supplied into the tank 4 in a state where there is little dilution water within the tank 4 or a state where there is no dilution water, electrolyzed water having a higher concentration than a desired concentration can be prevented from being produced, and the inside of the tank 4 can be prevented from being full of only the electrolyzed products.

Next, an electrolyzed water production device 1C will be described as a third embodiment of the invention. In the description of the present embodiment, only points different from those of the electrolyzed water production device 1A of the first embodiment will be described, the same components will be designated by the same reference numerals, and the description thereof will be omitted.

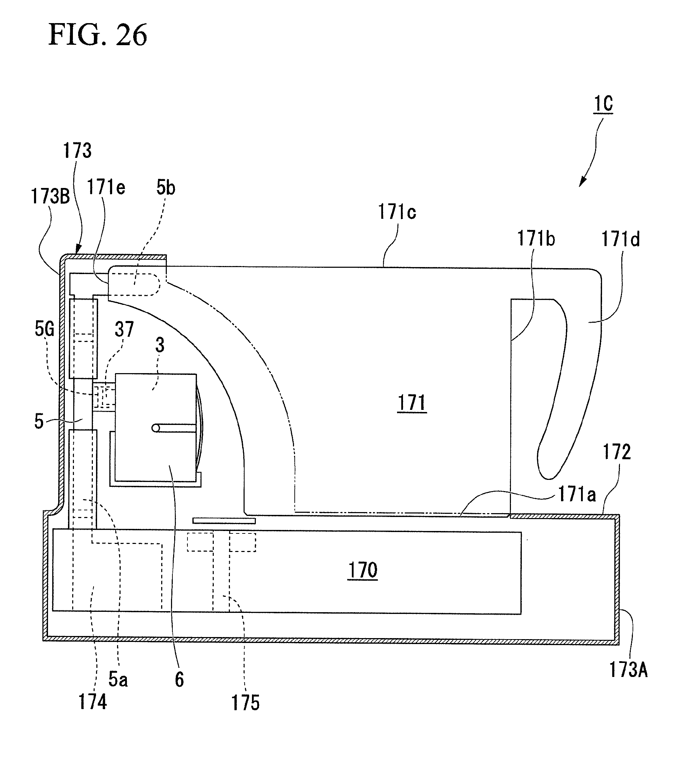

As illustrated in FIG. 26, the electrolyzed water production device 1C includes a storage section 170 that stores dilution water and serves as a supply source for the dilution water, the mounting section 6 that attaches and detaches the electrolytic bath 3, the pipe 5 (mixing section) through which the dilution water within the storage section 170 and the electrolyzed products from the electrolytic bath 3 are supplied, the control section (not illustrated), a pot 171 that contains electrolyzed water obtained by mixing the electrolyzed products and the dilution water, and a chassis 173 that houses the storage section 170, the electrolytic bath 3, the mounting section 6, and the pipe 5 therein and has a base 172 on which the pot 171 is detachably placed.

The storage section 170 is a rectangular parallelepiped-shaped tank and has therein a pump 174 that pumps the dilution water, and a water level sensor 175.

One end 5a of the pipe 5 is connected to the storage section 170 via the pump 174. The pipe 5 is arranged so that a central axis thereof extends in the up-down direction, is bent, and extends in the horizontal direction at an upper end thereof.

A branch pipe 5G is provided between the one end 5a and the other end 5b of the pipe 5. The projecting wall 37 of the electrolytic bath 3 is connected to the branch pipe 5G.

The pot 171 includes a bottom plate section 171 a, a peripheral wall section 171 b that rises from the periphery of the bottom plate section 171 a, a cover section 171 c that is provided so as to cover an upper opening of the peripheral wall section 171b, a handle 171d that is connected to an upper end of the peripheral wall section 171b, and an electrolyzed water inlet/outlet 171e that projects from the upper end of the peripheral wall section 171b on the side opposite to the handle 171d.

The chassis 173 includes a base section 173A that houses the storage section 170, and a driving mechanism section 173B that houses the pipe 5, the control section (not illustrated), the electrolytic bath 3, and the mounting section 6. An upper portion of the base section 173A is constituted as the base 172.

Under the above configuration, when the electrolyzed water production device 1C is used, a power supply (not illustrated) can be turned on to actuate the pump 174, the control section (not illustrated), and the electrolytic bath 3, the dilution water pumped by the pump 174 and the electrolyzed products from the electrolytic bath 3 can be joined within the pipe 5, and the dilution water and the electrolyzed products can be poured from the other end 5b of the pipe 5 to the inside of the pot 171 while being dropped.

Accordingly, the electrolyzed water production device 1C determines the amount of the electrolyzed products according to the amount of one-time supply of the dilution water, and sets the unit time and the current value with which the electrolytic bath 3 is energized. After the dilution water is made to flow upward within the pipe 5 and is joined with the electrolyzed products in the middle of the pipe 5, the dilution water and the electrolyzed products can be poured into the pot 171 while being dropped. Accordingly, the dilution water and the electrolyzed products can be reliably mixed together within the pot 171 by performing pouring in this way.

Next, an electrolyzed water production device 1D will be described as a fourth embodiment of the invention.

The electrolyzed water production device related to the fourth embodiment includes an electrolytic bath that electrolyzes a raw material solution to generate electrolyzed products and discharges the electrolyzed products from an outlet, a mounting section that allows the electrolytic bath to be mounted thereto, a control section that controls the operation of the electrolytic bath, a mixing section that is connected to the electrolytic bath and mixes the electrolyzed products obtained in the electrolytic bath with dilution water so as to generate electrolyzed water, a suction pipe that suctions the dilution water stored in the mixing section, a pump that is provided at the suction pipe, and a discharge pipe that joins the dilution water suctioned by the suction pipe and the electrolyzed products discharged from the electrolytic bath so as to discharge both to the mixing section.

The electrolytic bath, the pump, and the discharge pipe are fixed within the casing.

The casing is detachably installed in the mixing section. When the casing is mounted on the mixing section, a conduit of the suction pipe and a conduit of the discharge pipe are allowed to communicate with the inside of the mixing section, so that the dilution water stored within the mixing section can be suctioned and discharged by the suction pipe and the discharge pipe.

Additionally, the electrolytic bath is connected to the discharge pipe in a state where the inside of the electrolytic bath is filled with a predetermined amount of the raw material solution in advance from a supply port for the raw material solution formed in the electrolytic bath and is configured so that a new raw material solution cannot be injected thereinto from the supply port. The control section is configured so that the time required to electrolyze the raw material solution filled in advance is divided into predetermined unit times, the number of times by which the raw material solution filled in advance is electrolyzed is set to multiple times, and a current of a constant current value is applied to the electrolytic bath at every unit time. That is, the control section is configured so as to supply a current of a constant current value to the electrolytic bath for a predetermined unit time in order to electrolyze a portion of the raw material solution with which the electrolytic bath is filled in advance, and so as to electrolyze the raw material solution filled in advance multiple times.

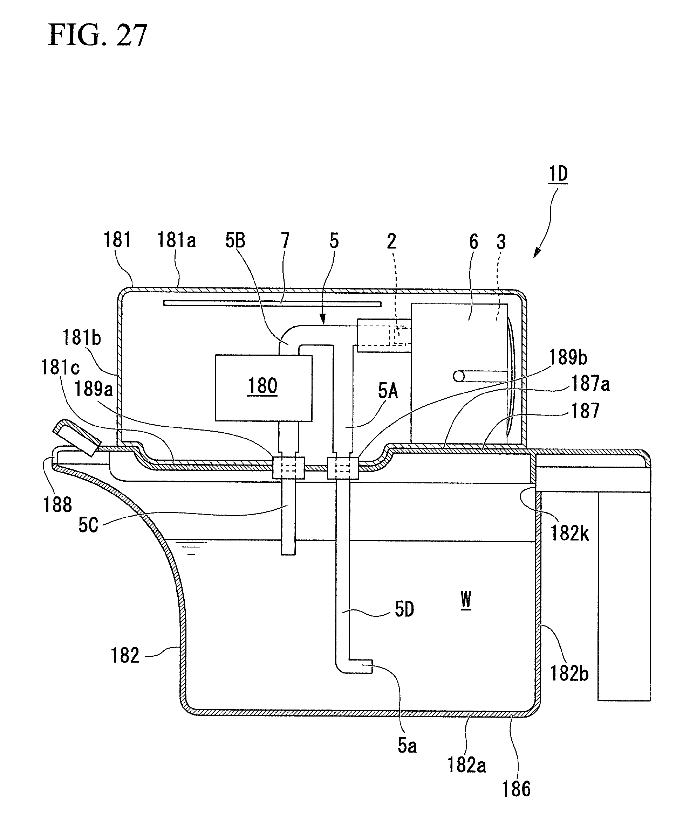

Specifically, as illustrated in FIG. 27, the electrolyzed water production device 1D includes the electrolytic bath 3, the mounting section 6 that allows the electrolytic bath 3 to be mounted thereto, the control section 7, a pot 182 (mixing section), a suction pipe 5B that suctions the dilution water, a pump 180 that is provided at the suction pipe 5B, and a discharge pipe 5A that returns the dilution water suctioned by the suction pipe 5B to the pot 182. The mounting section 6 mounted with the electrolytic bath 3, the control section 7, the pump 180, the discharge pipe 5A, and the suction pipe 5B are fixed within a casing 181. The casing 181 is detachably installed in an upper portion of the pot 182 that stores the dilution water. Pipes 5D and 5C connected to the discharge pipe 5A and the suction pipe 5B, respectively, project downward from the bottom of the casing 181 and are inserted into the pot 182. An upper end of the discharge pipe 5A and an upper end of the suction pipe 5B are connected to each other so as to constitute the pipe 5. Additionally, the dilution water is stored in advance within the pot 182.

The casing 181 includes a top plate section 181a, a side plate section 181b that extends downward from the periphery of the top plate section 181a, and a bottom plate section 181 c that is connected to a lower end of the side plate section 181 b. A portion of the bottom plate section 181c is formed with an opening. The electrolytic bath 3, the pump 180, the discharge pipe 5A, and the suction pipe 5B are appropriately fixed to the casing 181. The lower end of the casing 181 is provided with an engaged section (not illustrated) that is engaged with the pot 182.

The upper end of the discharge pipe 5A is connected to the outlet 2 of the electrolytic bath 3. The electrolyzed products generated in the electrolytic bath 3 can be discharged into the discharge pipe 5A.

The pump 180 is provided at the suction pipe 5B. The suction pipe 5B is connected to the discharge pipe 5A connected to the electrolytic bath 3. The dilution water W within the pot 182 is pumped by the operation of the pump 180, flows upward within the suction pipe 5B, and flows into the discharge pipe 5A. The dilution water W that has flowed in from the suction pipe 5B, and the electrolyzed products obtained in the electrolytic bath 3 are joined together in the discharge pipe 5A, and the dilution water W and the electrolyzed products are discharged from the discharge pipe 5A toward the inside of the pot 182. Additionally, the pump 180 includes a detection section (not illustrated) that detects the presence/absence of suction and transmits the detection result to the control section 7.

The control section 7 is set so that the electrolytic bath 3 is energized when suction is detected by the pump 180, and the electrolytic bath 3 is not energized when suction is not detected by the pump 180.

The pot 182 includes a container section 186 of which an upper portion is formed as an opening 182k, and a cover section 187 that is detachably provided at the opening 182k of the container section 186. The container section 186 includes a bottom plate section 182a, and a side plate section 182b that rises from the periphery of the bottom plate section 182a.

The container section 186 has an internal volume that can store the dilution water that is used to energize the electrolytic bath 3 at least once and to produce a predetermined concentration of the electrolyzed water. The container section 186 has a water pouring port 188 for pouring the produced electrolyzed water to the outside, at a portion of an upper end thereof.

The cover section 187 is provided with connecting sections 189a and 189b. The cover section 187 includes a pipe 5C that is fixed to the connecting section 189a and a pipe 5D that is fixed to the connecting section 189b.

An upper surface of the cover section 187 is formed as a mounting section 187a that allows the casing 181 to be attached and detached. When the casing 181 is mounted on the pot 182, the pipe 5C and the suction pipe 5B are connected together via the connecting section 189a and conduits of both the pipes communicate with each other, and the pipe 5D and the discharge pipe 5A are connected together via the connecting section 189b and conduits of both the pipes communicate with each other. Additionally, the mounting section 187a is provided with an engaging section (not illustrated) that reliably fixes the casing 181. Under this configuration, the casing 181 including the electrolytic bath 3 is stably attached to the pot 182 that is exclusively configured so that the mounting thereof can be performed, and can be preferably used.

The pipe 5C is installed so that the tip (lower end) thereof is located at a predetermined height within the pot 182, and is configured so that the dilution water W cannot be suctioned when the dilution water W is not stored up to the predetermined height.

Meanwhile, the pipe 5D is bent at one end 5a thereof, and is configured so that the dilution water W and the electrolyzed products, which flow downward within the discharge pipe 5A and the pipe 5D, collide against an inner wall of the one end 5a and cause a turbulent flow so as to be efficiently mixed. In addition, the pipe 5D (or the discharge pipe 5A) may have a portion that is bent in addition to the one end 5a, and may be configured so that the dilution water W and the electrolyzed products can be made to collide against the inner wall and can be better mixed.

Additionally, the pipe 5D is installed so that the one end 5a thereof is located at a lower portion within the pot 182, and can discharge the dilution water W and the electrolyzed products into the dilution water W stored in the pot 182, thereby stirring the dilution water within the pot 182.

When the electrolyzed water is produced by the above electrolyzed water production device 1D, in a pot 182, the dilution water W is stored up to a predetermined height, that is, up to a predetermined amount, the casing 181 is mounted on the pot 182, and a power switch (not illustrated) is turned on so as to drive the pump 180 and the electrolytic bath 3. Then, the pump 180 suctions the dilution water W from the tip of the pipe 5C, and the dilution water W flows within the suction pipe 5B toward a connecting location with the discharge pipe 5A.

Meanwhile, the electrolytic bath 3 generates electrolyzed products by a current of a constant current value being applied thereto for a predetermined amount of time (unit time), and sequentially discharges the electrolyzed products to the discharge pipe 5A. The above pumped dilution water W and the above electrolyzed products are mixed together in the discharge pipe 5A, flow toward the tip of the pipe 5D within the discharge pipe 5A and the pipe 5D, and collide against the inner wall of the pipe 5D at the one end 5a so as to cause a turbulent flow and be further mixed. Thereafter, the mixed dilution water W and electrolyzed products are discharged from the tip of the pipe 5D to the lower portion within the pot 182. If the mixed dilution water W and electrolyzed products are continuously discharged from the pipe 5D into the dilution water W of the pot 182 for a predetermined amount time, a water stream is formed in the dilution water W of the pot 182 and the dilution water W is stirred, the discharged dilution water W and electrolyzed products are dispersed in the overall dilution water W of the pot 182, and electrolyzed water including a predetermined concentration of the electrolyzed products is gradually produced.

Meanwhile, when the dilution water W is not stored up to the predetermined height within the pot 182, the pump 180 detects that the dilution water W has not been suctioned, a signal showing such a message is sent to the control section 7, and the operation of the electrolytic bath 3 is regulated by the control section 7.

By virtue of the above configuration, according to the electrolyzed water production device 1D, preparation for the production of the electrolyzed water in the pot 182 can be easily completed simply by mounting and fixing the casing 181 to the mounting section 187a of the exclusive pot 182.

Only when the dilution water W can be suctioned from the tip of the pipe 5C connected to the pump 180, can the control section 7 energize the electrolytic bath 3. Additionally, when the dilution water W is stored only up to a position equal to or lower than a height corresponding to the tip position of the pipe 5C within the pot 182, the control section 7 can determine that a predetermined amount of the dilution water is not stored, and can regulate the operation of the electrolytic bath 3. Accordingly, the electrolyzed water can be simply and appropriately produced by preventing a predetermined concentration or higher of the electrolyzed water from being generated or by preventing only the electrolyzed products from being supplied into the pot 182.

Additionally, since the casing 181 is configured so as to be attachable to and detachable from the pot 182, it is possible to adopt a specification in which, when the raw material solution within the electrolytic bath 3 becomes used, this electrolytic bath is replaced with a electrolytic bath 3 filled with a new raw material solution together with the casing 181. Accordingly, replacement work of the casing 181 can be simply and safely performed by avoiding that a user replaces only the electrolytic bath 3.

In addition, in the above embodiments, the discharge pipe 5A and the pipe 5D may be integrally formed, or the suction pipe 5B and the pipe 5C may be integrally formed.

Additionally, a configuration may be adopted in which, when the raw material solution within the electrolytic bath 3 becomes used, the casing 181 can be detached and only the electrolytic bath 3 can be replaced.

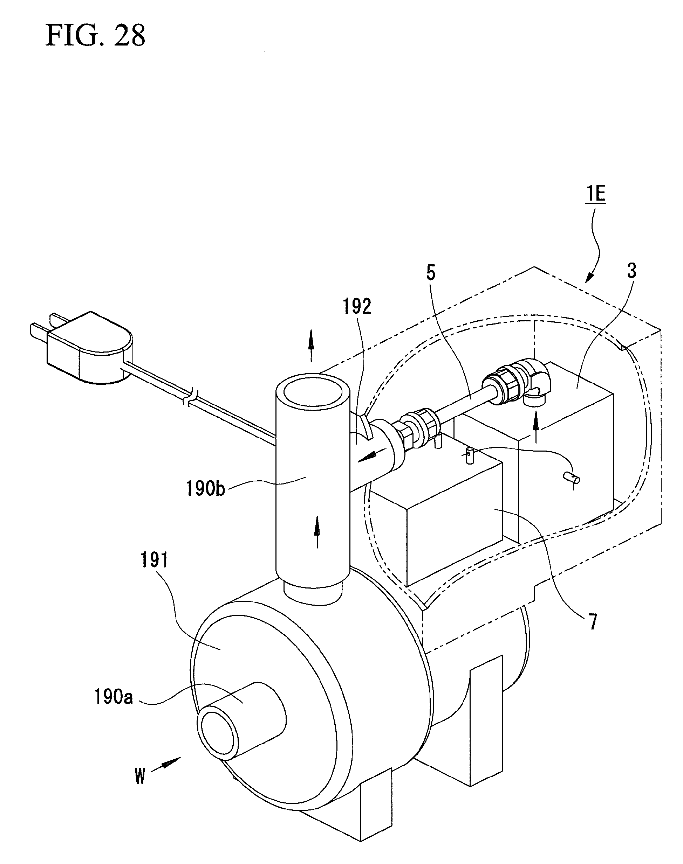

As described above, in the first to fourth embodiments and Modification Examples 1 to 9 thereof, the dilution water W is supplied in advance from a water supply or the like to the tank 4. In addition, in FIG. 28, as illustrated as a fifth embodiment, an electrolyzed water production device 1E includes a pipe 190a that supplies dilution water W from a water supply or the like to the inside of the device, a pipe 190b that discharges the dilution water W and electrolyzed products to a tank (not illustrated) that stores electrolyzed water obtained by joining the dilution water W and the electrolyzed products together, and a pump 191 that is provided between the pipes 190a and 190b and delivers the dilution water W and the electrolyzed products to the above tank. In this case, the pipe 190b is provided with a branch pipe 192 and the pipe 5 connected to the electrolytic bath 3 is connected to the branch pipe 192, so that the chlorine gas can be directly supplied to the pipe 190b. Additionally, since the pump 191 is provided with detection member for detecting that the dilution water has been suctioned and notifying the control section 7 of the message, when the suction is detected, the control section 7 applies a current of a predetermined current value (constant current value) to the electrolytic bath 3 for the unit time, and the electrolyzed products are generated.

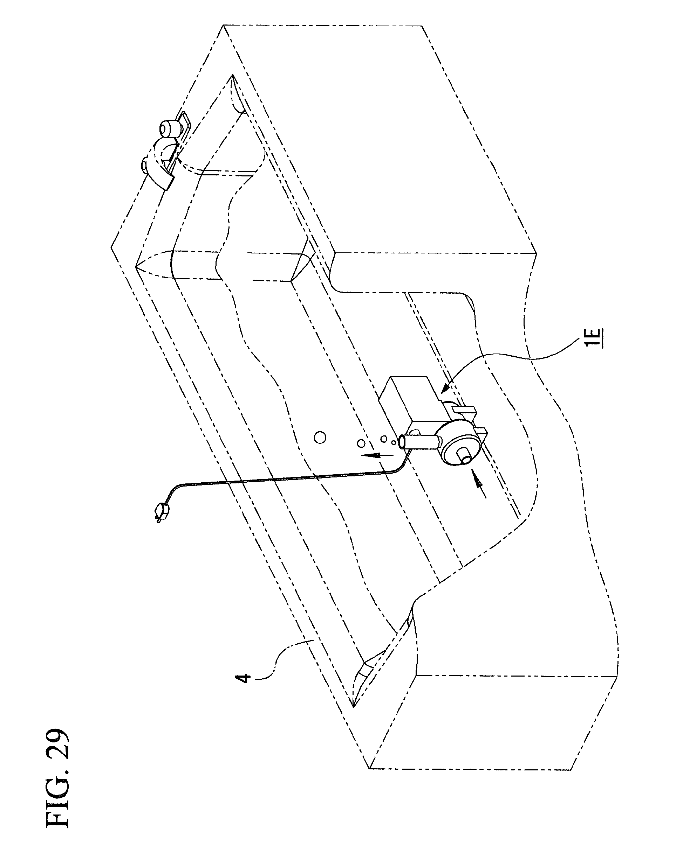

By adopting such a configuration, the electrolyzed water production device 1E can be carried to arbitrary places so as to produce the electrolyzed water, if an environment where the pipe 190a can be connected to a water supply via a flexible pipe or the like and an external power supply can be connected to the device 1E is provided. For example, as illustrated in FIG. 29, the electrolyzed water can be easily produced and stored in an arbitrary tank 4, such as a bathtub.

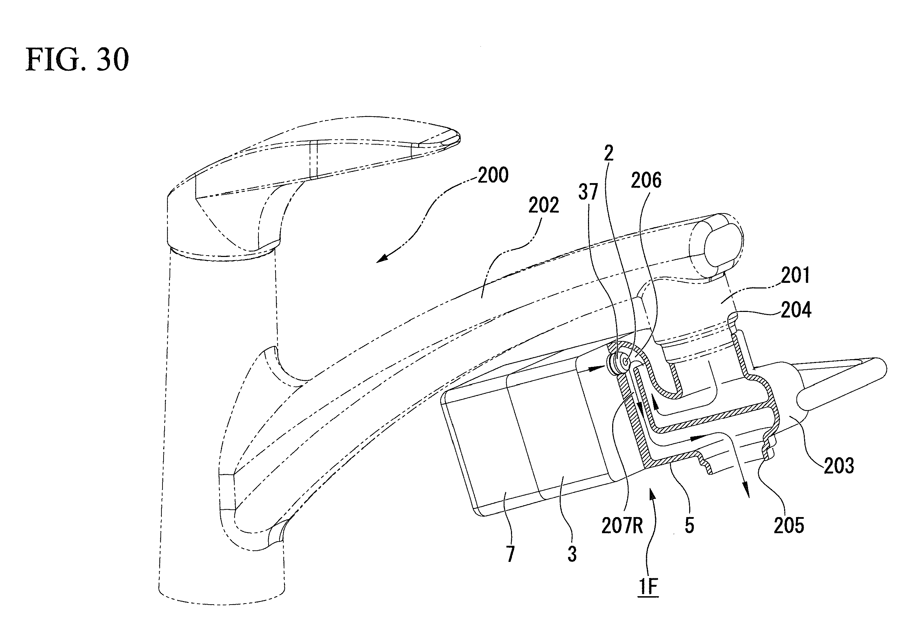

Additionally, as illustrated as a sixth embodiment in FIG. 30, the electrolyzed water production device 1F may be configured so as to be detachably attached to a water discharge port 201 of a water faucet 200.

In this case, it is preferable that the electrolytic bath 3 and the control section 7 are arranged at positions where water intake from the water discharge port 201 is not hindered, such as below a water discharge pipe 202 for tap water. The control section 7 includes a battery, such as a dry battery, and a power switch (not illustrated). The control section 7 may be connected to the external power supply using a wiring line or the like, and electric power may be supplied from the above external power supply to the control section 7 instead of a battery.

The pipe 203 includes a supply port 204 for tap water that is connected to the water discharge port 201, a discharge port 205 that discharges the electrolyzed water, and a fluid channel 207R (mixing section) that makes tap water flow toward a connecting section 206 to which the outlet 2 of the electrolytic bath 3 is connected and that guides the chlorine gas (electrolyzed products) discharged from the outlet 2 and the tap water to the discharge port 205 while joining and mixing the chlorine gas and the tap water. In this case, since the pipe 203 is provided with suction detection member (not illustrated), when suction is detected, a signal is transmitted to the control section 7, and the control section 7 applies a current of a predetermined current value to the electrolytic bath 3 for the unit time, and the electrolyzed products are generated.

The electrolyzed water production device 1F can be used by installing a container (not illustrated) having a predetermined volume below the discharge port 205, and discharging water including the electrolyzed products without interrupting a water flow until a predetermined amount of water (electrolyzed water) is stored in this container. In addition, the unit time of the electrolysis by the electrolytic bath 3 is set according to the amount of the electrolyzed water or the concentration of the electrolyzed water that is stored in the container. By adopting such a configuration, the electrolyzed water can be more simply produced by simply mounting the electrolyzed water production device 1F to a water tap and, for example, turning on a (not illustrated) power switch at an arbitrary time, such as hand-washing.

Additionally, in the electrolytic baths 3 in the first to sixth embodiments, Modification Examples 1 to 9 thereof, and the aforementioned other examples, the capacity of the unit cells C and the distance between the electrode plates 31 and 31 may be changeable. In order to perform this change, the size of the chassis 30 may be changed, or spacers that do not have any electrode plate 31 may be arranged between the spacers 33 and 33 that hold the electrode plates 31 and are adjacent to each other.

By adopting such a configuration, the amount of the dilute hydrochloric acid (raw material solution) that can be held within the electrolytic bath 3 can be changed. Thus, the number of times of production of the electrolyzed water that can be produced using one electrolytic bath 3 can be easily changed.

It is desirable that the electrolyzed water production device 1A and the like in the first to sixth embodiments, Modification Examples 1 to 9 thereof, and the aforementioned other examples are configured so that the production time of the electrolyzed water or the concentration of the electrolyzed water can be appropriately adjusted by selectively changing at least one of the constant current value (the current value of constant current) and the unit time.

In this case, it is preferable that the change of the constant current value or the unit time, that is, setting change of the constant current apparatus 41 of the control section 7 and the timer 42 and reset of the counter 43 is performed at the replacement of the electrolytic bath 3, that is, when the electrodes 45 and 45 of the electrolytic bath 3 and the terminal connecting section 15 and 15 or the like of the mounting section 6 are separated from each other and the electrical connection therebetween is released. Specifically, it is preferable that change or selection of setting is prevented except at the replacement of the electrolytic bath 3, and change or selection of the constant current value or the unit time is allowed at the replacement of the electrolytic bath 3.

By adopting such a configuration, it is possible to prevent that electrolysis of the set number of times is not performed or can prevent that the amount of the electrolyzed products obtained for the unit time fluctuates unexpectedly and the electrolyzed water having a desired chlorine concentration is no longer obtained, which occurs due to a change in the current value or the unit time before finishing energizing the electrolytic bath 3 by the number of times set in advance.

In the above-described first to sixth embodiments and Modification Examples 1 to 9 thereof, the projecting wall 37, the concave setting section 132, or the projecting wall 143 that is provided at the electrolytic bath 3 may be provided with a gas transmission hydrophobic filter that prevents passage of a liquid and transmits only gas therethrough in order to prevent a leak from the electrolytic bath 3. Otherwise, a configuration may be adopted in which the opening of the projecting wall 37 or 143 or the concave setting section 132 is blocked by a seal material or the like and the above seal material is removed during the mounting of the electrolytic bath 3 to the mounting section (mounting section 6 or the like) so that the communication between the above opening and the hole section (the through hole 20, 26, or the like) of the mounting section can be performed.

By adopting such a configuration, a leak does not easily occur in the electrolytic bath 3. Thus, the electrolytic bath 3 can be simply handled by an ordinary user without a consideration about a leak from the electrolytic bath 3.

Additionally, a supply port that supplies the raw material solution to the electrolytic bath 3 may be provided separately from the outlet 2. In this case, in order to seal the supply port with liquid-tightness and prevent the supply port from opening easily after the electric bath 3 is filled with a predetermined amount of the raw material solution from the supply port, a screw or the like may be fastened to the supply port so as to block the supply port, and the supply port may be opened and closed only by an exclusive jig.

Even in a case where such a configuration is adopted, a setting structure of the electrolytic bath 3 into the mounting section 6 is simplified. Additionally, since an ordinary user does not perform opening and closing of the above supply port, it is unnecessary for the ordinary user to take into consideration the opening and closing of the supply port of the electrolytic bath 3, and the handling of the electrolytic bath 3 becomes easy for a user.

Additionally, in the first to sixth embodiments and Modification Examples 1 to 9 thereof, a seal material may be stuck on the tip surface of the projecting wall 37 or 143 of the electrolytic bath 3, and the connecting pipe 28 having a tip portion that can break the seal material may be provided within the connecting section 19 of the mounting section 6. By adopting such a configuration, a leak from the electrolytic bath 3 before the mounting of the electrolytic bath 3 can be prevented, and the connecting pipe 28 can break the seal material during the mounting so as to allow the outlet 2 or 144 and the through hole 20 or 148 to easily communicate with each other.

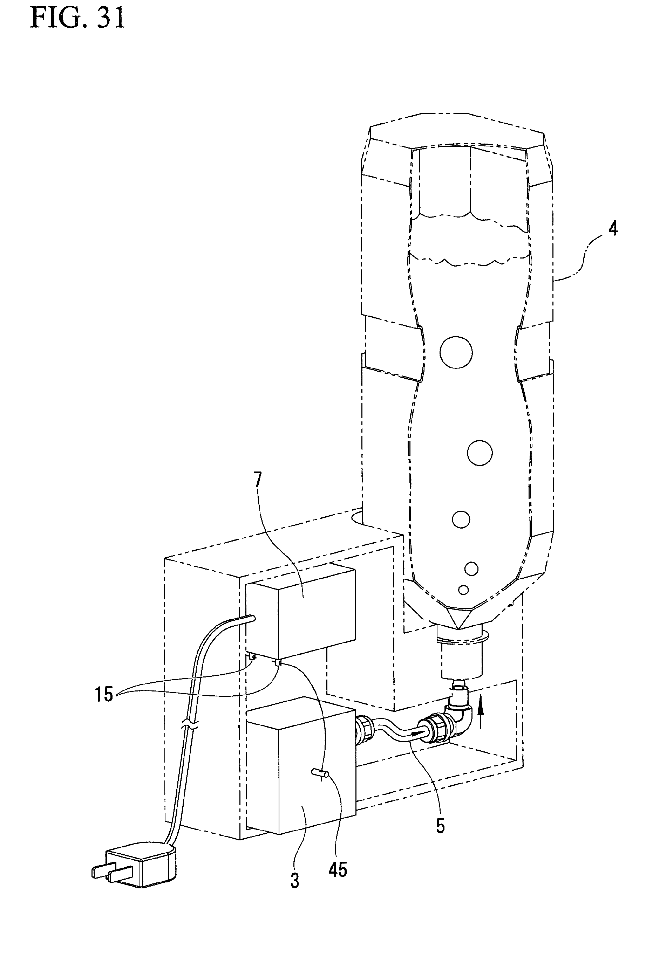

In addition, in the first to sixth embodiments and Modification Examples 1 to 9 thereof, a configuration is adopted in which the mounting section 6 is provided in order to easily mount the electrolytic bath 3 to the electrolyzed water production device. However, for example as illustrated in FIG. 31, the electrolytic bath 3 may have the same configuration as the electrolytic bath 3 of the first embodiment, and may be configured so as not to use the mounting section 6. In this case, during the mounting of the electrolytic bath 3, the electrodes 45 and 45 of the electrolytic bath 3 are connected to the terminal connecting sections 15 and 15 of the control section 7, and the pipe 5 is directly connected to the outlet 2 of the electrolytic bath 3.

Even in such a configuration, except for the effect that the electrolytic bath 3 can be easily mounted on the electrolyzed water production device, the same effects as the electrolyzed water production device 1A are obtained.

In addition, the mounting sections 6a to 6h of the above-described Modification Examples 1 to 8 can also be appropriately combined and used.

For example, the engaging structures of the terminals illustrated in FIGs. 8A and 8B, FIGs. 17A and 17B, FIGs. 18A and 18B, and the like can be applied to the first embodiment, respectively, and can also be appropriately applied to the second to sixth embodiments.

### Examples

Hereinafter, the invention will be specifically described by using examples. In addition, the device illustrated in FIG. 2 was used in Example 1, and similarly, the device illustrated in FIG. 1 was used in Example 2, the device illustrated in FIG. 29 was used in Example 3, and the device illustrated in FIG. 1 was used in Examples 4 to 9.

In Examples 1 to 3, it was verified that, when the constant current was applied to the electrolytic bath 3 under predetermined conditions, whether or not it is possible to estimate actually obtained available chlorine concentrations from theoretically calculated available chlorine concentrations. Additionally, in Examples 4 to 9, it was investigated how many times 3 liters of slightly acidic electrolyzed water could be produced using one electrolytic bath 3 in which the dilute hydrochloric acid was enclosed.

The available chlorine concentrations were measured by a measuring method disclosed in Government Gazette No. 3378 ("Japanese Standards for hydrochlorous acid water", June 10,2002). In addition, the available chlorine concentrations can also be measured by an iodine titration technique (Japan Water Works Association (Ed), "Tapwater Test Method 1993 Edition", PP 218-219, November 15, 1993).

### [Example 1]

### (Electrolyzed water production device)

In Example 1, as the electrolytic bath 3, a bath having a capacity of 52 ml and having nine unit cells C partitioned by ten electrode plates 31 was used. A PET bottle having a capacity of 2 liters was used as the tank 4. 3% of hydrochloric acid was enclosed in the electrolytic bath 3 as the dilute hydrochloric acid (raw material solution). The current efficiency of the electrolytic bath 3 is 50%. The current value was selectively set from 0.8 A, 1.6 A, and 2.4 A.

### (Electrolysis method)

The electrolytic bath 3, which was filled with 3% of the dilute hydrochloric acid and was sealed, was mounted on the mounting section 6. 2 liters of tap water was put into the PET bottle, a backflow check valve was attached to an opening of the bottle, and the bottle was installed in the installation section 4J. In this state, a constant current of a predetermined current value was applied to the electrolytic bath 3, the dilute hydrochloric acid was electrolyzed for 15 seconds, and the backflow check valve was removed. Since Current value [A] = (Desired available chlorine concentration [ppm] x Required amount of production [L]/(35.5/96500 x 1000 x Electrolysis time [sec] x Number of cells x Current efficiency [%]/100) is established, it is necessary to apply a current of 0.805 A to the electrolytic bath 3 in order to obtain 10 ppm of the electrolyzed water, to apply a current of 1.610 A to the electrolytic bath 3 in order to obtain 20 ppm of the electrolyzed water, and to apply a current of 2.416 A to the electrolytic bath 3 in order to obtain 30 ppm of the electrolyzed water.

The theoretical value of the total amount of chlorine is obtained by Total amount of chlorine [mg] = Electrolytic current value [A] x 35.5/96500 x 1000 x Number of cells x Electrolysis time [sec].

**[Table 1]**

| | | | |
|---|---|---|---|
| Electrolytic current value [A] | 0.8 | 1.6 | 2.4 |
| Total amount of chlorine (theoretical value) [mg] | 39.7 | 79.5 | 119.2 |
| Theoretical available chlorine concentration when current efficiency is taken into consideration [ppm] | 9.9 | 19.9 | 29.8 |
| Available chlorine concentration (measured value) [ppm] | 9.6 | 17.9 | 33.6 |

### (Results)

As the result of the electrolysis, as illustrated in Table 1, when the current value is 0.8 A, the theoretical value of the total amount of chlorine is 39.7 mg and the theoretical value of the available chlorine concentration when the current efficiency is taken into consideration is 9.9 ppm. In this case, an actually measured available chlorine concentration was 9.6 ppm.

Additionally, when the current value is 1.6 A, the theoretical value of the total amount of chlorine is 79.5 mg and the theoretical value of the available chlorine concentration when the current efficiency is taken into consideration is 19.9 ppm. In this case, an actually measured available chlorine concentration was 17.9 ppm.

When the current value is 2.4 A, the theoretical value of the total amount of chlorine is 119.2 mg and the theoretical value of the available chlorine concentration when the current efficiency is taken into consideration is 29.8 ppm. In this case, an actually measured available chlorine concentration was 33.6 ppm.

As described above, in any case, the electrolyzed water having the available chlorine concentrations within a range that is substantially assumed from the theoretical values was obtained.

### [Example 2]

### (Electrolyzed water production device)

In the present example, as the electrolytic bath 3, a bath having a capacity of 35 ml and having six unit cells C partitioned by seven electrode plates 31 was used. A tank having a capacity of 3 liters was used as the tank 4. 6% of hydrochloric acid was enclosed in the electrolytic bath 3 as the dilute hydrochloric acid (raw material solution). The current value was 2.5 A, and the unit time (electrolysis voltage application time) was selectively settable from 10 seconds, 20 seconds, and 30 seconds.

### (Electrolysis method)

The electrolytic bath 3, which was filled with 3% of the dilute hydrochloric acid and was sealed, was mounted on the mounting section 6. 3 liters of tap water was put into the tank, and stirring was started by a submerged pump. The current value of 2.5 A was applied for a predetermined unit time so as to electrolyze the dilute hydrochloric acid. Since Electrolysis time [sec] = (Desired available chlorine concentration [ppm] x Required amount of production [L]/(35.5/96500 x 1000 x Current value [A] x Number of cells x Current efficiency [%]/100) is established, it is necessary to apply a current for 10.9 seconds to the electrolytic bath 3 in order to obtain 10 ppm of the electrolyzed water, to apply a current for 21.7 seconds to the electrolytic bath 3 in order to obtain 20 ppm of the electrolyzed water, and to apply a current for 30.6 seconds to the electrolytic bath 3 in order to obtain 30 ppm of the electrolyzed water.

**[Table 2]**

| | | | |
|---|---|---|---|
| Electrolysis voltage application time [sec] | 10 | 20 | 30 |
| Total amount of chlorine (theoretical value) [mg] | 55.2 | 110.4 | 165.6 |
| Theoretical available chlorine concentration when current efficiency is taken into consideration [ppm] | 9.2 | 18.4 | 27.6 |
| Available chlorine concentration (measured value) [ppm] | 13.3 | 22.8 | 31.5 |

### (Results)

As the result of the electrolysis, as illustrated in Table 2, when the unit time is 10 seconds, the theoretical value of the total amount of chlorine is 55.2 mg and the theoretical value of the available chlorine concentration when the current efficiency is taken into consideration is 9.2 ppm. In this case, an actually measured available chlorine concentration was 13.3 ppm.

Additionally, when the unit time is 20 seconds, the theoretical value of the total amount of chlorine is 110.4 mg and the theoretical value of the available chlorine concentration when the current efficiency is taken into consideration is 18.4 ppm. In this case, an actually measured available chlorine concentration was 22.8 ppm.

Additionally, when the unit time is 30 seconds, the theoretical value of the total amount of chlorine is 165.6 mg and the theoretical value of the available chlorine concentration when the current efficiency is taken into consideration is 27.6 ppm. In this case, an actually measured available chlorine concentration was 31.5 ppm.

As described above, in any case, the electrolyzed disinfection water having the available chlorine concentrations within a range that is substantially assumed from the theoretical values could be produced.

### [Example 3]

### (Electrolyzed water production device)

In Example 3, as the electrolytic bath 3, a bath having a capacity of 140 ml and having twenty four unit cells C partitioned by twenty five electrode plates 31 was used. As the tank 4, a water tank having a capacity of 400 liters (inside dimensions of 1000 mm x 850 mm x 500 mm) was used (was used at a water level of 80 percent in the water tank having about 400 L when being full of water). 6% of hydrochloric acid was enclosed in the electrolytic bath 3 as the dilute hydrochloric acid (raw material solution). The current value was 2.5 A, and the unit time (electrolysis voltage application time) was 150 seconds.

### (Electrolysis method)

The electrolytic bath 3, which was filled with 6% of the dilute hydrochloric acid and was sealed, was installed in the electrolyzed water production device IE. Tap water having a depth of 400 mm (about 340 liters) was put into a water tank, and stirring was started by the submerged pump. The current value of 2.5 A was applied for 150 seconds so as to electrolyze the dilute hydrochloric acid. After the electrolysis, the inside of the water tank was stirred for 1 minute using the submerged pump and the stirring was ended. The water tank as the tank 4 was replaced without replacing the electrolytic bath, and the same electrolysis was performed again. This manipulation was repeated and electrolysis was performed a total of three times.

If a current of 2.5 A is applied to the electrolytic bath of twenty four cells for 1 second, the total amount of chlorine (theoretical value) is 2.5 x 35.5/96500 x 1000 x 24 x 1 = 22.08 mg. In order to turn 340 L of water into 5 ppm of electrolyzed water, 5 x 340 = 1700 mg of chlorine is required.

**[Table 3]**

| | First | Second | Third |
|---|---|---|---|
| Electrolysis voltage application time [sec] | 150 | | |
| Total amount of chlorine (theoretical value) [mg] | 3312 | | |
| Theoretical available chlorine concentration when current efficiency is taken into consideration [ppm] | 5.2 | | |
| Available chlorine concentration (measured value) [ppm] | 5.8 | 6.7 | 6,2 |

### (Results)

As the result of the electrolysis, as illustrated in Table 3, when electrolysis was performed for a unit time of 150 seconds and chlorine was dissolved in the tap water of a water tank, the theoretical value of the total amount of chlorine was 3,312 mg and the theoretical value of the available chlorine concentration when the current efficiency is taken into consideration was 4.9 ppm. In this case, an available chlorine concentration that was actually measured in first electrolysis was 5.8 ppm.

Additionally, when the electrolyzed water within the water tank was discarded, tap water was newly stored, and second electrolysis was performed under the same conditions as above, an actually measured available chlorine concentration was 6.7 ppm.

Additionally, when third electrolysis was similarly performed, an actually measured available chlorine concentration was 6.2 ppm.

As described above, in any case, the electrolyzed disinfection water having the available chlorine concentrations within a range that is substantially assumed from the theoretical value could be produced.

### [Examples 4 to 9]

### (Electrolyzed water production device)

In Examples 4 to 9, it was investigated how many times 3 liters of electrolyzed water (slightly acidic electrolyzed water) could be produced using one electrolytic bath 3 in which the dilute hydrochloric acid was enclosed. The conditions of the electrolytic bath 3, the current value [A], the unit time [second], and the hydrochloric acid concentration [%] in Examples 4 to 9 are illustrated in Table 4.

**[Table 4]**

| | Example 4 | Example 5 | Example 6 | Example 7 | Example 8 | Example 9 |
|---|---|---|---|---|---|---|
| Set current value [A] | 2.0 | 2.0 | 3.0 | 3.0 | 3.0 | 3.0 |
| Electrolysis time [sec] | 5 | 5 | 30 | 30 | 30 | 30 |
| Number of cells [cells] | 9 | 9 | 3 | 3 | 3 | 3 |
| Distance between electrodes [mm] | 3 | 3 | 3 | 9 | 9 | 12 |
| Concentration of hydrochloric acid [%] | 3 | 6 | 3 | 3 | 6 | 6 |
| Capacity of electrolytic bath [mL] | 52 | 52 | 17 | 52 | 52 | 70 |

| | | | | | | |
|---|---|---|---|---|---|---|
| Generated amount of electrolyzed water: 3L, Current efficiency: 50% | | | | | | |

### (Electrolysis method)

Tap water was stored in the tank 4 of 3 liters, the tank 4 was installed in a main body of each electrolyzed water production device, and the stirring within the tank 4 was started by the submerged pump. Electrolysis was performed for a predetermined unit time with a predetermined current value. After the electrolysis, the inside of the tank 4 was stirred for 10 seconds using the submerged pump and the stirring was ended. Thereafter, the electrolyzed water (hypochlorous acid water) of the tank 4 was moved to another container, such as a PET bottle, and the tank was made empty. The above procedure was repeated, and when the constant current could no longer be maintained, use of the electrolytic bath 3 was ended.

**[Table 5]**

| Number of Times | Available chlorine concentration [ppm] | | | | | |
|---|---|---|---|---|---|---|
| [-th] | Example 4 | Example 5 | Example 6 | Example 7 | Example 8 | Example 9 |
| 1 | 0 | 0 | 2 | 4 | 6 | 5 |
| 2 | 0 | 0 | 9 | 9 | 10 | 9 |
| 3 | 2 | 2 | 10 | 10 | 12 | 12 |
| 4 | 3 | 3 | 12 | 12 | 13 | 15 |
| 5 | 7 | 6 | 16 | 16 | 15 | 16 |
| 6 | 8 | 5 | 17 | 17 | 15 | 18 |
| 7 | 7 | 7 | 13 | 17 | 16 | 17 |
| 8 | 9 | 6 | 10 | 16 | 18 | 17 |
| 9 | 8 | 8 | 12 | 17 | 18 | 16 |
| 10 | 9 | 7 | 9 | 18 | 17 | 17 |
| 11 | 10 | 9 | | 19 | 16 | 18 |
| 12 | 8 | 8 | | 18 | 19 | 18 |
| 13 | 9 | 9 | | 18 | 17 | 18 |
| 14 | 10 | 10 | | 17 | 18 | 17 |
| 15 | 10 | 10 | | 18 | 19 | 17 |
| 16 | 11 | 11 | | 17 | 18 | 16 |
| 17 | 10 | 10 | | 15 | 18 | 17 |
| 18 | 12 | 12 | | 10 | 17 | 17 |
| 19 | 11 | 11 | | 11 | 16 | 16 |
| 20 | 11 | 11 | | 8 | 17 | 17 |
| 21 | 12 | 12 | | | 17 | 17 |
| 22 | 11 | 11 | | | 18 | 18 |
| 23 | 12 | 12 | | | 17 | 17 |
| 24 | 10 | 12 | | | 17 | 17 |
| 25 | 11 | 11 | | | 18 | 18 |
| 26 | 12 | 12 | | | 17 | 17 |
| 27 | 11 | 11 | | | 13 | 16 |
| 28 | 10 | 11 | | | 14 | 17 |
| 29 | 12 | 12 | | | 17 | 17 |
| 30 | 11 | 11 | | | 17 | 18 |
| 31 | 12 | 12 | | | 18 | 17 |
| 32 | 11 | 11 | | | 17 | 17 |
| 33 | 10 | 12 | | | 16 | 18 |
| 34 | 10 | 13 | | | 17 | 17 |
| 35 | 7 | 12 | | | 16 | 18 |
| 36 | | 12 | | | 13 | 17 |
| 37 | | 13 | | | 14 | 17 |
| 38 | | 12 | | | 15 | 17 |
| 39 | | 13 | | | 10 | 17 |
| 40 | | 12 | | | 10 | 16 |
| 41 | | 12 | | | 10 | 13 |
| 42 | | 13 | | | 9 | 10 |
| 43 | | 12 | | | | 12 |
| 44 | | 13 | | | | 10 |
| 45 | | 13 | | | | 9 |
| 46 | | 12 | | | | 9 |
| 47 | | 12 | | | | 10 |
| 48 | | 13 | | | | 8 |
| 49 | | 12 | | | | |
| 50 | | 13 | | | | |
| 51 | | 12 | | | | |
| 52 | | 11 | | | | |
| 53 | | 12 | | | | |
| 54 | | 11 | | | | |
| 55 | | 10 | | | | |
| 56 | | 11 | | | | |
| 57 | | 11 | | | | |
| 58 | | 10 | | | | |
| 59 | | 9 | | | | |
| 60 | | 10 | | | | |
| 61 | | 10 | | | | |
| 62 | | 11 | | | | |
| 63 | | 10 | | | | |
| 64 | | 8 | | | | |
| 65 | | 9 | | | | |
| 66 | | 9 | | | | |
| 67 | | | | | | |

### (Results)

As illustrated in Table 5, in the respective examples, it was confirmed that, simply by using one electrolytic bath 3 filled with the dilute hydrochloric acid in advance, multiples times of electrolysis are possible and the electrolyzed water having available chlorine concentrations within a constant range can be generated.

Additionally, it could be seen that the chlorine concentration of the electrolyzed water produced can be adjusted depending on the adjustment of the current value and the unit time. Specifically, it could be seen that the hypochlorous acid water having a pH of 4.0 to 7.5 (preferably, a pH of 4.0 to 7.5) and a chlorine concentration of 1 ppm to 60 ppm (preferably, 10 ppm to 30 ppm, and more preferably 10 ppm to 20 ppm) can be generated in the tank 4.

### Industrial Applicability

The present invention can be applied to an electrolyzed water production device, an electrolyzed water production method, and an electrolytic bath that electrolyzes a raw material solution to produce electrolyzed water.

### Reference Signs List

- 1A, 1B, 1C, 1D, 1E, 1F:: ELECTROLYZED WATER PRODUCTION DEVICE
- 2, 130, 144:: OUTLET
- 3:: ELECTROLYTIC BATH
- 4:: TANK (MIXING SECTION, CONTAINER)
- 4J:: INSTALLATION SECTION
- 5:: PIPE (MIXING SECTION)
- 6, 6a, 6b, 6c, 6d, 6e, 6f, 6g, 6h:: MOUNTING SECTION
- 7:: CONTROL SECTION
- 9:: TOP WALL (GUIDE SECTION)
- 10:: BOTTOM WALL (GUIDE SECTION)
- 11:: SIDE WALL (GUIDE SECTION)
- 13, 124:: INSERTION SECTION (GUIDE SECTION)
- 15, 123:: TERMINAL CONNECTING SECTION
- 16A, 16B, 70, 82, 125, 139, 149:: LOCKING PART
- 19,131,145,106:: CONNECTING SECTION
- 20:: THROUGH HOLE (HOLE SECTION)
- 30,30i:: CHASSIS
- 31:: ELECTRODE PLATE
- 33:: SPACER
- 45:: ELECTRODE (TERMINAL)
- 120:: STATIONARY LATCHING SECTION
- 121:: MOVABLE LATCHING SECTION
- 131R:: THROUGH HOLE (HOLE SECTION)
- 137:: FLAT SPRING
- 148:: THROUGH HOLE (HOLE SECTION)
- 182:: POT (MIXING SECTION)
- 207R:: FLUID CHANNEL (MIXING SECTION)
- C:: UNIT CELL
- G:: GUIDE SECTION
- M:: STORAGE SPACE (SPACE)

## Claims

1. An electrolyzed water production device comprising:
an electrolytic bath that electrolyzes a raw material solution to generate electrolyzed products and discharges the electrolyzed products from an outlet;
a mixing section that mixes the electrolyzed products obtained in the electrolytic bath with dilution water to generate electrolyzed water; and
a mounting section that is provided between the electrolytic bath and the mixing section, has a connecting section where a hole section connected to the outlet is formed, and allows the electrolytic bath to be detachably mounted thereto,
wherein the electrolytic bath and the mounting section are configured so that the communication between the outlet and the hole section is allowed or released by moving the electrolytic bath or the connecting section relative to the other, and
wherein the electrolytic bath is configured so as to be mounted on the mounting section in a state where the inside of the electrolytic bath is filled with a predetermined amount of the raw material solution and sealed in advance and an additional raw material solution cannot be injected thereinto.

2. The electrolyzed water production device according to Claim 1,
wherein the mounting section includes a guide section that guides the electrolytic bath toward a connecting position where the outlet and the hole section communicate with each other, and
wherein at least any one of the electrolytic bath and the mounting section is provided with a locking part that fixes the electrolytic bath to the mounting section when the outlet and the hole section communicate with each other.

3. The electrolyzed water production device according to Claim 2,
wherein the electrolytic bath is a bipolar electrolytic bath in which a plurality of electrode plates are provided inside a chassis of the electrolytic bath, one-side plate surfaces of the plurality of electrode plates are arrayed at predetermined intervals in one direction, and a pair of electrode plates located at both ends in the plurality of electrode plates are respectively provided with terminals that project outward from the chassis, and
wherein the guide section is an insertion section including a terminal connecting section that allows each of the terminals to be inserted therethrough and comes into contact with the terminal to energize the electrolytic bath.

4. The electrolyzed water production device according to any one of Claims 1 to 3,
wherein the mounting section has a stationary latching section that rotatably latches the electrolytic bath, and
wherein the electrolytic bath has a movable latching section that is latched to the stationary latching section and rotates the electrolytic bath with the stationary latching section as a fulcrum so as to mount the electrolytic bath to the mounting section.

5. The electrolyzed water production device according to any one of Claims 1 to 3,
wherein the mounting section includes a flat spring to which the connecting section is fixed, and
wherein the connecting section is configured so that the flat spring is brought close to or separated from the electrolytic bath mounted on the mounting section so as to allow or release the communication between the hole section of the connecting section and the outlet.

6. An electrolyzed water production device comprising:
an electrolytic bath that electrolyzes a raw material solution to generate electrolyzed products and discharges the electrolyzed products from an outlet;
a control section that controls the operation of the electrolytic bath; and
a mixing section that mixes the electrolyzed products obtained in the electrolytic bath with dilution water to generate electrolyzed water,
wherein the electrolytic bath is configured so as to be connectable to the mixing section, in a state where the inside thereof is filled with a predetermined amount of the raw material solution in advance and an additional raw material solution cannot be injected thereinto, and
wherein the control section is configured so as to supply a current of a constant current value to the electrolytic bath for a predetermined unit time in order to electrolyze a portion of the predetermined amount of raw material solution with which the electrolytic bath is filled in advance, and so as to electrolyze the predetermined amount of raw material solution multiple times

7. The electrolyzed water production device according to Claim 6, further comprising:
a mounting section that has a connecting section in which a hole section allowed to communicate with the outlet is formed and that has the electrolytic bath detachably mounted thereto,
wherein the electrolytic bath and the mounting section are configured so that the communication between the outlet and the hole section is allowed or released by moving the electrolytic bath or the connecting section relative to the other.

8. The electrolyzed water production device according to Claim 7,
wherein the mounting section includes a guide section that guides the electrolytic bath toward a connecting position where the outlet and the hole section communicate with each other, and
wherein at least any one of the electrolytic bath and the mounting section is provided with a locking part that fixes the electrolytic bath to the mounting section when the outlet and the hole section communicate with each other.

9. The electrolyzed water production device according to any one of Claims 6 to 8,
wherein the control section is allowed to set at least any one of the constant current value and the unit time, and
wherein the control section is capable of setting at least any one of the constant current value and the unit time to set the number of times by which electrolysis is performed on the predetermined amount of electrolyzed water.

10. The electrolyzed water production device according to any one of Claims 6 to 9,
wherein the control section is capable of changing the constant current value or the unit time when electrical connection to the electrolytic bath is released.

11. The electrolyzed water production device according to any one of Claims 6 to 10,
wherein the mixing section is formed as a container that stores the dilution water, and is provided with an installation section that detachably installs the container.

12. An electrolytic bath that electrolyzes a raw material solution inside the electrolytic bath through energization to generate electrolyzed products, the electrolytic bath comprising:
a chassis that has an outlet through which the electrolyzed products are discharged;
a plurality of electrode plates that are provided inside the chassis;
spacers that allow the plurality of electrode plates to be arrayed at predetermined intervals with one-side plate surfaces of the plurality of electrode plates being directed to one direction; and
a unit cell which is formed between the electrode plates that are adjacent to each other and in which electrolysis is performed on the raw material solution,
wherein the chassis is capable of being sealed with liquid-tightness in a state where the chassis is filled with a predetermined amount of the raw material solution, and
wherein the chassis is configured so that the electrolyzed products are discharged from the outlet in a state where the additional raw material solution cannot be injected thereinto when energization is allowed.

13. The electrolytic bath according to Claim 12,
wherein a space that stores the raw material solution is formed outside the unit cells.

14. The electrolytic bath according to Claim 13,
wherein the space is provided on at least any one of a lateral side and an upper side of the unit cells.

15. The electrolytic bath according to any one of Claims 12 to 14,
wherein the plurality of electrode plates and a plurality of the spacers are alternately arranged.

16. An electrolyzed water production method comprising:
a production process which includes an electrolysis process of supplying a current of a constant current value to an electrolytic bath for a preset unit time to electrolyze a portion of a predetermined amount of a raw material solution, the electrolytic bath being filled with the predetermined amount of raw material solution, and a mixing process of mixing the electrolyzed products generated in the electrolysis process with dilution water to produce electrolyzed water the production process which performs the electrolysis process and the mixing process multiple times without adding a raw material solution to the electrolytic bath to repeatedly produce the electrolyzed water; and
a replacement process of replacing the electrolytic bath after the electrolysis process is performed multiple times with another electrolytic bath that is filled with a predetermined amount of the raw material solution.

17. The electrolyzed water production method according to Claim 16, further comprising:
a notification process of notifying replacement timing of the electrolytic bath after the production process.

18. The electrolyzed water production method according to Claim 17,
wherein, in the notification process, the replacement timing of the electrolytic bath is notified on the basis of a voltage value or a current value of a current that flows to the electrolytic bath.

19. The electrolyzed water production method according to Claim 17,
wherein, in the notification process, the replacement timing of the electrolytic bath is notified on the basis of the number of the electrolysis processes performed or the accumulated time of the unit time.

20. The electrolyzed water production method according to Claim 19,
wherein at least one of the constant current value and the unit time in the electrolysis process is set, and the number of electrolysis processes or the accumulated time of unit time up to the replacement timing of the electrolytic bath is set according to the set constant current value or unit time.

21. The electrolyzed water production method according to Claim 19 or 20, further comprising:
a seal process of filling the electrolytic bath with a predetermined amount and a predetermined concentration of the raw material solution and sealing the electrolytic bath,
wherein the number of electrolysis processes or the accumulated time of unit time up to the replacement timing of the electrolytic bath is set according to at least one of the amount and the concentration of the raw material solution with which the electrolytic bath is filled.

22. The electrolyzed water production method according to any one of Claims 16 to 21,
wherein the unit time in the electrolysis process is changed according to the number of the plurality of electrode plates provided inside the electrolytic bath.

23. The electrolyzed water production method according to any one of Claims 16 to 22,
wherein a unit time in a first electrolysis process after the electrolytic bath is replaced is set so as to be longer than unit times in second or subsequent electrolysis processes.

24. The electrolyzed water production method according to any one of Claims 16 to 23, further comprising:
a seal process of filling the electrolytic bath with a predetermined amount of the raw material solution and sealing the electrolytic bath, and
wherein, in the replacement process, an electrolytic bath mounted on the electrolyzed water production device is replaced with the electrolytic bath sealed in the seal process.

25. The electrolyzed water production method according to any one of Claims 16 to 24,
wherein the raw material solution is dilute hydrochloric acid having a concentration of 0.75 mass% to 21 mass%.
